# EUROPÄISCHE PATENTSCHRIFT

(11) **EP 2 776 153 B1**
(45) Veröffentlichungstag und Bekanntmachung des Hinweises auf die Patenterteilung: **19.08.2015**
(21) Anmeldenummer: 12765991.0
(22) Anmeldetag: 06.09.2012
(51) Int. Cl.: B01J 20/20, B01J 20/32, B01J 20/30, B01D 53/02, C01B 31/08

(54) **STICKSTOFFMODIFIZIERTE AKTIVKOHLE UND VERFAHREN ZUR HERSTELLUNG EINER SOLCHEN AKTIVKOHLE**
NITROGEN-MODIFIED ACTIVATED CARBON AND METHOD FOR PRODUCING SUCH AN ACTIVATED CARBON
CHARBON ACTIF MODIFIÉ PAR DE L'AZOTE ET PROCÉDÉ POUR LA PRÉPARATION D'UN TEL CHARBON ACTIF

(30) Priorität: 07.11.2011 DE 102011117715; 08.11.2011 DE 102011117822; 16.04.2012 DE 102012007392
(43) Veröffentlichungstag der Anmeldung: 17.09.2014
(73) Patentinhaber: Blücher GmbH, 40699 Erkrath (DE)
(72) Erfinder: BÖHRINGEN, Bertram, 42115 Wuppertal (DE); SCHRAGE, Christian, 01097 Dresden (DE); FICHTNER, Sven, 40699 Erkrath (DE); GIEBELHAUSEN, Jann-Michael, 14712 Rathenow (DE)
(74) Vertreter: Von Rohr Patentanwälte Partnerschaft mbB
(86) Internationale Anmeldenummer: PCT/EP2012/003743
(87) Internationale Veröffentlichungsnummer: WO 2013/068060

(56) Entgegenhaltungen:
- RIOS R R V A ET AL: "Tailoring Activated Carbon by Surface Chemical Modification with O, S, and N containing Molecules", MATERIALS RESEARCH, DOT EDITORAÇÃO ELETRÔNICA, SAO CARLOS, BR, Bd. 6, Nr. 2, 1. April 2003 (2003-04-01), Seiten 129-135, XP002593329, ISSN: 1516-1439, DOI: 10.1590/S1516-14392003000200004
- Y. F. JIA ET AL: "Adsorption of Metal Ions on Nitrogen Surface Functional Groups in Activated Carbons", LANGMUIR, Bd. 18, Nr. 2, 18. Dezember 2001 (2001-12-18), Seiten 470-478, XP055046845, ISSN: 0743-7463, DOI: 10.1021/la011161z
- DONG-IL JANG ET AL: "Influence of Amine Grafting on Carbon Dioxide Adsorption Behaviors of Activated Carbons", BULLETIN OF THE KOREAN CHEMICAL SOCIETY, Bd. 32, Nr. 9, 26. August 2011 (2011-08-26), Seiten 3377-3381, XP055046849, ISSN: 0253-2964, DOI: 10.5012/bkcs.2011.32.9.3377
- JEAN-PHILIPPE TESSONNIER ET AL: "Nitrogen-functionalized Carbon Nanotubes as a Basic Catalyst for Biomass Conversion Reactions", 21ST NORTH AMERICAN CATALYSIS SOCIETY MEETING, SAN FRANCISCO, CALIFORNIA, 2009, 11. Juni 2009 (2009-06-11), Seiten 1-1, XP055046850,
- BIMER J ET AL: "Modified active carbons from precursors enriched with nitrogen functions: sulfur removal capabilities", FUEL, IPC SCIENCE AND TECHNOLOGY PRESS, GUILDFORD, GB, Bd. 77, Nr. 6, 1. Mai 1998 (1998-05-01), Seiten 519-525, XP004285843, ISSN: 0016-2361, DOI: 10.1016/S0016-2361(97)00250-0
- RAYMUNDO-PINERO E ET AL: "The role of different nitrogen functional groups on the removal of SO2 from flue gases by N-doped activated carbon powders and fibres", CARBON, ELSEVIER, OXFORD, GB, Bd. 41, Nr. 10, 1. Januar 2003 (2003-01-01), Seiten 1925-1932, XP004437561, ISSN: 0008-6223, DOI: 10.1016/S0008-6223(03)00180-5
- SEREDYCH M ET AL: "Surface functional groups of carbons and the effects of their chemical character, density and accessibility to ions on electrochemical performance", CARBON, ELSEVIER, OXFORD, GB, Bd. 46, Nr. 11, 1. September 2008 (2008-09-01), Seiten 1475-1488, XP023906145, ISSN: 0008-6223, DOI: 10.1016/J.CARBON.2008.06.027 [gefunden am 2008-06-20]
- SHAM M L ET AL: "Surface functionalities of multi-wall carbon nanotubes after UV/Ozone and TETA treatments", CARBON, ELSEVIER, OXFORD, GB, Bd. 44, Nr. 4, 1. April 2006 (2006-04-01), Seiten 768-777, XP025010939, ISSN: 0008-6223, DOI: 10.1016/J.CARBON.2005.09.013 [gefunden am 2006-04-01]
- M.CARMEN ROMÁN-MARTINEZ ET AL: "Rhodium-diphosphine complex bound to activated carbon", JOURNAL OF MOLECULAR CATALYSIS A: CHEMICAL, Bd. 213, Nr. 2, 20. Januar 2004 (2004-01-20), Seiten 177-182, XP055046637, ISSN: 1381-1169, DOI: 10.1016/j.molcata.2003.12.015

## Beschreibung

Die vorliegende Erfindung betrifft das technische Gebiet adsorptiver Materialien auf Basis von Aktivkohle, welche katalytische und/oder reaktive Eigenschaften auf Basis einer Stickstoffmodifizierung, vorzugsweise mit Stickstoff als katalytisch aktivem Heteroatom, aufweisen.

Insbesondere betrifft die vorliegende Erfindung ein Verfahren zur Herstellung einer stickstoffmodifizierten Aktivkohle mit katalytischen und/oder reaktiven Eigenschaften, vorzugsweise einer Aktivkohle mit Stickstoff als katalytisch aktivem Heteroatom, sowie die auf diese Weise hergestellte Aktivkohle und deren Verwendungen.

Des Weiteren betrifft die vorliegende Erfindung Schutzbekleidung, welche unter Verwendung der Aktivkohle nach der Erfindung hergestellt sind bzw. die Aktivkohle nach der Erfindung aufweisen.

Zudem betrifft die vorliegende Erfindung auch Filter bzw. Filtermaterialien, welche unter Verwendung der Aktivkohle nach der Erfindung hergestellt sind bzw. welche die erfindungsgemäße Aktivkohle aufweisen.

Aktivkohle ist aufgrund ihrer recht unspezifischen adsorptiven Eigenschaften das am meisten angewendete Adsorbens. Gesetzliche Auflagen, aber auch das steigende Bewusstsein der Verantwortung für die Umwelt, führen zu einem steigenden Bedarf an Aktivkohle.

Aktivkohle wird im Allgemeinen durch Carbonisierung (synonym auch als Schwelung, Pyrolyse, Abbrand etc. bezeichnet) und anschließende Aktivierung kohlenstoffhaltiger Ausgangsverbindungen erhalten. Die Beschaffenheit der erzeugten Aktivkohle - fein- oder grobporig, fest oder brüchig, feinteilig oder kornförmig etc. - hängt dabei insbesondere auch vom Ausgangsmaterial ab - neben den Verfahrensbedingungen für die Carbonisierung und Aktivierung. Übliche Ausgangsmaterialien sind insbesondere Kokosnussschalen, Holzkohle und Holz (z. B. Holzabfälle), Torf, Steinkohle, Peche, aber auch besondere Kunststoffe bzw. organische Polymere, die unter anderem bei der Herstellung von Aktivkohlegeweben eine gewisse Rolle spielen. Für weitergehende Einzelheiten zur Aktivkohleherstellung kann insbesondere verwiesen werden auf H. v. Kienle und E. Bäder, "Aktivkohle und ihre industrielle Anwendung", Enke Verlag Stuttgart, 1980.

Aktivkohle wird in verschiedenen Formen verwendet: Pulverkohle, Splitterkohle bzw. Kornkohle, Formkohle und seit Ende der 1970er Jahre auch kugelförmige Aktivkohle ("Kugelkohle"). Kugelförmige Aktivkohle hat gegenüber anderen Formen von Aktivkohle, wie Pulver-, Splitter-, Korn- und Formkohle und dergleichen, eine Reihe von Vorteilen, die sie für bestimmte Applikationen wertvoll oder sogar unverzichtbar macht: Sie ist rieselfähig, abriebfest bzw. staubfrei und hart. Kugelkohle ist wegen ihrer speziellen Form, aber auch wegen der hohen Abriebfestigkeit beispielsweise für besondere Einsatzgebiete sehr gefragt.

Kugelkohle wird heute noch meist durch mehrstufige und sehr aufwendige Verfahren hergestellt. Das bekannteste Verfahren besteht in der Herstellung von Kügelchen aus Steinkohlenteerpech und geeigneten asphaltartigen Rückständen der Erdölchemie, welche oxidiert - damit sie unschmelzbar werden - und nachfolgend geschwelt und aktiviert werden. Beispielsweise kann die Kugelkohle auch in einem mehrstufigen Verfahren ausgehend von Bitumen hergestellt werden. Diese mehrstufigen Verfahren sind sehr kostenintensiv, und der damit verbundene hohe Preis dieser Kugelkohle verhindert viele Anwendungen, bei denen die Kugelkohle aufgrund ihrer Eigenschaften eigentlich bevorzugt werden müsste.

In der WO 98/07655 A1 wird ein Verfahren zur Herstellung von Aktivkohlekügelchen beschrieben, bei dem zunächst eine Mischung, die einen aus der Diisocyanatherstellung stammenden Destillationsrückstand, einen kohlenstoffhaltigen Verarbeitungshilfsstoff und gegebenenfalls einen oder mehrere weitere Zusatzstoffe umfasst, zu rieselförmigen Kügelchen verarbeitet wird und anschließend die auf diese Weise erhaltenen Kügelchen carbonisiert und dann aktiviert werden.

Aus dem Stand der Technik bekannt ist ferner die Herstellung von Kugelkohle durch Schwelung und anschließende Aktivierung von neuen oder gebrauchten Ionenaustauschern, die Sulfonsäuregruppen enthalten, bzw. durch Schwelung von Ionenaustauschervorstufen in Gegenwart von Schwefelsäure und anschließende Aktivierung, wobei die Sulfonsäuregruppen bzw. die Schwefelsäure die Funktion eines Vernetzers haben. Solche Verfahren sind beispielsweise in der DE 43 28 219 A1 und in der DE 43 04 026 A1 sowie in der DE 196 00 237 A1 einschließlich der deutschen Zusatzanmeldung DE 196 25 069 A1 beschrieben.

Weiterhin sind aus dem Stand der Technik Verfahren bekannt, bei denen die Herstellung von Aktivkohle, insbesondere Kugelkohle, durch Schwelung und anschließende Aktivierung sulfonierter divinylbenzolvernetzter Polystyrole (d. h. sulfonierte Styrol/Divinylbenzol-Copolymere) erfolgt (vgl. z. B. DE 10 2007 050 971 A1).

Bei speziellen Anwendungen ist aber nicht nur die Geometrie bzw. die äußere Gestalt der Aktivkohle von entscheidender Bedeutung, sondern auch deren Porosität, insbesondere das Gesamtporenvolumen und die Adsorptionskapazität einerseits und die Verteilung der Poren, d. h. der Anteil an Mikro-, Meso- und Makroporen in Bezug auf das Gesamtporenvolumen, andererseits; insbesondere kann die Porosität durch die Auswahl der Ausgangsmaterialien sowie die Verfahrensbedingungen gezielt gesteuert werden. Im Rahmen der vorliegenden Erfindung bezeichnet der Begriff der Mikroporen solche Poren mit Porendurchmessern von weniger als 2 nm, wohingegen der Begriff der Mesoporen solche Poren mit Porendurchmessern im Bereich von 2 nm (d. h. 2 nm einschließlich) bis 50 nm einschließlich bezeichnet und der Begriff der Makroporen solche Poren mit Porendurchmessern von mehr als 50 nm (d. h. > 50 nm) bezeichnet.

Aufgrund ihrer guten adsorptiven Eigenschaften kommt Aktivkohle für eine Vielzahl von Anwendungen zum Einsatz: So wird Aktivkohle beispielsweise in der Medizin oder Pharmazie eingesetzt, aber auch in der Lebensmittelindustrie. Auch für Filteranwendungen findet Aktivkohle weitreichende Anwendungen (z. B. Filtration von Gasen und Flüssigkeiten, Entfernung von unerwünschten oder schädlichen bzw. toxischen Gasen etc.).

Insbesondere kann Aktivkohle in Adsorptionsfiltermaterialien, insbesondere auch speziell in Schutzmaterialien gegenüber Giften, wie chemischbiologischen Kampfstoffen, wie beispielsweise ABC-Schutzbekleidung, zum Einsatz kommen. Zu diesem Zweck sind insbesondere luft- und wasserdampfdurchlässige Schutzanzüge gegen chemische Kampfstoffe bekannt; derartige luft- und wasserdampfdurchlässige Schutzanzüge besitzen oftmals eine Adsorptionsfilterschicht mit Aktivkohle, welche die chemischen Gifte adsorbieren.

Zur Steigerung der Adsorptionsleistung wird Aktivkohle oft mit einer katalytisch aktiven oder reaktiven Komponente ausgerüstet, indem die Aktivkohle beispielsweise mit einem biozid bzw. biostatisch wirkenden Katalysator, insbesondere auf Basis von Metallen oder Metallverbindungen, imprägniert wird. Eine derartige Aktivkohle kann insbesondere in Schutzmaterialien zum Einsatz kommen, wie sie beispielsweise beschrieben sind in der DE 195 19 869 A1, welche ein mehrlagiges, textiles, gasdurchlässiges Filtermaterial mit einer Adsorptionsschicht auf Basis von Aktivkohle, insbesondere in Form von karbonisierten Fasern, enthält, die mit einem Katalysator aus der Gruppe von Kupfer, Cadmium, Platin, Palladium, Quecksilber und Zink in Mengen von 0,05 bis 12 Gew.-%, bezogen auf das Aktivkohlematerial, imprägniert ist.

Eine spezielle, in diesem Zusammenhang zum Einsatz kommende Imprägnierung ist beispielsweise eine so genannte ABEK-Imprägnierung, welche gegenüber spezifischen toxischen Substanzen eine katalytische bzw. abbauende Wirkung aufweist. In diesem Zusammenhang bezieht sich Typ A auf bestimmte organische Gase und Dämpfe mit einem Siedepunkt > 65°C, beispielsweise Cyclohexan. Typ B bezieht sich auf bestimmte anorganische Gase und Dämpfe, beispielsweise Cyanwasserstoff. Typ E bezieht sich auf eine abbauende bzw. schützende Wirkung gegenüber Schwefeldioxid und anderen sauren Gasen und Dämpfen. Typ K schließlich bezieht sich auf eine Schutzfunktion gegenüber Ammoniak und organischen Ammoniakderivaten. Für weiterführende Informationen kann auf die diesbezügliche Europäische Norm EN 14387 (Januar 2004) verwiesen werden.

Nachteilig bei herkömmlichen Imprägnierungen von Aktivkohle mit Metallen bzw. Metallsalzen ist insbesondere die Tatsache, dass durch die Imprägnierung ein Teil der Adsorptionskapazität der Aktivkohle, welche für die Adsorption und somit für die Unschädlichmachung von chemischen Schadstoffen benötigt wird, verlorengeht. Durch die aus dem Stand der Technik bekannten Imprägnierprozesse der Aktivkohle mit Metallen bzw. Metallsalzen wird somit die Leistungsfähigkeit der Aktivkohle nachteilig beeinträchtigt. Des Weiteren wird durch eine herkömmliche Imprägnierung nicht immer die gewünschte Wirksamkeit erreicht. Auch das Problem des Durchschlagens von Gift- bzw. Kampfstoffen bei hohen Konzentrationen wird durch dieses Prinzip nicht immer gelöst; andererseits wird bei sehr geringen Konzentrationen an zu entfernenden Schadstoffen oder störenden Gasen (z. B. bei der Luftaufbereitung für Reinraumbedingungen) oft nicht die gewünschte Effizienz erreicht, da eine Adsorption erst bei höheren Konzentrationen einsetzt. Schließlich benötigt der herkömmliche Imprägnierprozess mit Metallen bzw. Metallsalzen relativ große Mengen des Imprägniermaterials, da ein großer Teil des als Feststoff vorliegenden Imprägniermaterials bei der Adsorption nicht zur Verfügung steht, insbesondere dann nicht, wenn größere Schichtdicken des Imprägniermaterials im Porensystem der Aktivkohle, insbesondere in Form von Kristalliten, vorliegen.

Ein weiterer Nachteil der Ausrüstung von Aktivkohle mit Metallen bzw. Metallsalzen besteht darin, dass herkömmliche Aktivkohle an ihrer Oberfläche unpolar bzw. hydrophob ausgebildet ist und insbesondere keine signifikante Affinität gegenüber den eingesetzten Imprägniermitteln besitzt, welche zur reaktiven bzw. katalytischen Ausrüstung der Aktivkohle eingesetzt werden. Infolgedessen muss ein großer Überschuss an Imprägniermitteln eingesetzt werden, um überhaupt eine gewisse Beladung der Aktivkohle zu gewährleisten. Die Imprägniermittel haften im Allgemeinen nur über rein physikalische Wechselwirkungen und können bei Kontakt mit Flüssigkeiten unerwünschtermaßen zumindest zu einem überwiegenden Teil wieder entfernt werden.

Darüber hinaus ist es im Stand der Technik insbesondere im Hinblick auf die Adsorption saurer Gase, wie Schwefeldioxid und dergleichen, vorgesehen, eine nachträgliche Imprägnierung der Aktivkohle mit insbesondere basischen stickstoffhaltigen Imprägnierreagenzien, insbesondere Aminen, durchzuführen. Hierbei treten gleichermaßen die zuvor geschilderten Nachteile auf, insbesondere was den Einsatz eines großen Überschusses an Imprägniermittel, die schlechte Beständigkeit der Imprägnierung und das Verstopfen des Porensystems der Aktivkohle anbelangt.

Darüber hinaus wurde im Stand der Technik auch versucht, eine Ausrüstung bzw. Imprägnierung auf Basis von stickstoffhaltigen Imprägnierreagenzien insofern zu realisieren, als das Imprägnierreagenz im Rahmen des Herstellungsprozesses der Aktivkohle, insbesondere bei der Aktivierung, dem zu behandelnden Substrat zugegeben wird. Diesbezüglich wird im Stand der Technik Ammoniak bzw. NH₃ als entsprechendes Imprägnierreagenz eingesetzt, insbesondere in Form von Ammoniakwasser. Die zugrundeliegende Vorgehensweise, wonach nämlich das Imprägnierreagenz im Rahmen des Aktivierungsprozesses und somit während der Herstellung der Aktivkohle als solche zugegeben wird, ist jedoch insbesondere dahingehend nachteilig, dass mit einem großen Überschuss an Imprägnierreagenz gearbeitet werden muss, da ein überwiegender Teil des Imprägnierreagenes nicht zur eigentlichen Imprägnierung verwendet wird, sondern vielmehr Bestandteil des Aktivierungsprozesses ist. Weiterhin ist bei dieser Vorgehensweise nachteilig, dass der eigentliche Imprägnierprozess nur schlecht kontrolliert werden kann, da die Zugabe des Imprägnierreagenzes im Rahmen der eigentlichen Aktivierung stattfindet, bei welcher nämlich gleichzeitig auch ein Abbrand der Aktivkohle erfolgt, was einer homogenen Beladung der Aktivkohle mit hohen Mengen des Imprägnierungsreagenz abträglich ist. In diesem Zusammenhang ist auch anzuführen, dass die Gegenwart des Imprägnierungsreagenzes gleichermaßen auch eine kontrollierte und exakt reproduzierbare Durchführung des Aktivierungsprozesses erschwert bzw. verhindert, insbesondere was die Ausbildung einer definierten Porenstruktur und dergleichen anbelangt. Weiterhin ist es im Hinblick auf die zuvor geschilderte Vorgehensweise mit der Zugabe des Imprägnierreagenzes bzw. -mittels während des Aktivierungsprozesses nicht möglich, eine chemische Anbindung bzw. Integration der Stickstoffkomponente an das Aktivkohlegerüst zu erreichen, insbesondere da das zugrundeliegende Aktivkohlesubstrat hinsichtlich seiner Oberflächenbeschaffenheit unpolar bzw. hydrophob ist, was einem Inkontaktbringen bzw. einer Wechselwirkung mit dem Imprägnierreagenz abträglich ist. Auf Basis dieser Vorgehensweise ist es somit im Ergebnis nicht möglich, eine effektive Imprägnierung mit einer katalytisch aktiven Komponente zu ermöglichen, da sowohl die Ausrüstung mit der zugrundeliegenden reaktiven Komponente weder dauerhaft noch in großen Mengen bzw. homogen erfolgt und darüber hinaus gleichzeitig auch der Aktivierungsprozess als solcher nachteilig beeinflusst ist.

Die wissenschaftliche Publikation gemäß Rios et al., "Tailoring Activated Carbon by Surface Chemical Modification with O, S, and N Containing Molecules", Materials Research, Vol. 6, No. 2, S. 129 bis 135, 2003, betrifft ein Verfahren zur chemischen Oberflächenmodifikation von Aktivkohle mit Molekülen bzw. Verbindungen, welche Sauerstoff, Schwefel und Stickstoff enthalten.

Weiterhin betrifft die wissenschaftliche Publikation gemäß Jia et al., "Adsorption of Metal Ions on Nitrogen Surface Functional Groups in Activated Carbons", Langmuir, 2002, 18, S. 470 bis 478, Untersuchungen zur Adsorption von Metallionen an stickstoffhaltigen funktionellen Oberflächengruppen von Aktivkohle, wobei diesbezüglich eine Aktivkohle auf Basis von Kokosnussschalen zunächst oxidiert und anschließend mit stickstoffhaltigen Gruppen ausgerüstet werden soll.

Zudem betrifft die wissenschaftliche Publikation gemäß Jang et al., "Influence of Amine Grafting on Carbon Dioxide Adsorption Behaviors of Activated Carbons", Bull. Korean Chem. Soc., 2011, Vol. 32, No. 9, S. 3377 ff., Untersuchungen zum Einfluss einer Ausrüstung bzw. Pfropfung von Aktivkohle mit speziellen Aminen auf das Adsorptionsverhalten in Bezug auf Kohlendioxid.

Darüber hinaus betrifft das Meeting-Abstract gemäß Tessonnier et al., "Nitrogen-functionalized carbon nanotubes as a basic catalyst for biomass conversion reactions", 21st North American Catalysis Society Meeting, 11. Juni 2009, stickstofffunktionalisierte Kohlenstoffnanoröhren ("carbon nanotubes") als Basiskatalysatoren für Umwandlungsreaktionen von Biomasse.

Weiterhin betrifft die wissenschaftliche Publikation gemäß Bimer et al., "Modified active carbons from precursors enriched with nitrogen functions: sulfur removal capabilities", Fuel, Vol. 77, No. 6, 1998, S. 519 bis 525, aus Präkursoren erhaltene modifizierte Aktivkohle, welche stickstoffhaltige funktionelle Gruppen aufweist, wobei derart vorgegangen wird, dass Aktivkohle ausgehend von stickstoffangereicherter bzw. -haltiger minderwertiger Kohle durch Carbonisierung und Dampfaktivierung gewonnen wird.

Die wissenschaftliche Publikation gemäß Raymundo-Pinero et al., "The role of different nitrogen functional groups on the removal of SO2 from flue gases by N-doped activated carbon powders and fibres", Carbon 41, 2003, S. 1925 bis 1932, betrifft die Herstellung von mit Stickstoffatomen ausgerüsteter Aktivkohle bzw. von mit Stickstoffatomen ausgerüsteten Aktivkohlefasern.

Weiterhin betrifft die wissenschaftliche Publikation gemäß Seredych et al., "Surface functional groups of carbons and the effects of their chemical character, density and accessibility to ions on electrochemical performance", Carbon 46, 2008, S. 1475 bis 1488, die Ausrüstung von aus Holz stammender Aktivkohle mit Stickstoff unter Einsatz von Melamin und Harnstoff.

Weiterhin betrifft die wissenschaftliche Publikation gemäß Sham et al., "Surface functionalities of multi-wall carbon nanotubes after UV/Ozone and TETA treatments", Carbon 44, 2006, S. 768 bis 777, die Oberflächenfunktionalisierung von mehrwandigen Kohlenstoffnanoröhren ("multi-wall carbon nanotubes (CNT)"). Hierzu wird im Rahmen einer Voroxidierung auf den Einsatz von Ozon und Bestrahlung mit ultraviolettem Licht abgestellt.

Die wissenschaftliche Publikation gemäß Roman-Martinez et al., "Rhodiumdiphosphine complex bound to activated carbon", Journal of Molecular Catalysis A: Chemical, Bd. 213, Nr. 2, 2004, S. 177 bis 182, betrifft die Ausrüstung einer Aktivkohle mit einem speziellen Katalysatorkomplex.

Die AT 006 372 U2 betrifft ein Verfahren zur Herstellung eines Redoxkatalysators in Form eines Adsorptionsmittels auf Basis von Kohlenstoff, wobei eine handelsübliche Aktivkohle oder Aktivkoks mit einer Lösung oder Schmelze von Harnstoff getränkt werden soll und wobei das so erhaltene Produkt in einer Atmosphäre, die weniger als 1 % Sauerstoff enthält, auf eine Temperatur von mindestens 850 °C erhitzt werden und anschließend wieder unter Ausschluss von Sauerstoff abgekühlt werden soll.

Was darüber hinaus die DE 24 51 019 A anbelangt, so betrifft diese ein Verfahren zur Herstellung von Aktivkohlekugeln, wobei zwingend auf aus Pech hergestellten mikroporösen Pechkugeln abgestellt wird, welche zunächst einer Oxidation und nachfolgend einer Behandlung in einer Atmosphäre aus Ammoniakgas unter Erwärmung unterzogen werden. Anschließend erfolgt eine Aktivierung der so erhaltenen Pechkugeln.

Zudem betrifft die JP H01 242410 A ein Aktivkohlematerial in Form von aktiviertem Koks, Aktivkohle oder pechbasierten Aktivkohlefasern, wobei das Aktivkohlematerial einer Oxidationsbehandlung und einer nachfolgenden Behandlung mit Ammoniak unterzogen wird.

Schließlich betrifft die DE 20 2006 016 898 U1 Hochleistungsadsorbentien auf der Basis von Aktivkohle in Form von diskreten Aktivkohlekörnern, vorzugsweise in Kugelform, wobei die in Rede stehenden Hochleistungsadsorbentien ein definiertes Gesamtporenvolumen, einen definierten mittleren Porendurchmesser sowie eine definierte BET-Oberfläche aufweisen. Dabei wird auf die Verwendung von sulfonierten divinylbenzolvernetzten Polystyrolen zur Herstellung der dort beschriebenen Adsorbentien abgestellt.

Es ist daher eine Aufgabe der vorliegenden Erfindung, adsorptive Materialien mit reaktiven und/oder katalytischen Eigenschaften in Form von Aktivkohle und ein entsprechendes Herstellungsverfahren bereitzustellen, wobei die zuvor geschilderten Nachteile des Standes der Technik zumindest weitgehend vermieden oder aber wenigstens abgeschwächt werden sollen.

Insbesondere soll im Rahmen der vorliegenden Erfindung eine Aktivkohle bereitgestellt werden, welche eine reaktive bzw. katalytische Ausrüstung auf Basis von Stickstoff als katalytisch aktivem Heteroatom aufweist und welche sich insbesondere zur Adsorption bzw. Unschädlichmachung von insbesondere sauren Schadstoffen bzw. Schadgasen eignet, wobei die erfindungsgemäß bereitgestellte Aktivkohle gegenüber dem Stand der Technik weiterführend verbessert sein soll und insbesondere auch chemisorptive Eigenschaften aufweisen soll. Insbesondere soll im Rahmen der vorliegenden Erfindung ein effizientes Verfahren bereitgestellt werden, welches die Bereitstellung einer Aktivkohle ermöglicht, die in effizienter Weise mit einer reaktiven bzw. katalytisch aktiven Komponente in Form von Stickstoff ausgerüstet ist, wobei gleichzeitig gewährleistet sein soll, dass die zugrundeliegende Ausrüstung mit der katalytisch aktiven Komponente dauerhaft ist und zu hervorragenden reaktiven bzw. katalytischen Eigenschaften der resultierenden Aktivkohle führt.

Wie die Anmelderin nun in völlig überraschender Weise herausgefunden hat, kann die zuvor angeführte und der vorliegenden Erfindung zugrundeliegende Aufgabe in nicht erwarteter Weise dadurch gelöst werden, dass im Rahmen der vorliegenden Erfindung ein Verfahren bereitgestellt wird, wonach als Ausgangsmaterial Aktivkohle als solche eingesetzt wird, welche zunächst einer Oberflächenoxidation unter Einsatz mindestens eines Oxidationsreagenzes ("OR") einer Oberflächenoxidation unterzogen wird und wonach die so erhaltene, an ihre Oberfläche oxidierte Aktivkohle nachfolgend einer Ausrüstung mit Stickstoff bzw. mit stickstoffhaltigen funktionellen Gruppen unter Einsatz mindestens eines Stickstoffmodifizierungsreagenzes ("SMR") unterzogen wird.

Zur Lösung der zuvor geschilderten Aufgabe schlägt die vorliegende Erfindung somit - gemäß einem **ersten** Aspekt der vorliegenden Erfindung - das erfindungsgemäße Verfahren zur Herstellung einer stickstoffmodifizierten bzw. stickstofffunktionalisierten Aktivkohle mit katalytischen bzw. reaktiven Eigenschaften, vorzugsweise einer Aktivkohle mit Stickstoff als katalytisch aktivem Heteroatom, gemäß Anspruch 1 vor. Weitere, insbesondere vorteilhafte Ausgestaltungen des erfindungsgemäßen Verfahrens sind Gegenstand der diesbezüglichen Verfahrensunteransprüche.

Weiterer Gegenstand der vorliegenden Erfindung - gemäß einem **zweiten** Aspekt der vorliegenden Erfindung - ist die stickstoffmodifizierte bzw. stickstofffunktionalisierte Aktivkohle nach der Erfindung, welche katalytische bzw. reaktive Eigenschaften und welche vorzugsweise Stickstoff als katalytisch aktives Heteroatom aufweist, gemäß dem diesbezüglich unabhängigen Anspruch. Weitere, insbesondere vorteilhafte Ausgestaltungen der erfindungsgemäßen Aktivkohle sind Gegenstand der entsprechenden Unteransprüche.

Wiederum weiterer Gegenstand der vorliegenden Erfindung - gemäß einem **dritten** Aspekt der vorliegenden Erfindung - sind die erfindungsgemäßen Verwendungen, wie sie in dem betreffenden Verwendungsanspruch angeführt sind.

Darüber hinaus ist weiterer Gegenstand der vorliegenden Erfindung - gemäß einem **vierten** Aspekt der vorliegenden Erfindung - die erfindungsgemäße Schutzbekleidung gemäß dem diesbezüglich unabhängigen Anspruch.

Schließlich sind weiterer Gegenstand der Erfindung - gemäß einem **fünf- ten** Aspekt der vorliegenden Erfindung - Filter und Filtermaterialien, insbesondere zur Entfernung von Schad-, Geruchs- und Giftstoffen aller Art, gemäß dem betreffenden unabhängigen Anspruch.

Es versteht sich von selbst, dass bei der nachfolgenden Beschreibung der vorliegenden Erfindung solche Ausgestaltungen, Ausführungsformen, Vorteile, Beispiele oder dergleichen, welche nachfolgend - zu Zwecken der Vermeidung unnötiger Wiederholungen - nur zu einem einzelnen Erfindungsaspekt ausgeführt werden, selbstverständlich auch in Bezug auf die übrigen Erfindungsaspekte entsprechend gelten, ohne dass dies einer ausdrücklichen Erwähnung bedarf.

Weiterhin versteht es sich von selbst, dass bei nachfolgenden Angaben von Werten, Zahlen und Bereichen die diesbezüglichen Werte-, Zahlen- und Bereichsangaben nicht beschränkend zu verstehen sind; es versteht sich dabei für den Fachmann von selbst, dass einzelfallbedingt oder anwendungsbezogen von den angegebenen Bereichen bzw. Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber andernfalls mit dem Fachmann auf diesem Gebiet an sich geläufigen Bestimmungs- bzw. Messmethoden ermittelt bzw. bestimmt werden können.

Im Übrigen gilt, dass bei allen nachstehend aufgeführten relativen bzw. prozentualen, insbesondere gewichtsbezogenen Mengenangaben, zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffen, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben:

Gemäß einem **ersten** Aspekt der vorliegenden Erfindung betrifft die vorliegende Erfindung ein Verfahren zur Herstellung einer stickstoffmodifizierten Aktivkohle, wobei die mit dem erfindungsgemäßen Verfahren hergestellte Aktivkohle katalytische bzw. reaktive Eigenschaften und einen Stickstoffgehalt, bezogen auf das Trockengewicht der mit Stickstoff modifizierten Aktivkohle, von mindestens 2 Gew.-% aufweist. Bei der mit dem erfindungsgemäßen Verfahren hergestellten Aktivkohle handelt es sich insbesondere um eine Aktivkohle mit Stickstoff als katalytisch aktivem Heteroatom. Das erfindungsgemäße Verfahren zeichnet sich dadurch aus, dass eine als Ausgangsmaterial eingesetzte kugelförmige Aktivkohle ("Ausgangsaktivkohle"), welche durch Carbonisierung eines Ausgangsmaterials in Form von sulfonierten organischen Polymeren und anschließende Aktivierung des carbonisierten Ausgangsmaterials erhalten wird, zunächst einer Oberflächenoxidation unter Verwendung und/oder in Gegenwart mindestens eines Oxidationsreagenzes ("OR") unterzogen wird, wobei Sauerstoff als das Oxidationsreagenz ("OR") ausgewählt wird und wobei die Oberflächenoxidation im Temperaturbereich von 100 °C bis 1.000 °C durchgeführt wird, und
dass die auf diese Weise erhaltene, an ihrer Oberfläche oxidierte Aktivkohle nachfolgend einer Modifizierung mit Stickstoff unter Verwendung und/oder in Gegenwart mindestens eines Stickstoffmodifizierungsreagenzes ("SMR") unterzogen wird, wobei die Modifizierung mit Stickstoff ein Inkontaktbringen der nach der Oberflächenoxidation erhaltenen Aktivkohle mit dem Stickstoffmodifizierungreagenz ("SMR"), gefolgt von einer thermischen Behandlung, umfasst, wobei die Modifizierung der an ihrer Oberfläche oxidierten Aktivkohle mit Stickstoff unter Erwärmen im Temperaturbereich von 200 °C bis 1.200 °C erfolgt und
dass das für die Modifizierung der an ihrer Oberfläche oxidierten Aktivkohle mit Stickstoff eingesetzte Stickstoffmodifizierungsreagenz ("SMR") ausgewählt wird aus der Gruppe von Harnstoff und Ammoniak sowie deren Kombinationen.

Wie zuvor angeführt, besteht die grundlegende Idee der vorliegenden Erfindung somit darin, ein Verfahren bereitzustellen, auf dessen Basis es möglich ist, eine Aktivkohle als Ausgangsmaterial in optimierter Weise mit Stickstoff zu modifizieren bzw. zu funktionalisieren, wobei Stickstoff als katalytisch aktives Heteroatom fungiert und wobei Stickstoff in gezielter Weise insbesondere an die Oberflächenstruktur der eingesetzten Aktivkohle gekoppelt bzw. chemisch gebunden bzw. dauerhaft immobilisiert wird, und zwar in Form von stickstoffhaltigen funktionellen Gruppen einerseits oder aber nach Art einer Dotierung mit Stickstoff bzw. einer N-Dotierung unter Integration bzw. Einbau in das Kohlenstoffgerüst der Aktivkohle (d. h. unter Immobilisierung bzw. Einbindung des Stickstoffs in bzw. an das Kohlenstoffgerüsts des Endprodukts) andererseits.

In diesem Zusammenhang ist es im Rahmen der vorliegenden Erfindung völlig überraschend, dass durch die der eigentlichen Stickstofffixierung bzw. -modifizierung vorgeschaltete Oberflächenoxidation der als Ausgangsmaterial eingesetzten Aktivkohle eine signifikante Verbesserung der Stickstoffmodifizierung bzw. Stickstofffunktionalisierung der Aktivkohle erreicht wird. Ohne sich auf diese Theorie beschränken bzw. festlegen zu wollen, wird durch die gezielte und zweckgerichtete Oxidation der Oberfläche der eingesetzten Aktivkohle unter Verwendung spezieller Oxidationsreagenzien ("OR") die Oberflächenstruktur der Aktivkohle im Hinblick auf die Modifizierung bzw. Funktionalisierung mit Stickstoff insofern optimiert, als zum einen hydrophile Strukturen geschaffen bzw. die Hydrophilität der Aktivkohle als solche gesteigert wird, was die Interaktion mit dem Stickstoffmodifizierungsreagenz ("SMR") verbessert. Zum anderen werden durch die gezielte Oxidation der Oberfläche der Aktivkohle insbesondere solche funktionellen chemischen Gruppen geschaffen, welche mit dem Stickstoffmodifizierungsreagenz ("SMR") insbesondere unter Ausbildung chemischer Bindungen zu interagieren bzw. zu reagieren imstande sind, was die chemische Bindung bzw. Integration des Stickstoffs in Bezug auf die Aktivkohle verbessert bzw. ermöglicht. Auf Basis der erfindungsgemäß durchgeführten Oxidation im Sinne einer Vorbehandlung der Aktivkohle wird die Affinität der Aktivkohle zum Stickstoffmodifizierungsreagenz ("SMR") erhöht.

Wie nachfolgend noch im Einzelnen geschildert, ist es aufgrund der speziellen Verfahrensführung möglich, die resultierende stickstoffmodifizierte bzw. stickstofffunktionalisierte Aktivkohle bzw. die mit Stickstoff ausgerüstete Aktivkohle individuell anzupassen bzw. maßzuschneidern, was sowohl auf Ebene der Oxidation der eingesetzten (Ausgangs-)Aktivkohle als auch im Hinblick auf die nachfolgende Stickstoffmodifizierung möglich ist, so dass im Ergebnis auf Basis des erfindungsgemäßen Verfahrens Aktivkohlen bereitgestellt werden, welche insgesamt einem breiten Einsatzspektrum zugänglich sind bzw. im Speziellen für die Adsorption bzw. Unschädlichmachung spezieller toxischer Substanzen optimiert sind.

Ein weiterer zentraler Vorteil der erfindungsgemäßen Verfahrensführung ist darin zu sehen, dass eine Vielzahl kommerziell erhältlicher bzw. handelsüblicher Aktivkohlen als Ausgangsmaterial für die erfindungsgemäße Verfahrensführung bzw. Modifizierung eingesetzt werden können, so dass das erfindungsgemäße Verfahren gewissermaßen universell im Hinblick auf die Ausgangsmaterialien auf Basis von Aktivkohle, beispielsweise mit variabler Porosität oder dergleichen, eingesetzt werden kann. Aufgrund der sozusagen nachgeschalteten Modifizierung bzw. Ausrüstung mit Stickstoff werden im Rahmen der Aktivkohleherstellung als solche vorliegende Prozesse, wie Carbonisierung und Aktivierung, nicht beeinflusst.

Aufgrund der erfindungsgemäßen Verfahrensführung mit der Funktionalisierung der Aktivkohle mit stickstoffhaltigen funktionellen Gruppen bzw. mit der gezielten Integration von Stickstoff in die Kohlenstoffoberfläche bzw. in das Gerüst der Aktivkohle werden somit spezielle stickstoffmodifizierte bzw. stickstofffunktionalisierte Aktivkohlen erhalten, welche eine katalytische Aktivität bzw. Reaktivität und somit chemisorptive Eigenschaften gegenüber unterschiedlichen Substanzen, insbesondere toxischen gasförmigen Substanzen, aufweisen. Diesbezüglich weisen die mit dem erfindungsgemäßen Verfahren erhaltenen stickstoffmodifizierten bzw. stickstofffunktionalisierten Aktivkohlen eine hohe Eignung für den insbesondere katalytischen bzw. reaktiven Abbau verschiedener toxischer Gase auf. Hierbei kann es sich beispielsweise und in nicht beschränkender Weise um sogenannte *Chemical Warfare Agents* (CWAs), *Toxic Industrial Materials* (TIMs), wie größere Moleküle, beispielsweise Ethylenoxid oder dergleichen, um *Toxic Industrial Chemicals* (TICs), wie NH₃, SO₂, H₂S, Cl₂, HCl oder dergleichen, handeln. Insbesondere eignet sich die mit dem erfindungsgemäßen Verfahren erhaltene stickstofffunktionalisierte bzw. stickstoffmodifizierte Aktivkohle bzw. die mit Stickstoff ausgerüstete Aktivkohle zur Adsorption bzw. Unschädlichmachung von insbesondere sauren toxischen Gasen, wie H₂S, SO₂ bzw. HCl.

Ohne sich auf diese Theorie beschränken bzw. festlegen zu wollen, ist insbesondere ein Abbau auch von solchen toxischen Gasen bzw. Schadgasen über eine Oxidation an der Kohlenstoffoberfläche der modifizierten Aktivkohle möglich, wie es beispielsweise in nicht beschränkender Weise für SO₂, H₂S, AsH₃ sowie DMS, möglich ist. Dies ist insbesondere dann der Fall, wenn der Stickstoff, wie zuvor geschildert, in das Kohlenstoffgerüst der erfindungsgemäß modifizierten Aktivkohle nach Art einer N-Dotierung integriert bzw. inkorporiert ist, d. h. der Stickstoff sozusagen immobilisiert ist, insbesondere durch chemische und/oder kovalente Bindung in das Kohlenstoffgerüst der erfindungsgemäß modifizierten Aktivkohle.

Darüber hinaus weist die auf Basis des erfindungsgemäßen Verfahrens erhältliche stickstoffmodifizierte bzw. stickstofffunktionalisierte Aktivkohle-gleichermaßen ohne sich auf diese Theorie beschränken bzw. festlegen zu wollen - eine katalytische Aktivität bzw. reaktive Eigenschaften gegenüber solchen toxischen Substanzen bzw. Gasen auf, welche mit den ausgebildeten stickstoffhaltigen funktionellen Gruppen auf der Oberfläche der erfindungsgemäß modifizierten Aktivkohle zu reagieren imstande sind, wie beispielsweise Formaldehyd und NOₓ-Verbindungen.

Auf Basis der der vorliegenden Erfindung zugrundeliegenden Konzeption mit der speziellen Ausrüstung von Aktivkohle mit Stickstoff wird somit in völlig überraschender Weise eine Aktivkohle nach der Erfindung bereitgestellt, welche über hervorragende Eigenschaften hinsichtlich der (Chemi-)Sorption bzw. des katalytischen und/oder reaktiven Abbaus von unterschiedlichen Schadstoffen bzw. toxischen Gasen, wie chemischen Gift- bzw. Kampfstoffen, verfügt. Beispielsweise eignet sich die so ausgerüstete Aktivkohle auch für den insbesondere oxidativen Abbau von insbesondere schwefelhaltigen Komponenten eignen. Gleichermaßen können die so erhaltenen Aktivkohlen durch eine zweckgerichtete Optimierung der diesbezüglichen Ausrüstungen für Breitbandanwendungen, beispielsweise im Rahmen von Atemschutzanwendungen, eingesetzt werden. In diesem Zusammenhang kommt auch ein Einsatz in ABEK-Filtern, insbesondere in Kombination mit weiteren Adsorbentien in Betracht.

Im Allgemeinen eignet sich die erfindungsgemäße Aktivkohle beispielsweise zu Gasadsorptionen und insbesondere zur Adsorption von Schwefel enthaltenden Gasen (wie Schwefeloxiden und/oder Schwefelwasserstoff), von stickstoffenthaltenden Gasen (wie Stickoxiden und/oder Stickstoffwasserstoffen, wie Ammoniak) sowie von halogenhaltigen Gasen (wie Chlorwasserstoffgas). Gleichermaßen eignet sich die erfindungsgemäße Aktivkohle auch zur Adsorption von organisch basierten schädlichen Substanzen, wie beispielsweise Formaldehyd oder dergleichen. Insbesondere weist die erfindungsgemäße Aktivkohle besonders gute Eigenschaften im Hinblick auf die Sorption, insbesondere Physisorption und/oder Chemisorption, von Schwefel- und Stickstoffoxiden, Halogenwasserstoffen, Cyangas, Cyanwasserstoff, Schwefelwasserstoff, Chlorgas, Arsenwasserstoff und/oder Ammoniak auf.

Aufgrund der erfindungsgemäßen Konzeption des Verfahrens nach der Erfindung mit der sozusagen vorgeschalteten Oberflächenoxidation bzw. der der Oberflächenoxidation nachgeschalteten Ausrüstung mit Stickstoff der zu behandelnden Aktivkohle als Ausgangsmaterial wird eine besonders homogene bzw. gleichmäßige Ausrüstung bzw. Beladung der Aktivkohle - und zwar insbesondere über das gesamte Porenspektrum - mit dem zu inkorporierenden Stickstoff erreicht, da das Stickstoffmodifizierungsreagenz ("SMR") besonders gut in das Porensystem eindringen kann und dort aufgrund der vorgeschalteten Oxidation mit der hohen Affinität der Reaktionsparameter zueinander eine gleichmäßige Beladung der Aktivkohle unter Ausbildung stickstoff-haltiger funktioneller Gruppen bzw. unter Integration bzw. Immobilisierung von Stickstoff in das Kohlenstoffgerüst gewährleistet.

Das erfindungsgemäße Verfahren zeichnet sich dabei durch eine gewissermaßen zweistufige Verfahrensführung aus, wobei nämlich zunächst herkömmliche Aktivkohle als Ausgangsmaterial einer Oberflächenoxidation unterzogen wird und nachfolgend die so erhaltene, an ihrer Oberfläche oxidierte Aktivkohle nachfolgend in zweckgerichteter Weise unter Verwendung eines Stickstoffmodifizierungsreagenzes ("SMR") mit Stickstoff ausgerüstet wird, und zwar auf Basis von stickstoffhaltigen funktionellen Gruppen und/oder auf Basis der Inkorporation bzw. des Einbaus von Stickstoff im Sinne einer Stickstoffdotierung (N-Dotierung) in das Kohlenstoffgerüst, insbesondere in das die äußere und innere Oberfläche bildende Kohlenstoffgerüst.

In diesem Zusammenhang ist es erfindungsgemäß zudem völlig überraschend, dass das Porensystem der als Ausgangsmaterial eingesetzten Aktivkohle zumindest im Wesentlichen nicht durch die Ausrüstung mit dem Stickstoff beeinflusst wird. Mit anderen Worten ist es erfindungsgemäß gewährleistet, dass das Porensystem der Aktivkohle nicht bzw. zumindest im Wesentlichen nicht nachteilig hinsichtlich der Adsorption von Schadstoffen beeinflusst wird. Die auf Basis des erfindungsgemäßen Verfahrens erhältliche Aktivkohle weist somit auch nach Ausrüstung bzw. Funktionalisierung mit Stickstoff z. B. eine hohe, der Adsorption von Schadstoffen zugängliche BET-Oberfläche auf, so dass die grundlegenden Eigenschaften der Aktivkohle als solche auch bei Ausrüstung mit Stickstoff erhalten bleiben, was nicht vorhersehbar war. Somit ist die erfindungsgemäße Vorgehensweise im Gegensatz zu der im Stand der Technik bekannten Imprägnierung mit dem Vorteil verbunden, dass kein Verlust an spezifischer Oberfläche bzw. Gesamtporenvolumen vorliegt und auch die Porenstruktur als solche im Hinblick auf ihre Verteilung in Form von Mikro-, Meso- und Makroporen zumindest im Wesentlichen nicht verändert wird.

Diesbezüglich war es im Rahmen der vorliegenden Erfindung völlig überraschend, dass durch die gezielte Ausrüstung der Aktivkohle mit Stickstoff - im grundlegenden Unterschied zu den Verfahren des Standes der Technik - nicht zu Verstopfungen des Porensystems führt, da die Stickstoffkomponente dauerhaft unter Ausbildung chemischer Bindungen in die Kohlenstoffstruktur der Aktivkohle integriert ist, und zwar entweder auf Basis stickstoffhaltiger funktioneller Gruppen oder unter Integration in die Kohlenstoffmatrix der behandelten bzw. modifizierten Aktivkohle. Insbesondere wird aufgrund der erfindungsgemäßen Verfahrensführung eine Kristallbildung bzw. eine Auskristallisation innerhalb des Porensystems verhindert, was die Leistungsfähigkeit der erfindungsgemäßen Aktivkohle noch weiter verbessert. Auch hierin ist ein entscheidender Unterschied zu dem im Stand der Technik bekannten Imprägnierverfahren zu sehen, welche insbesondere bei mikroporöser Aktivkohle zu einem Auftreten von Verstopfungen im Hinblick auf die Porenstruktur der Aktivkohle führt.

Aufgrund der gezielten Ausrüstung der Aktivkohle mit Stickstoff als katalytisch aktives Heteroatom weist die mit dem erfindungsgemäßen Verfahren hergestellte Aktivkohle, wie zuvor angeführt, sozusagen eine reaktive bzw. katalytische Oberfläche in Ergänzung zu den chemisorptiven und/oder physisorptiven Eigenschaften der Aktivkohle als solche auf. Die mit dem erfindungsgemäßen Verfahren erhältliche Aktivkohle vereint folglich chemisorptive wie physisorptive Eigenschaften in einem einzigen Material und ist somit imstande, die Sorbate bzw. die zu sorbierenden Substanzen - im Unterschied zu nichtkatalytischer bzw. nichtreaktiver Aktivkohle - auch zuverlässig und irreversibel bzw. dauerhaft zu binden bzw. abzubauen.

Auch durch die besonders homogene bzw. gleichmäßige Ausrüstung der mit dem erfindungsgemäßen Verfahren erhältlichen Aktivkohle mit der Stickstoffkomponente wird die Leistungsfähigkeit der so erhaltenen stickstoffmodifizierten bzw. stickstofffunktionalisierten Aktivkohle im Hinblick auf die Sorption bzw. den Abbau zu entfernender Substanzen nochmals gesteigert, insbesondere da die so erhältliche Aktivkohle gewissermaßen über einen großen Teil ihrer Oberfläche über kombinierte Eigenschaften der Physisorption einerseits und der Chemisorption auf Basis reaktiver bzw. katalytischer Eigenschaften andererseits verfügt, welche sich zudem über die Summe der Einzelmaßnahmen hinaus verstärken, was als Indiz für das Vorliegen eines synergistischen Effekts gewertet werden muss.

Im Rahmen der vorliegenden Erfindung wird somit ein leistungsfähiges Verfahren bereitgestellt, welches zu einem optimierten Adsorptionssystem mit kombinierten und sich ergänzenden Eigenschaften von Physisorption einerseits und Chemisorption andererseits führt.

Wie zuvor angeführt, resultiert erfindungsgemäß eine funktionalisierte Aktivkohle, welche im Unterschied zum Stand der Technik jedoch zumindest im Wesentlichen keine signifikante Beeinträchtigung anderer physikochemischer Parameter, wie beispielsweise Porosität, Porenvolumen, Porenverteilung und dergleichen, aufweist.

Im Rahmen der vorliegenden Erfindung ist es zudem völlig überraschend, dass sich Aktivkohle als solche überhaupt in effektiver Weise hinsichtlich der erfindungsgemäß vorgesehenen Stickstoffmodifizierung bzw. Stickstofffunktionalisierung eignet. Denn Aktivkohle weist also solche grundsätzlich hydrophobe Eigenschaften auf, was einer effizienten Behandlung bzw. Interaktion mit dem Stickstoffmodifizierungsreagenz ("SMR") zur Ausbildung funktioneller Gruppen bzw. zur Integration von Stickstoff grundsätzlich abträglich ist. Insbesondere ist es jedoch aufgrund der speziellen erfindungsgemäßen Verfahrensweise mit der zweckgerichteten vorgeschalteten Oberflächenoxidation der als Ausgangsmaterial eingesetzten Aktivkohle in völlig überraschender und nicht vorhersehbarer Weise gelungen, die Kompatibilität von Aktivkohle einerseits und Stickstoffmodifizierungsreagenz ("SMR") andererseits zu erhöhen, um Aktivkohle als solche in effektiver Weise mit Stickstoff zu funktionalisieren bzw. zu modifizieren, was zu den zuvor angeführten positiven Eigenschaften hinsichtlich der Sorption von Schadstoffen führt.

Zusammenfassend zeichnet sich die erfindungsgemäße Verfahrensführung somit dadurch aus, dass eine speziell mit Stickstoff modifizierte bzw. funktionalisierte Aktivkohle erhalten wird, welche über hervorragende Adsorptionseigenschaften auf Basis einer Kombination von Physisorption und Chemisorption verfügt. Insbesondere tritt eine bei herkömmlicher Aktivkohle, z. B. bei Erschöpfung oder übermäßiger Beladung häufig vorkommende Freisetzung bzw. Resorption bereits sorbierter Substanzen bei der erfindungsgemäßen Aktivkohle nicht bzw. nicht in nennenswertem Maße auf. Aufgrund der erfindungsgemäßen Konzeption der Bereitstellung einer Aktivkohle, welche neben ihren inhärenten adsorptiven Eigenschaften gleichermaßen reaktive bzw. katalytische Eigenschaften aufweist, wird eine dauerhaft und im Allgemeinen irreversible Bindung bzw. ein effizienter Abbau sorbierter Substanzen gewährleistet, was gleichermaßen zu einer verringerten Desorption der in Rede stehenden Substanzen und zu einer Steigerung der Gesamtadsorptionskapazität führt. Aufgrund der festen chemischen Anbindung von Stickstoff an die Aktivkohlestruktur liegt zudem eine dauerhafte und beständige Modifizierung der Aktivkohle mit Stickstoff vor. Insbesondere kann der dauerhaft immobilisierte Stickstoff nicht durch Auswaschen oder dergleichen wieder von der Aktivkohle entfernt werden.

Erfindungsgemäß kann das Verfahren nach der Erfindung weiter zusammenfassend insofern charakterisiert werden, als zunächst im Rahmen der Verfahrensdurchführung eine Ausgangsaktivkohle bzw. ein Basisadsorbens einer chemischen bzw. thermischen Oxidation zum Erhalt einer an ihrer Oberfläche oxidierten Aktivkohle (oxidiertes Basisadsorbens) unterzogen wird, wobei das so erhaltene Intermediat nachfolgend bzw. in einem sich der Oxidation anschließenden Schritt bzw. in einem separaten Schritt mit Stickstoff modifiziert bzw. funktionalisiert wird. Hierzu wird zunächst das oxidative Intermediat mit dem Stickstoffmodifizierungsreagenz ("SMR") in Kontakt gebracht, beispielsweise unter Verwendung einer Harnstofflösung, wobei in einem solchen Fall das oxidative Intermediat im Rahmen einer Tauchmethode oder dergleichen mit dem Stickstoffmodifizierungsreagenz ("SMR") in Kontakt gebracht werden kann. Gleichermaßen ist ein Inkontaktbringen auch im Rahmen eines Luftstromes, beispielsweise unter Verwendung von Ammoniak (NH₃), möglich. Es schließt sich eine entsprechende thermische Behandlung zur Ausbildung von stickstoffhaltigen Funktionalisierungen bzw. zur Dotierung des Aktivkohlegerüstes mit Stickstoff (d. h. zur Immobilisierung des Stickstoffs) an.

Was den Begriff "Oberflächenoxidation", wie er erfindungsgemäß verwendet wird, anbelangt, so ist hierunter insbesondere eine Oxidation solcher Oberflächen der als Ausgangsmaterial eingesetzten Aktivkohle zu verstehen, welche in Kontakt mit der insbesondere das Oberflächenreagenz ("OR") enthaltenden Umgebung stehen, bzw. welche sozusagen von außen für das erfindungsgemäß eingesetzte Oxidationsreagenz ("OR") zugänglich sind. Hierbei handelt es sich insbesondere auch um das Porensystem der Aktivkohle auf Basis von Makro-, Meso- und Mikroporen.

Ohne sich auf diese Theorie beschränken bzw. festlegen zu wollen, resultiert auf Basis der erfindungsgemäßen Verfahrensführung gewissermaßen eine oxidierte Schicht im Hinblick auf die Aktivkohle, welche im Allgemeinen über die nachfolgend noch angeführten sauerstoffhaltigen funktionellen Gruppen verfügt. Die sich der Oberflächenoxidation anschließende Ausrüstung mit dem Stickstoff erfolgt dann - gleichermaßen ohne sich auf diese Theorie beschränken bzw. festlegen zu wollen - insbesondere im Bereich der oxidierten (Grenz-)Schicht, wobei die sauerstoffhaltigen funktionellen Gruppen gewissermaßen als Bindungs- bzw. Ankerstellen bzw. Reaktionspartner für das erfindungsgemäß eingesetzte Stickstoffmodifizierungsreagenz ("SMR") fungieren.

Durch die sich der Oxidation anschließende Ausrüstung der Aktivkohle im Rahmen des Verfahrens nach der Erfindung mit Stickstoff als katalytisch aktivem Heteroatom werden somit Aktivkohlen mit reaktiven bzw. katalytisch aktiven Oberflächen generiert.

Was das erfindungsgemäße Verfahren weiterhin anbelangt, so kann es erfindungsgemäß vorgesehen sein, dass die Oberflächenoxidation unter Ausbildung einer hydrophilen Oberfläche der Aktivkohle durchgeführt wird. Erfindungsgemäß ist es gleichermaßen möglich, dass die Oberflächenoxidation zu einer Ausbildung von sauerstoffhaltigen funktionellen Gruppen an der Oberfläche der Aktivkohle führt. In diesem Zusammenhang können die sauerstoffhaltigen funktionellen Gruppen ausgewählt werden aus sauren und basischen sauerstoffhaltigen funktionellen Gruppen sowie deren Kombinationen, insbesondere sauren und basischen Oberflächenoxiden. Insbesondere können die sauerstoffhaltigen funktionellen Gruppen ausgewählt werden aus der Gruppe von Hydroxyl-, Carboxyl-, Carbonyl-, Anhydrid-, Lacton-, Chinon-, Pyron-, Chromen- und Ethergruppen sowie deren Kombinationen. Derartige Gruppen eigenen sich in besonderer Weise zur Interaktion mit dem Stickstoffmodifizierungsreagenz ("SMR").

Wie zuvor angeführt, führen die an der Oberfläche der Aktivkohle insbesondere durch Reaktion des Oxidationsreagenzes ("OR") mit der als Ausgangsmaterial eingesetzten Aktivkohle ("Ausgangsaktivkohle") entstehenden sauerstoffhaltigen funktionellen Gruppen zu einer Erhöhung der Hydrophilität bzw. der hydrophilen Eigenschaften der so behandelten Aktivkohle, was die Interaktion mit dem nachfolgend eingesetzten Stickstoffmodifizierungsreagenz ("SMR") verbessert und in entsprechender Weise zu einer verbesserten Funktionalisierung bzw. Modifizierung der Aktivkohle mit Stickstoff führt. Insbesondere können die auf diese Weise generierten sauerstoffhaltigen funktionellen Gruppen als Reaktionspartner für das Stickstoffmodifizierungsreagenz ("SMR") fungieren, um so die chemische Bindung bzw. den Einbau bzw. Integration von Stickstoff in die zu modifizierende Aktivkohle zu verbessern bzw. zu ermöglichen. Die erfindungsgemäß durchgeführte und vorgeschaltete Oberflächenoxidation dient somit gewissermaßen zur Vorbereitung der nachfolgenden Stickstoffmodifizierung bzw. -funktionalisierung der Aktivkohle. In diesem Zusammenhang wird durch die erfindungsgemäß realisierte Oberflächenoxidation insbesondere auch die Oberflächenhydrophilie des Kohlenstoffgerüsts der zu behandelnden Aktivkohle erhöht, was zu den vorgenannten Vorteilen führt.

Was das erfindungsgemäße Verfahren weiterhin anbelangt, so kann durch die zweckgerichtete Oberflächenoxidation auch der pH-Wert, insbesondere der Oberflächen-pH-Wert, der an ihrer Oberfläche oxidierten Aktivkohle eingestellt werden, und zwar im Vergleich zu der Ausgangsaktivkohle um einen Wert von mindestens 0,25, insbesondere mindestens 0,5, vorzugsweise mindestens 0,75, bevorzugt mindestens 1, besonders bevorzugt mindestens 1,5, verändert werden. Insbesondere kann es vorgesehen sein, dass die Acidität der an ihrer Oberfläche oxidierten Aktivkohle erhöht und/oder der pH-Wert, insbesondere der Oberflächen-pH-Wert, der an ihrer Oberfläche oxidierten Aktivkohle durch die vorgenommene Oxidation der Aktivkohle verringert wird, insbesondere um einen Wert von mindestens 0,25, insbesondere mindestens 0,5, vorzugsweise mindestens 0,75, bevorzugt mindestens 1, besonders bevorzugt mindestens 1,5, oder dass durch die vorgenommene Oxidation der Aktivkohle die Basizität der an ihrer Oberfläche oxidierten Aktivkohle erhöht und/oder der pH-Wert, insbesondere der Oberflächen-pH-Wert, der an ihrer Oberfläche oxidierten Aktivkohle erhöht wird, insbesondere um einen Wert von mindestens 0,25, insbesondere mindestens 0,5, vorzugsweise mindestens 0,75, bevorzugt mindestens 1, besonders bevorzugt mindestens 1,5. Durch die zweckgerichtete Einstellung des pH-Werts auf Basis der erfindungsgemäß durchzuführenden Oberflächenoxidation der Ausgangsaktivkohle kann insbesondere die Affinität zum nachfolgend eingesetzten Stickstoffmodifizierungsreagenz ("SMR") weiter optimiert werden, was zu einer noch weitergehenden Effizienzsteigerung hinsichtlich der Ausrüstung der auf Basis des erfindungsgemäßen Verfahrens erhältlichen Aktivkohle mit Stickstoff führt. Insbesondere resultiert bei Verwendung von Ausgangsaktivkohlen mit relativ hohem pH-Wert bzw. basischen Ausgangsaktivkohlen eine durch die Oberflächenoxidation hervorgerufene Verringerung des Oberflächen-pH-Wertes.

Erfindungsgemäß kann es auch vorgesehen sein, dass die Oberflächenoxidation durchgeführt wird derart, dass die auf diese Weise erhaltene, an ihrer Oberfläche oxidierte Aktivkohle einen Gehalt an sauerstoffhaltigen funktionellen Gruppen, berechnet und/oder ausgedrückt als Gehalt an flüchtigen Bestandteilen ("fB") und bezogen auf das Trockengewicht der an ihrer Oberfläche oxidierten Aktivkohle, von mindestens 1 Gew.-%, insbesondere mindestens 2 Gew.-%, vorzugsweise mindestens 3 Gew.-%, bevorzugt mindestens 4 Gew.-%, und/oder im Bereich von 1 Gew.-% bis 30 Gew.-%, insbesondere 1,5 Gew.-% bis 25 Gew.-%, vorzugsweise 2 Gew.-% bis 20 Gew.-%, bevorzugt 3 Gew.-% bis 15 Gew.-%, aufweist.

In diesem Zusammenhang kann im Rahmen der erfindungsgemäßen Verfahrensführung der Gehalt an sauerstoffhaltigen funktionellen Gruppen beispielsweise durch entsprechende Wahl der Temperatur und/oder Zeitdauer und/oder Konzentration an Oxidationsreagenz ("OR") eingestellt werden. Auf diese Weise kann eine Maßschneiderung des Oxidationsprozesses insbesondere im Hinblick auf die nachfolgende Stickstofffunktionalisierung bzw. -modifizierung erfolgen. Im Rahmen der erfindungsgemäßen Verfahrensführung wird somit der Sauerstoffgehalt der an ihrer Oberfläche oxidierten Aktivkohle im Vergleich zu der eingesetzten Ausgangsaktivkohle - welche im Allgemeinen einen Sauerstoffgehalt von weniger als 1 Gew.-%, ausgedrückt als Gehalt an flüchtigen Bestandteilen ("fB") und bezogen auf das Trockengewicht der Ausgangsaktivkohle, aufweist - signifikant erhöht.

Der Gehalt an flüchtigen Bestandteilen ("fB") fungiert dabei im Allgemeinen als Maß für die Oxidation und bezieht sich insbesondere auf durch die Oxidation gebildete Oberflächenoxide. Insbesondere kann der Gehalt an flüchtigen Bestandteilen auf Basis der ISO 562:1981 bestimmt werden. Insbesondere kann der Gehalt an flüchtigen Bestandteilen ("fB") an der zuvor getrockneten, an ihrer Oberfläche oxidierten Aktivkohle bei einer entsprechenden Erwärmung für einen Zeitraum von 7 Minuten auf 900 °C unter inerten Bedingungen bestimmt werden.

Durch die Einstellung des Gehalts an sauerstoffhaltigen funktionellen Gruppen kann auch die Menge des nachfolgend einzubauenden Stickstoffs vorgegeben bzw. beeinflusst werden, insbesondere durch eine entsprechende Vorgabe der Anzahl an Reaktionspartnern. Die aufgenommene Menge an Stickstoff der erfindungsgemäß bereitgestellten stickstoffmodifizierten bzw. stickstofffunktionalisierten Aktivkohle korreliert somit mit dem Gehalt bzw. der Menge an Oberflächenoxiden bzw. mit den flüchtigen Bestandteilen der oxidierten Basis in Form der an ihrer Oberfläche oxidierten Aktivkohle.

Was das im Rahmen der Oberflächenoxidation eingesetzte Oxidationsreagenz ("OR") anbelangt, so wird erfindungsgemäß Sauerstoff eingesetzt. Grundsätzlich erfolgt dabei der Oxidationsvorgang, wie nachfolgend geschildert, für einen definierten Zeitraum unter Wärme- bzw. Temperatureinfluss.

Erfindungsgemäß wird Sauerstoff als das Oxidationsreagenz ("OR") ausgewählt. Im Rahmen der vorliegenden Erfindung wird bei der Verwendung von Sauerstoff, welcher der zu oxidierenden Aktivkohle insbesondere in Form von atmosphärischer Luft zugeführt werden kann, auch von einer sogenannten thermischen Oxidation gesprochen, da diese in der Regel unter Erwärmung stattfindet, wohingegen bei Verwendung weiterer Oxidationsreagenzien, insbesondere von H₂O₂ bzw. HNO₃, im Allgemeinen auch von einer chemischen Oxidation gesprochen wird, da in diesem Fall in Abhängigkeit von dem eingesetzten Reagenz mitunter keine zusätzliche Erwärmung erforderlich ist, obwohl diese im Allgemeinen auch hier durchgeführt werden kann. Insbesondere kann das zuvor genannte Oxidationsreagenz ("OR") in gasförmiger Form eingesetzt werden, was dem Fachmann als solches grundsätzlich bekannt ist.

Erfindungsgemäß erfolgt die Oberflächenoxidation unter Erwärmen. Hierbei kann die Oberflächenoxidation bei solchen Temperaturen erfolgen, dass eine Reaktion des Oxidationsreagenzes ("OR") mit der Aktivkohle unter Ausbildung von sauerstoffhaltigen funktionellen Gruppen an der Oberfläche der Aktivkohle erfolgt. Insbesondere kann in diesem Zusammenhang die Oberflächenoxidation für eine Zeitdauer im Bereich von 1 Minute bis 600 Minuten, insbesondere 5 Minuten bis 500 Minuten, bevorzugt 10 Minuten bis 400 Minuten, durchgeführt werden. Hinreichend kann das Maß der Oberflächenoxidation, insbesondere die Anzahl bzw. der Gehalt an sauerstoffhaltigen Gruppen auf der Aktivkohleoberfläche, vorgegeben werden.

Erfindungsgemäß wird das Oxidationsreagenz ("OR") ausgewählt aus der Gruppe von Sauerstoff. Dabei wird die Oberflächenoxidation dann im Temperaturbereich von 100 °C bis 1.000 °C, insbesondere 150 °C bis 900 °C, vorzugsweise 200 °C bis 750 °C, bevorzugt 225 °C bis 600 °C, besonders bevorzugt 250 °C bis 500 °C, ganz besonders bevorzugt 250 °C bis 450 °C, durchgeführt. Wie zuvor angeführt handelt es sich hierbei gewissermaßen um eine thermische Oxidation.

Was die erfindungsgemäß vorgesehene Oberflächenoxidation der Aktivkohle anbelangt, so handelt es sich hierbei zusammenfassend zum einen gezielt regelbaren bzw. einstellbaren Prozess, welcher auf Basis der Art und Weise des einzusetzenden Oxidationsreagenzes ("OR"), der Oxidationszeit und/oder der Temperatur gesteuert werden kann. Wie zuvor angeführt, wird durch die gezielte Oxidation die auf diese Weise an ihrer Oberfläche oxidierte Aktivkohle für die nachfolgende Funktionalisierung bzw. Modifizierung mit Stickstoff optimiert. So kann beispielsweise in Abhängigkeit von der Oxidationszeit der Gehalt an flüchtigen Bestandteilen als Maß für den Oxidationsgrad erhöht werden. Zudem kann der pH-Wert, insbesondere der Oberflächen-pH-Wert der an ihrer Oberfläche oxidierten Aktivkohle durch Wahl der Oxidationsbedingungen eingestellt bzw. maßgeschneidert werden, beispielsweise über die Dauer der Oxidation. So ist bei der zuvor beschriebenen chemischen Oxidation insbesondere die Bildung saurer Oberflächenoxide bevorzugt, wohingegen bei der zuvor beschriebenen thermischen Oxidation insbesondere die Bildung basischer Oberflächenoxide bevorzugt ist. Gleichermaßen hat eine zunehmende Oxidationszeit in Bezug auf die an ihrer Oberfläche oxidierte Aktivkohle einen Einfluss auf die sogenannte Rütteldichte der Aktivkohle, welche im Allgemeinen mit zunehmender Oxidationszeit zumindest geringfügig abnimmt. Gleichermaßen hat die Oxidation auch einen Einfluss auf das Gesamtporenvolumen, insbesondere das Gesamtporenvolumen nach Gurvich, der Aktivkohle, welche beispielsweise mit zunehmender Oxidationszeit zumindest geringfügig vergrößert wird. Im Ergebnis kann somit auf Basis der Oxidation die Oberflächeneigenschaften der Aktivkohle in gezielter Weise hinsichtlich der nachfolgenden Modifizierung mit Stickstoff eingestellt bzw. maßgeschneidert werden.

Im Rahmen der erfindungsgemäßen Verfahrensführung kann es zudem vorgesehen sein, dass im Anschluss an die Oberflächenoxidation und insbesondere vor der Modifizierung mit Stickstoff eine Aufreinigung bzw. Trocknung der an ihrer Oberfläche oxidierten Aktivkohle erfolgt. In diesem Zusammenhang kann die Aufreinigung mittels mindestens eines Waschvorgangs in einer Flüssigkeit, insbesondere Wasser, erfolgen. Gleichermaßen kann die Trocknung unter Erwärmung der an ihrer Oberfläche oxidierten Aktivkohle, insbesondere auf Temperaturen im Bereich von 40 °C bis 200 °C, insbesondere 50 °C bis 150 °C, vorzugsweise 60 °C bis 120 °C, erfolgen. Durch die gezielte Trocknung der an ihrer Oberfläche oxidierten Aktivkohle wird das so erhaltene Zwischenprodukt bzw. Intermediat weiterführend für die nachfolgende Modifizierung bzw. Funktionalisierung mit Stickstoff optimiert, insbesondere da die Zugänglichkeit für das Stickstoffmodifizierungsreagenz ("SMR") verbessert wird.

Was die sich der Oberflächenoxidation der Aktivkohle anschließende Modifizierung bzw. Funktionalisierung der an ihrer Oberfläche oxidierten Aktivkohle mit Stickstoff anbelangt, so umfasst diese ein Inkontaktbringen der nach der Oberflächenoxidation erhaltenen Aktivkohle mit dem Stickstoffmodifizierungsreagenz ("SMR"), gefolgt von einer thermischen Behandlung. Auf diese Weise wird die chemische Anbindung bzw. Integration bzw. die Ausbildung stickstoffhaltiger funktioneller Gruppen an der Oberfläche der zuvor oxidierten Aktivkohle gewährleistet. Wie zuvor angeführt, interagiert das Stickstoffmodifizierungsreagenz ("SMR") insbesondere mit den sauerstoffhaltigen Oberflächenfunktionalitäten, welche im Rahmen des vorangehenden Oxidationsschrittes in gezielter Weise auf der Aktivkohle generiert worden sind.

Durch das Inkontaktbringen der an ihrer Oberfläche oxidierten Aktivkohle mit dem Stickstoffmodifizierungsreagenz ("SMR") wird insbesondere auch das mit der Umgebung in Verbindung stehende Porensystem der Aktivkohle mit dem Stickstoffmodifizierungsreagenz gefüllt bzw. zusammengebracht, was auf diese Weise die nachfolgenden chemischen Reaktionen insbesondere mit den sauerstoffhaltigen funktionellen Gruppen der an ihrer Oberfläche oxidierten Aktivkohle ermöglicht.

Insbesondere erfolgt im Rahmen der Modifizierung bzw. Funktionalisierung mit Stickstoff eine Reaktion des Stickstoffmodifizierungsreagenzes ("SMR") mit den sauerstoffhaltigen funktionellen Gruppen, wie zuvor definiert, wobei diesbezüglich ein zentraler Vorteil darin zu sehen ist, dass das Porenvolumen der Aktivkohle nicht signifikant oder allenfalls nur geringfügig verändert wird. Erfindungsgemäß liegt gewissermaßen eine chemische Anbindung von Stickstoff an den sauerstoffhaltigen funktionellen Gruppen vor, welche gegebenenfalls weiterführend modifiziert werden kann, wie nachfolgend noch angeführt.

Was das erfindungsgemäß für die Modifizierung der an ihrer Oberfläche oxidierten Aktivkohle mit Stickstoff eingesetzte Stickstoffmodifizierungsreagenz ("SMR") anbelangt, so kann dieses erfindungsgemäß ausgewählt werden aus der Gruppe von Harnstoff und Ammoniak sowie deren Kombinationen, vorzugsweise Harnstoff.

Gemäß einer erfindungsgemäß bevorzugten Ausführungsform kann als das für die Modifizierung der an ihrer Oberfläche oxidierten Aktivkohle mit Stickstoff eingesetzte Stickstoffmodifizierungsreagenz ("SMR") Harnstoff verwendet werden. In diesem Zusammenhang kann der Harnstoff in Form einer vorzugsweise wässrigen Lösung, bevorzugt in Form einer zumindest im Wesentlichen gesättigten Harnstofflösung, eingesetzt werden. Im Allgemeinen kann in Abhängigkeit von dem gewünschten Grad der Stickstofffunktionalisierung die Menge und Konzentration der Harnstofflösung entsprechend variiert werden, was im fachüblichen Können des Fachmanns liegt. In diesem Zusammenhang kann erfindungsgemäß beispielsweise derart vorgegangen werden, dass die an ihrer Oberfläche oxidierte Aktivkohle zunächst in die Harnstofflösung eingetaucht wird, die überflüssige Harnstofflösung dann abdekantiert wird und nachfolgend eine thermische Behandlung insbesondere in einem Inertgasstrom erfolgt.

Gemäß einer weiteren erfindungsgemäßen Ausführungsform kann es auch vorgesehen sein, dass als Stickstoffmodifizierungsreagenz ("SMR") Ammoniak (NH₃) verwendet wird. In diesem Zusammenhang kann Ammoniak in Form des Gases und/oder als Ammoniakwasser, insbesondere in Form des Gases, eingesetzt werden. In diesem Zusammenhang kann die zu behandelnde und an ihrer Oberfläche oxidierte Aktivkohle einem Ammoniak- bzw. NH₃-Gasstrom bzw. einem NH₃-haltigen Gasstrom unter entsprechender Erwärmung ausgesetzt werden.

Was die Modifizierung bzw. Funktionalisierung der an ihrer Oberfläche oxidierten Aktivkohle mit Stickstoff weiterhin anbelangt, so kann diese im Rahmen des erfindungsgemäßen Verfahrens durch Reaktion, insbesondere chemische Reaktion, vorzugsweise unter Ausbildung kovalenter Bindungen, des Stickstoffmodifizierungsreagenzes ("SMR") mit der an ihrer Oberfläche oxidierten Aktivkohle, insbesondere mit den sauerstoffhaltigen funktionellen Gruppen an der Oberfläche der Aktivkohle, erfolgen. In diesem Zusammenhang kann es erfindungsgemäß vorgesehen sein, dass die Modifizierung der an ihrer Oberfläche oxidierten Aktivkohle mit Stickstoff unter Ausbildung stickstoffhaltiger funktioneller Gruppen, insbesondere ausgewählt aus der Gruppe von Aminen, insbesondere primären, sekundären, tertiären und quartären Aminen, Iminen und Azinen sowie deren Kombinationen erfolgt, insbesondere können Amin-, Imin-, Azin-, Pyrrol-, Nitril-, Nitro-, Nitroso-, Pyridin-, Imid-, Amid-, Lactam- und/oder Pyridongruppen sowie deren Kombinationen, ausgebildet werden. Erfindungsgemäß kann somit zumindest zunächst eine chemische Anbindung von Stickstoff unter Ausbildung stickstoffhaltiger funktionellen Gruppen vorliegen, wobei die chemisch Anbindung insbesondere an der Oberfläche der zuvor oxidierten Aktivkohle lokalisiert ist und insbesondere aufgrund einer chemischen Reaktion unter Ausbildung kovalenter Bindungen mit den zuvor gebildeten sauerstoffhaltigen funktionellen Gruppen resultiert.

Erfindungsgemäß kann es aber auch vorgesehen sein, dass die Modifizierung der an ihrer Oberfläche oxidierten Aktivkohle mit Stickstoff unter Integration und/oder Einbau, insbesondere unter Ausbildung chemischer Bindungen, vorzugsweise unter Ausbildung kovalenter chemischer Bindungen, insbesondere zwischen Stickstoff einerseits und Kohlenstoff andererseits, in das Kohlenstoffgerüst und/oder in die Kohlenstoffmatrix der an ihrer Oberfläche oxidierten Aktivkohle erfolgt. Auf diese Weise wird der Stickstoff sozusagen direkt in das Kohlenstoffgerüst der Aktivkohle integriert bzw. eingebaut. Dies entspricht einer Dotierung mit Stickstoff (N-Dotierung). Die Integration von Stickstoff in das Kohlenstoffgerüst kann dabei ausgehend von der zuvor beschriebenen Anbindung des Stickstoffs bzw. des Stickstoffmodifizierungsreagenzes ("SMR") an die sauerstoffhaltigen funktionellen Gruppen erfolgen, insbesondere im Rahmen einer nachfolgend noch spezifizierten thermischen Behandlung, welche ausgehend von den resultierenden stickstoffhaltigen funktionellen Gruppen zu einer Integration des Stickstoffs in das Kohlenstoffgerüst der Aktivkohle insbesondere auf Basis einer Pyrolyse führt.

Was die erfindungsgemäße Verfahrensführung weiterhin anbelangt, so ist es im Rahmen der vorliegenden Erfindung vorgesehen, dass die Modifizierung der an ihrer Oberfläche oxidierten Aktivkohle mit Stickstoff unter Erwärmen erfolgt, insbesondere auf Temperaturen oberhalb der Zersetzungstemperatur des Stickstoffmodifizierungsreagenzes ("SMR"). In diesem Zusammenhang kann die Modifizierung bzw. Funktionalisierung der an ihrer Oberfläche oxidierten Aktivkohle mit Stickstoff unter solchen Temperaturen erfolgen, dass eine Reaktion des Stickstoffmodifizierungsreagenzes ("SMR") mit der an ihrer Oberfläche oxidierten Aktivkohle, insbesondere mit den sauerstoffhaltigen funktionellen Gruppen an der Oberfläche der Aktivkohle, erfolgt. Erfindungsgemäß wird diesbezüglich derart vorgegangen, dass die Modifizierung bzw. Funktionalisierung der an ihrer Oberfläche oxidierten Aktivkohle mit Stickstoff im Temperaturbereich von 200 °C bis 1.200 °C, insbesondere 300 °C bis 1.000 °C, vorzugsweise 500 °C bis 950 °C, durchgeführt wird. Was die Zeitdauer der Wärmebehandlung anbelangt, so kann es erfindungsgemäß zudem vorgesehen sein, dass die Modifizierung bzw. Funktionalisierung der an ihrer Oberfläche oxidierten Aktivkohle mit Stickstoff für eine Zeitdauer im Bereich von 0,1 Stunden bis 15 Stunden, insbesondere 0,2 Stunden bis 10 Stunden, vorzugsweise 0,5 Stunden bis 8 Stunden, durchgeführt wird. Insbesondere kann in Bezug auf die Verwendung von Harnstoff als Stickstoffmodifizierungsreagenz ("SMR") bei Temperaturen oberhalb von 180 °C verfahren werden, wobei die vorgenannte Temperatur der Zersetzungstemperatur von Harnstoff entspricht.

Was die zur Anbindung des Stickstoffmodifizierungsreagenzes ("SMR") an die sauerstoffhaltigen Gruppen zur Ausbildung der stickstoffhaltigen funktionellen Gruppen bzw. zur Integration des Stickstoffs in das Kohlenstoffgerüst bzw. -gitter durchgeführte Wärmebehandlung der an ihrer Oberfläche oxidierten Aktivkohle gemäß einer weiteren bevorzugten Ausführungsform weiterhin anbelangt, so kann es erfindungsgemäß vorgesehen sein, dass die Modifizierung der an ihrer Oberfläche oxidierten Aktivkohle mit Stickstoff unter Erwärmen in Form einer einstufigen Wärmebehandlung erfolgt.

Diesbezüglich kann es insbesondere vorgesehen sein, dass die Modifizierung bzw. Funktionalisierung der an ihrer Oberfläche oxidierten Aktivkohle mit Stickstoff unter Erwärmen auf einen Temperaturbereich von 300 °C bis 700 °C, insbesondere 400 °C bis 600 °C, vorzugsweise 400 °C bis 550 °C, durchgeführt wird, insbesondere für eine Zeitdauer im Bereich von 0,1 Stunden bis 15 Stunden, bevorzugt 0,2 Stunden bis 10 Stunden, vorzugsweise 0,5 Stunden bis 8 Stunden. Auf diese Weise werden insbesondere stickstoffhaltige funktionelle Gruppen, wie sie zuvor definiert worden sind, ausgebildet.

Erfindungsgemäß kann es auch vorgesehen sein, dass die Modifizierung der an ihrer Oberfläche oxidierten Aktivkohle mit Stickstoff unter Erwärmen auf einen Temperaturbereich von 750 °C bis 1.200 °C, insbesondere 800 °C bis 1.100 °C, vorzugsweise 850 °C bis 1.050 °C, durchgeführt wird. Diesbezüglich kann insbesondere für eine Zeitdauer im Bereich von 0,1 Stunden bis 15 Stunden, insbesondere 0,2 Stunden bis 10 Stunden, vorzugsweise 0,5 Stunden bis 8 Stunden, verfahren werden. Im Rahmen der zuvor beschriebenen Wärmebehandlung erfolgt insbesondere eine Integration bzw. ein Einbau des Stickstoffs in das Kohlenstoffgerüst bzw. die Kohlenstoffmatrix der an ihrer Oberfläche oxidierten Aktivkohle, insbesondere wie zuvor definiert. Auf Basis dieser Verfahrensführung mit einer Wärmebehandlung unter höheren Temperaturen erfolgt somit vorrangig eine Immobilisierung des Stickstoffs aufgrund einer chemischen Anbindung bzw. Integration von Stickstoff an bzw. in das Kohlenstoffgerüst bzw. Kohlenstoffgitter der Aktivkohle, wobei auch diesbezüglich - ohne sich auf diese Theorie beschränken bzw. festlegen zu wollen - zunächst stickstoffhaltige funktionelle Gruppen gebildet werden können, welche nachfolgend zur Überführung des Stickstoffs in die Kohlenstoffstruktur gewissermaßen thermisch bzw. auf Basis von Pyrolyse zersetzt werden, so dass im Endprodukt reaktiver bzw. katalytischer Stickstoff direkt in das Kohlenstoffgerüst der so behandelten Aktivkohle eingebaut bzw. inkorporiert vorliegt.

Gemäß einer weiteren erfindungsgemäß bevorzugten Ausführungsform kann die Modifizierung bzw. Funktionalisierung der an ihrer Oberfläche oxidierten Aktivkohle mit Stickstoff auch unter Erwärmen in Form einer mehrstufigen, insbesondere zweistufigen Wärmebehandlung erfolgen.

In diesem Zusammenhang kann es erfindungsgemäß insbesondere vorgesehen sein, dass die Modifizierung der an ihrer Oberfläche oxidierten Aktivkohle mit Stickstoff in einer ersten Wärmebehandlung unter Erwärmen auf einen Temperaturbereich von 300 °C bis 700 °C, insbesondere 400 °C bis 600 °C, vorzugsweise 400 °C bis 550 °C, und einer nachfolgenden zweiten Wärmebehandlung unter Erwärmen auf einen Temperaturbereich von 750 °C bis 1.200 °C, insbesondere 800 °C bis 1.100 °C, vorzugsweise 850 °C bis 1.050 °C, durchgeführt wird. Insbesondere können dabei die jeweiligen Wärmebehandlungen, unabhängig voneinander, für eine Zeitdauer im Bereich von 0,1 Stunden bis 15 Stunden, insbesondere 0,2 Stunden bis 10 Stunden, vorzugsweise 0,5 Stunden bis 8 Stunden, durchgeführt werden. Insbesondere werden auf diese Weise im ersten Schritt die stickstoffhaltigen funktionellen Gruppen gebildet, welche dann im zweiten Schritt unter Pyrolyse zersetzt werden, wobei der Stickstoff in das Kohlenstoffgerüst überführt bzw. eingebaut wird.

Die Temperatur der Wärmebehandlung hat somit einen signifikanten Einfluss auf die chemische Konstitution des in die Aktivkohle eingebrachten Stickstoffs. Bei niedrigen Temperaturen der Wärmebehandlung, wie zuvor definiert, resultiert vorrangig die Bildung von stickstoffhaltigen funktionellen Gruppen, und bei höheren Temperaturen, wie zuvor definiert, erfolgt insbesondere bzw. vorrangig ein Einbau bzw. eine Integration des Stickstoffs in die Gerüststruktur der Aktivkohle.

In diesem Zusammenhang kann es auch vorgesehen sein, dass im Anschluss an die Modifizierung mit Stickstoff eine Aufreinigung und/oder Trocknung der erhaltenen Aktivkohle erfolgt. In diesem Zusammenhang kann die Aufreinigung mittels mindestens eines Waschvorganges in einer Flüssigkeit, insbesondere Wasser, erfolgen. Zudem kann eine Trocknung unter Erwärmung der mit Stickstoff ausgerüsteten Aktivkohle, insbesondere auf Temperaturen im Bereich von 40 °C bis 200 °C, insbesondere 50 °C bis 150 °C, vorzugsweise 60 °C bis 120 °C, erfolgen können. Durch den Aufreinigungs- bzw. Waschvorgang werden insbesondere auch Verbrennungsrückstände von der mit Stickstoff modifizierten Aktivkohle entfernt.

Aufgrund der erfindungsgemäßen Verfahrensführung kann der Stickstoffgehalt der behandelten Aktivkohle signifikant gesteigert werden, wobei für das erhaltene und mit Stickstoff modifizierte Produkt der Gehalt an flüchtigen Bestandteile ("fB") der Aktivkohle als Maß auch für den Gehalt an Stickstoffgruppen nach erfolgter Stickstoffmodifizierung bzw. -funktionalisierung herangezogen werden kann, insbesondere im Hinblick auf die zuvor definierten stickstoffhaltigen funktionellen Gruppen: So kann die mit Stickstoff ausgerüstete Aktivkohle einen Gehalt an flüchtigen Bestandteilen ("fB"), bezogen auf das Trockengewicht der mit Stickstoff ausgerüsteten Aktivkohle, von mindestens 0,1 Gew.-%, insbesondere mindestens 0,2 Gew.-%, vorzugsweise mindestens 0,3 Gew.-%, bevorzugt mindestens 0,5 Gew.-%, besonders bevorzugt mindestens 1 Gew.-%, ganz besonders bevorzugt mindestens 2 Gew.-%, und/oder im Bereich von 0,1 Gew.-% bis 20 Gew.-%, insbesondere 0,2 Gew.-% bis 15 Gew.-%, vorzugsweise 0,3 Gew.-% bis 12 Gew.-%, bevorzugt 0,5 Gew.-% bis 10 Gew.-%, besonders bevorzugt 1 Gew.-% bis 10 Gew.-%, aufweisen. Auch diesbezüglich können die flüchtigen Bestandteile ("fB") auf Basis der Norm ISO 562:1981 bzw. unter Erwärmen für 7 Minuten auf eine Temperatur von 900 °C unter Inertatmosphäre bestimmt werden, wobei insbesondere von der Trockensubstanz ausgegangen wird.

Darüber hinaus weist die mit Stickstoff ausgerüstete Aktivkohle einen Stickstoffgehalt (d. h. Gesamtstickstoffgehalt), bezogen auf das Trockengewicht der mit Stickstoff ausgerüsteten Aktivkohle, von mindestens 2 Gew.-% auf. In diesem Zusammenhang sollten mindestens 50 %, insbesondere mindestens 60 %, vorzugsweise mindestens 70 %, bevorzugt mindestens 80 % des Stickstoffs, bezogen auf den Gesamtstickstoffgehalt, in der mit Stickstoff ausgerüsteten Aktivkohle chemisch gebunden und/oder integriert vorliegen und/oder nicht in Form von flüchtigen Bestandteilen ("fB") in der mit Stickstoff ausgerüsteten Aktivkohle vorliegen. Gleichermaßen sollten in diesem Zusammenhang 50 % bis 99,9 %, insbesondere 60 % bis 99 %, vorzugsweise 70 % bis 95 %, bevorzugt 80 % bis 90 %, des Stickstoffs, bezogen auf den Gesamtstickstoffgehalt, in der mit Stickstoff ausgerüsteten Aktivkohle chemisch gebunden und/oder integriert vorliegen und/oder nicht in Form von flüchtigen Bestandteilen ("fB") in der mit Stickstoff ausgerüsteten Aktivkohle vorliegen. Mit anderen Worten sollte der Stickstoff auf Basis der obigen Ausführungen bzw. der obigen Mengen in das Kohlenstoffgerüst bzw. -gitter der Aktivkohle integriert vorliegen, wobei dann der restliche Anteil an Stickstoff in Form von stickstoffhaltigen funktionellen Gruppen vorliegt, insbesondere wie zuvor definiert. Hierdurch wird eine besonders gute katalytische Aktivität bzw. Reaktivität bei gleichzeitig hervorragender Beständigkeit der Ausrüstung mit Stickstoff erreicht.

In diesem Zusammenhang werden im Allgemeinen die höheren Werte für den in das Kohlenstoffgerüst bzw. -gitter der Aktivkohle integrierten Stickstoff erreicht, wenn die Modifizierung der an ihrer Oberfläche oxidierten Aktivkohle mit Stickstoff unter Erwärmen auf einen Temperaturbereich von 750 °C bis 1.200 °C, insbesondere wie zuvor definiert, durchgeführt wird. Der Stickstoff liegt dann allenfalls nur zu einem geringen Anteil in Form von stickstoffhaltigen funktionellen Gruppen vor. Dagegen werden im Allgemeinen geringere Werte für den in das Kohlenstoffgerüst bzw. -gitter der Aktivkohle integrierten Stickstoff erreicht, wenn die Modifizierung der an ihrer Oberfläche oxidierten Aktivkohle mit Stickstoff unter Erwärmen auf einen Temperaturbereich von 300 °C bis 700 °C, insbesondere wie zuvor definiert, durchgeführt wird. Wie zuvor erläutert, liegt der Stickstoff dann zu einem größeren Anteil in Form von stickstoffhaltigen funktionellen Gruppen vor. Hierdurch kann insbesondere eine verbesserte Abbauleistung gegenüber bestimmten Substanzen, wie insbesondere Formaldehyd, erreicht werden.

Weiterhin kann die mit Stickstoff ausgerüstete erfindungsgemäße Aktivkohle einen Gehalt an in das Kohlenstoffgerüst eingebautem bzw. integriertem (d. h. sozusagen immobilisiertem) Stickstoff, bezogen auf das Trockengewicht der mit Stickstoff ausgerüsteten Aktivkohle, von mindestens 0,05 Gew.-%, insbesondere mindestens 0,1 Gew.-%, vorzugsweise mindestens 0,2 Gew.-%, bevorzugt mindestens 0,3 Gew.-%, besonders bevorzugt mindestens 0,5 Gew.-%, ganz besonders bevorzugt mindestens 1 Gew.-%, bzw. im Bereich von 0,05 Gew.-% bis 30 Gew.-%, insbesondere 0,1 Gew.-% bis 25 Gew.-%, vorzugsweise 0,2 Gew.-% bis 20 Gew.-%, bevorzugt 0,5 Gew.-% bis 15 Gew.-%, aufweisen.

In diesem Zusammenhang kann der jeweilige Stickstoffgehalt der erfindungsgemäßen Aktivkohlen mit an sich bekannten Methoden bestimmt werden. Der Gesamtstickstoffgehalt kann mittels an sich bekannter Elementaranalyse bestimmt werden, während die Ermittlung der flüchtigen Bestandteile ("fB") gemäß der ISO 562:1981 erfolgen kann. Aus der Differenz von mittels Elementaranalyse bestimmtem Gesamtstickstoffgehalt einerseits und gemäß der ISO 562:1981 bestimmtem Gehalt an flüchtigen Bestandteilen (d. h. flüchtigen stickstoffhaltigen funktionellen Gruppen) kann dann der Gehalt an immobilisiertem bzw. in das Kohlenstoffgerüst eingebautem Stickstoff ermittelt werden.

Nachfolgend werden weitere charakteristische Eigenschaften bzw. Parameter der mit dem erfindungsgemäßen Verfahren erhältlichen Aktivkohle definiert. Die nachfolgenden Parameterangaben bezüglich der im Rahmen des erfindungsgemäßen Verfahrens erhältlichen stickstoffmodifizierten bzw. stickstofffunktionalisierten Aktivkohle werden dabei mit genormten oder explizit angegebenen Bestimmungsverfahren oder mit dem Fachmann an sich geläufigen Bestimmungsmethoden bestimmt. Insbesondere die Parameterangaben betreffend die Charakterisierung der Porosität, der Porengrößenverteilung und anderer Adsorptionseigenschaften ergeben sich im Allgemeinen jeweils aus dem betreffenden Stickstoffsorptionsisothermen der betreffenden Aktivkohle bzw. der vermessenen Produkte.

Insbesondere wird im Rahmen der vorliegenden Erfindung eine mit Stickstoff ausgerüstete Aktivkohle bzw. eine stickstoffmodifizierte Aktivkohle erhalten, welche ein Gesamtporenvolumen, insbesondere ein Gesamtporenvolumen nach Gurvich, im Bereich von 0,4 bis 4 cm³/g, insbesondere 0,5 bis 3,5 cm³/g, vorzugsweise 0,6 bis 3 cm³/g, besonders bevorzugt 0,7 bis 2,5 cm³/g, aufweist. In diesem Zusammenhang sollten 30 % bis 99 %, insbesondere 40 % bis 99 %, vorzugsweise 50 % bis 95 %, des Gesamtporenvolumens, insbesondere des Gesamtporenvolumens nach Gurvich, der mit Stickstoff ausgerüsteten Aktivkohle, durch Poren mit Porendurchmessern von ≤ 50 nm, insbesondere durch Mikro- und/oder Mesoporen, gebildet werden. Gleichermaßen sollten in diesem Zusammenhang 10 % bis 85 %, insbesondere 20 % bis 80 %, vorzugsweise 30 % bis 75 %, des Gesamtporenvolumens, insbesondere des Gesamtporenvolumens nach Gurvich, der mit Stickstoff ausgerüsteten Aktivkohle, durch Poren mit Porendurchmessern im Bereich von 2 nm bis 50 nm, insbesondere durch Mesoporen, gebildet werden.

Was die Bestimmung des Gesamtporenvolumens nach Gurvich anbelangt, so handelt es sich um eine dem Fachmann auf diesem Gebiet an sich bekannte Mess-/Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie *auf* S. Lowell et al., Characterization of Porous Solids and Powders: Surface Area Pore Size and Density, Kluwer Academic Publishers, Article Technology Series, Seiten 111 ff.

Insbesondere kann es im Rahmen der vorliegenden Erfindung vorgesehen sein, dass die mit Stickstoff ausgerüstete Aktivkohle ein durch Poren mit Porendurchmessern ≤ 2 nm gebildetes Porenvolumen, insbesondere Mikroporenvolumen nach Carbon Black, insbesondere nach Auswertung mittels *t-plot,* im Bereich von 0,05 bis 2 cm³/g, insbesondere 0,1 bis 1,5 cm³/g, vorzugsweise 0,2 bis 1,1 cm³/g, besonders bevorzugt 0,3 bis 1 cm³/g, aufweist. Gleichermaßen kann es vorgesehen sein, dass 10 % bis 95 %, insbesondere 20 % bis 95 %, vorzugsweise 30 % bis 90 %, des Gesamtporenvolumens der mit Stickstoff ausgerüsteten Aktivkohle durch Poren mit Porendurchmessern von ≤ 2 nm, insbesondere durch Mikroporen, gebildet werden.

Die Bestimmungsmethode nach Carbon Black ist dem Fachmann an sich bekannt, so dass es diesbezüglich keiner weitergehenden Einzelheiten bedarf. Zudem kann zu weitergehenden Einzelheiten der Bestimmung der Porenoberfläche und des Porenvolumens nach Carbon Black beispielsweise verwiesen werden auf R. W. Magee, Evaluation of the External Surface Area of Carbon Black by Nitrogen Adsorption, Presented at the Meeting of the Rubber Division of the American Chem. Soc., October 1994, z. B. referiert in: Quantachrome Instruments, AUTOSORB-1, AS1 WinVersion 1.50, Operating Manual, OM, 05061, Quantachrome Instruments 2004, Florida, USA, Seiten 71 ff.

Im Rahmen der vorliegenden Erfindung ist es gleichermaßen vorteilhaft, wenn die stickstoffmodifizierte bzw. stickstofffunktionalisierte mit Stickstoff ausgerüstete Aktivkohle einen mittleren Porendurchmesser im Bereich von 1 bis 60 nm, insbesondere 1 bis 55 nm, bevorzugt 1,5 bis 50 nm, besonders bevorzugt 2 bis 45 nm, aufweist.

Um die Sorptionseigenschaften der mit dem erfindungsgemäßen Verfahren erhältlichen mit Stickstoff ausgerüsteten Aktivkohle zu erhalten bzw. zu gewährleisten, sollte die mit Stickstoff ausgerüstete Aktivkohle eine spezifische BET-Oberfläche im Bereich von 500 m²/g bis 3.500 m²/g, insbesondere 600 bis 3.000 m²/g, vorzugsweise 700 bis 2.750 m²/g, besonders bevorzugt 800 bis 2.500 m²/g, aufweisen.

Die Bestimmung der spezifischen Oberfläche gemäß BET ist dem Fachmann grundsätzlich als solche bekannt, so dass diesbezüglich keine weitergehenden Einzelheiten ausgeführt zu werden brauchen. Sämtliche BET-Oberflächenangaben beziehen sich auf die Bestimmung gemäß ASTM D6556-04. Im Rahmen der vorliegenden Erfindung wird zur Bestimmung der BET-Oberfläche - im Allgemeinen und sofern nachfolgend nicht ausdrücklich abweichend angegeben - die so genannte MultiPoint-BET-Bestimmungsmethode (MP-BET) in einem Partialdruckbereich p/p₀ von 0,05 bis 0,1 angewendet.

In Bezug auf weitergehende Einzelheiten zu der Bestimmung der BET-Oberfläche bzw. zu der BET-Methode kann auf die vorgenannte ASTM D6556-04 sowie auf Römpp Chemielexikon, 10. Auflage, Georg Thieme Verlag, Stuttgart/New York, Stichwort: "BET-Methode", einschließlich der dort referierten Literatur, und auf Winnacker-Küchler (3. Auflage), Band 7, Seiten 93 ff. sowie auf Z. Anal. Chem. 238, Seiten 187 bis 193 (1968), verwiesen werden.

Des Weiteren ist es von Vorteil, wenn die stickstoffmodifizierte bzw. stickstofffunktionalisierte bzw. die mit Stickstoff ausgerüstete Aktivkohle eine durch Mikroporen gebildete Oberfläche von 400 bis 2.500 m²/g, insbesondere 500 bis 2.300 m²/g, vorzugsweise 600 bis 2.100 m²/g, besonders bevorzugt 700 bis 1.900 m²/g, aufweist.

Die stickstoffmodifizierte bzw. stickstofffunktionalisierte bzw. die mit Stickstoff ausgerüstete Aktivkohle sollte zudem eine Dichte von 1,1 bis 3,5 g/ml, insbesondere von 1,5 bis 3 g/ml, vorzugsweise von 1,75 bis 2,75 g/ml, bevorzugt von 2 bis 2,5 g/ml, aufweisen.

Gleichermaßen sollte die stickstoffmodifizierte bzw. stickstofffunktionalisierte bzw. die mit Stickstoff ausgerüstete Aktivkohle eine Schüttdichte von 0,1 bis 1,5 g/ml, insbesondere von 0,15 bis 1 g/ml, vorzugsweise von 0,2 bis 0,8 g/ml, bevorzugt von 0,3 bis 0,6 g/ml, aufweisen.

Zudem ist es von Vorteil, wenn die stickstoffmodifizierte bzw. stickstofffunktionalisierte bzw. mit Stickstoff ausgerüstete Aktivkohle eine Druck- und/oder Berstfestigkeit (Gewichtsbelastbarkeit) pro Aktivkohlekorn, insbesondere pro Aktivkohlekügelchen, von mindestens 5 Newton, insbesondere mindestens 10 Newton, vorzugsweise mindestens 15 Newton, bevorzugt mindestens 20 Newton, aufweist und/oder dass die Aktivkohle eine Druck- und/oder Berstfestigkeit (Gewichtsbelastbarkeit) pro Aktivkohlekorn, insbesondere pro Aktivkohlekügelchen, im Bereich von 5 bis 50 Newton, insbesondere 10 bis 45 Newton, vorzugsweise 15 bis 40 Newton, aufweist.

Was darüber hinaus die im Rahmen des erfindungsgemäßen Verfahrens eingesetzte Aktivkohle bzw. Ausgangsaktivkohle anbelangt, welche zunächst an ihrer Oberfläche oxidiert und nachfolgend mit Stickstoff modifiziert bzw. ausgerüstet wird, anbelangt, so kann diesbezüglich eine Vielzahl unterschiedlicher Aktivkohlen, beispielsweise mit unterschiedlicher Porenstruktur im Hinblick auf die Verteilung von Mikro-, Meso- und Makroporen, eingesetzt werden. Insbesondere können kommerziell erhältliche bzw. handelsübliche Aktivkohlen eingesetzt werden. Im Rahmen der vorliegenden Erfindung zum Einsatz kommende Aktivkohlen werden beispielsweise von der Blücher GmbH, Erkrath, Deutschland oder der AdsorTech GmbH, Premnitz, Deutschland, vertrieben.

Was die erfindungsgemäß eingesetzte Aktivkohle bzw. Ausgangsaktivkohle weiterhin anbelangt, so wird diesbezüglich eine kugelförmige Aktivkohle verwendet. Die eingesetzte Aktivkohle bzw. Ausgangsaktivkohle in Form von Kugelkohle kann dabei nach bekannten Verfahren des Standes erhalten werden: Üblicherweise werden zu diesem Zweck kugelförmig sulfonierte organische Polymere, insbesondere auf Basis von divinylbenzolvernetztem Polystyrol, carbonisiert und anschließend zu der betreffenden Aktivkohle aktiviert. Für weitergehende diesbezügliche Einzelheiten kann beispielsweise auf die Druckschriften DE 43 28 219 A1, DE 43 04 026 A1, DE 196 00 237 A1 sowie EP 1 918 022 A1 bzw. auf die parallele, zu derselben Patentfamilie gehörende US 7,737,038 B2 verwiesen werden.

Insbesondere wird im Rahmen der vorliegenden Erfindung eine Aktivkohle als Ausgangsmaterial eingesetzt, welche Partikelgrößen, insbesondere Teilchendurchmesser, im Bereich von 0,001 bis 2 mm, insbesondere 0,01 bis 1 mm, bevorzugt 0,05 bis 0,8 mm, vorzugsweise 0,1 bis 0,7 mm, besonders bevorzugt 0,15 bis 0,6 mm, aufweist. Dabei sollten, bezogen auf die Aktivkohle, mindestens 80 Gew.-%, insbesondere mindestens 90 Gew.-%, vorzugsweise mindestens 95 Gew.-% der eingesetzten Aktivkohle Partikelgrößen, insbesondere Teilchendurchmesser, in den vorgenannten Bereichen aufweisen. Weiterhin ist es erfindungsgemäß vorteilhaft, wenn die als Ausgangsmaterial eingesetzte Aktivkohle mittlere Partikelgrößen (D50), insbesondere mittlere Teilchendurchmesser (D50), im Bereich von 0,01 bis 1 mm, insbesondere 0,05 bis 0,8 mm, bevorzugt 0,1 bis 0,6 mm, vorzugsweise 0,15 bis 0,5 mm, besonders bevorzugt 0,2 bis 0,4 mm, aufweist. Die entsprechenden Teilchengrößen bzw. -durchmesser können beispielsweise auf Basis der Methode nach ASTM D2862-97/04 bestimmt werden. Zudem können die vorgenannten Größen mit Bestimmungsmethoden auf Basis einer Siebanalyse, auf Basis von Röntgenbeugung, Laserdiffraktometrie oder dergleichen bestimmt werden. Die jeweiligen Bestimmungsmethoden sind dem Fachmann als solche wohlbekannt, so dass es diesbezüglich keiner weiteren Ausführungen bedarf. Die angegebenen Parameter der Ausgangaktivkohle finden sich in entsprechender Weise auch in der stickstoffmodifizierten bzw. stickstofffunktionalisierten Aktivkohle wieder.

Das erfindungsgemäße Verfahren ist mit einer Vielzahl von Vorteilen verbunden, wie sie bereits zuvor angeführt sind. Aufgrund der herausragenden Sorptionseigenschaften der mit dem erfindungsgemäßen Verfahren erhaltenen bzw. erhältlichen Aktivkohle ist ein breites Einsatz- bzw. Verwendungsspektrum möglich, wie es nachfolgend noch im Detail angeführt ist.

Weiterer Gegenstand der vorliegenden Erfindung - gemäß einem **zweiten** Aspekt der vorliegenden Erfindung - ist die stickstoffmodifizierte bzw. stickstofffunktionalisierte Aktivkohle mit katalytischen und/oder reaktiven Eigenschaften, vorzugsweise mit Stickstoff als katalytisch aktivem Heteroatom, welche gemäß dem zuvor beschriebenen Verfahren nach der Erfindung erhältlich ist.

Gleichermaßen betrifft die vorliegende Erfindung gemäß diesem erfindungsgemäßen Aspekt die stickstoffmodifizierte bzw. stickstofffunktionalisierte Aktivkohle nach der Erfindung mit katalytischen bzw. reaktiven Eigenschaften, vorzugsweise mit Stickstoff als katalytisch aktivem Heteroatom. Die stickstoffmodifizierte bzw. stickstofffunktionalisierte Aktivkohle nach der Erfindung ist durch Oberflächenoxidation einer als Ausgangsmaterial eingesetzten Aktivkohle ("Ausgangsaktivkohle") unter Verwendung bzw. in Gegenwart mindestens eines Oxidationsreagenzes ("OR") und nachfolgender Modifizierung bzw. Funktionalisierung mit Stickstoff der auf diese Weise erhaltenen, an ihrer Oberfläche oxidierten Aktivkohle unter Verwendung bzw. in Gegenwart mindestens eines Stickstoffmodifizierungsreagenzes ("SMR") erhältlich.

Zudem betrifft die vorliegende Erfindung gemäß diesem Erfindungsaspekt auch die stickstoffmodifizierte bzw. stickstofffunktionalisierte Aktivkohle als solche nach der Erfindung mit katalytischen bzw. reaktiven Eigenschaften, vorzugsweise mit Stickstoff als katalytisch aktivem Heteroatom. Die erfindungsgemäße Aktivkohle zeichnet sich dadurch aus, dass Stickstoff unter Ausbildung chemischer Bindungen, vorzugsweise unter Ausbildung kovalenter chemischer Bindungen, an die Aktivkohle gebunden ist.

Was die erfindungsgemäße Aktivkohle bzw. die mit Stickstoff ausgerüstete Aktivkohle nach der Erfindung als solche weiterhin anbelangt, so kann es erfindungsgemäß vorgesehen sein, dass Stickstoff in Form mindestens einer stickstoffhaltigen funktionellen Gruppe, insbesondere ausgewählt aus der Gruppe von Aminen, insbesondere primären, sekundären, tertiären und quartären Aminen, Iminen und Azinen sowie deren Kombinationen erfolgt. Insbesondere kann der Stickstoff in Form von Amin-, Imin-, Azin-, Pyrrol-, Nitril-, Nitro-, Nitroso-, Pyridin-, Imid-, Amid-, Lactam- und Pyridongruppen sowie deren Kombinationen, vorliegen. Dabei ist der Stickstoff vorzugsweise an der stickstoffmodifizierten Aktivkohle gebunden, vorzugsweise chemisch und/oder kovalent gebunden.

Gleichermaßen kann es erfindungsgemäß vorgesehen sein, dass in Bezug auf die stickstoffmodifizierte Aktivkohle nach der Erfindung Stickstoff in das Kohlenstoffgerüst bzw. in die Kohlenstoffmatrix der stickstoffmodifizierten bzw. stickstofffunktionalisierten Aktivkohle vorzugsweise unter Ausbildung kovalenter chemischer Bindungen, insbesondere zwischen Stickstoff einerseits und Kohlenstoff andererseits, integriert bzw. eingebaut ist.

Im Rahmen der vorliegenden Erfindung kann es vorgesehen sein, dass die stickstoffmodifizierte Aktivkohle einen Gehalt an flüchtigen Bestandteilen ("fB"), bezogen auf das Trockengewicht der mit Stickstoff ausgerüsteten Aktivkohle, von mindestens 0,1 Gew.-%, insbesondere mindestens 0,2 Gew.-%, vorzugsweise mindestens 0,3 Gew.-%, bevorzugt mindestens 0,5 Gew.-%, besonders bevorzugt mindestens 1 Gew.-%, ganz besonders bevorzugt mindestens 2 Gew.-%, und/oder im Bereich von 0,1 Gew.-% bis 20 Gew.-%, insbesondere 0,2 Gew.-% bis 15 Gew.-%, vorzugsweise 0,3 Gew.-% bis 12 Gew.-%, bevorzugt 0,5 Gew.-% bis 10 Gew.-%, besonders bevorzugt 1 Gew.-% bis 10 Gew.-%, aufweist. Wie zuvor angeführt, können die flüchtigen Bestandteile ("fB") als Maß für den Gehalt an Stickstoff im Hinblick auf das Vorliegen in Form von stickstoffhaltigen funktionellen Gruppen, insbesondere wie zuvor definiert, herangezogen werden. Für die diesbezüglichen Bestimmungsverfahren kann auf obige Ausführungen verwiesen werden.

Weiterhin ist es im Rahmen der vorliegenden Erfindung von Vorteil, dass die stickstoffmodifizierte bzw. stickstofffunktionalisierte Aktivkohle einen Stickstoffgehalt, bezogen auf das Trockengewicht der mit Stickstoff ausgerüsteten Aktivkohle, von mindestens 2 Gew.-% aufweist. Diesbezüglich sollten mindestens 50 %, insbesondere mindestens 60 %, vorzugsweise mindestens 70 %, bevorzugt mindestens 80 %, des Stickstoffs, bezogen auf den Gesamtstickstoffgehalt, in der stickstoffmodifizierten bzw. stickstofffunktionalisierten Aktivkohle chemisch gebunden bzw. integriert vorliegen und/oder nicht in Form von flüchtigen Bestandteilen ("fB") in der stickstoffmodifizierten Aktivkohle vorliegen. In diesem Zusammenhang sollten 50 % bis 99,9 %, insbesondere 60 % bis 99 %, vorzugsweise 70 % bis 95 %, bevorzugt 80 % bis 90 %, des Stickstoffs, bezogen auf den Gesamtstickstoffgehalt, in der stickstoffmodifizierten bzw. stickstofffunktionalisierten Aktivkohle chemisch gebunden bzw. integriert vorliegen und/oder nicht in Form von flüchtigen Bestandteilen ("fB") in der stickstoffmodifizierten Aktivkohle vorliegen.

Weiterhin kann die mit Stickstoff ausgerüstete erfindungsgemäße Aktivkohle einen Gehalt an in das Kohlenstoffgerüst eingebautem bzw. integriertem (d. h. sozusagen immobilisiertem) Stickstoff, bezogen auf das Trockengewicht der mit Stickstoff ausgerüsteten Aktivkohle, von mindestens 0,05 Gew.-%, insbesondere mindestens 0,1 Gew.-%, vorzugsweise mindestens 0,2 Gew.-%, bevorzugt mindestens 0,3 Gew.-%, besonders bevorzugt mindestens 0,5 Gew.-%, ganz besonders bevorzugt mindestens 1 Gew.-%, bzw. im Bereich von 0,05 Gew.-% bis 30 Gew.-%, insbesondere 0,1 Gew.-% bis 25 Gew.-%, vorzugsweise 0,2 Gew.-% bis 20 Gew.-%, bevorzugt 0,5 Gew.-% bis 15 Gew.-%, aufweisen.

Insbesondere zeichnet sich die erfindungsgemäße Aktivkohle mit Stickstoffmodifizierung bzw. Stickstofffunktionalisierung auch durch die folgenden Parameter aus; für die diesbezüglichen Bestimmungsverfahren kann gleichermaßen auf obige Ausführungen verwiesen werden:

Erfindungsgemäß sollte die stickstoffmodifizierte Aktivkohle ein Gesamtporenvolumen, insbesondere ein Gesamtporenvolumen nach Gurvich, im Bereich von 0,4 bis 4 cm³/g, insbesondere 0,5 bis 3,5 cm³/g, vorzugsweise 0,6 bis 3 cm³/g, besonders bevorzugt 0,7 bis 2,5 cm³/g, aufweisen.

Diesbezüglich sollten mindestens 30 % bis 99 %, insbesondere 40 % bis 99 %, vorzugsweise 50 % bis 95 %, des Gesamtporenvolumens, insbesondere des Gesamtporenvolumens nach Gurvich, der stickstoffmodifizierten Aktivkohle, durch Poren mit Porendurchmessern von ≤ 50 nm, insbesondere durch Mikro- und/oder Mesoporen, gebildet sein. Insbesondere können dabei 10 % bis 85 %, insbesondere 20 % bis 80 %, vorzugsweise 30 % bis 75 %, des Gesamtporenvolumens, insbesondere des Gesamtporenvolumens nach Gurvich, der stickstoffmodifizierten Aktivkohle durch Poren mit Porendurchmessern im Bereich von 2 nm bis 50 nm, insbesondere durch Mesoporen, gebildet sein.

Weiterhin sollte die stickstoffmodifizierte Aktivkohle erfindungsgemäß ein durch Poren mit Porendurchmessern ≤ 2 nm gebildetes Porenvolumen, insbesondere Mikroporenvolumen nach Carbon Black, insbesondere nach Auswertung mittels *t-plot,* im Bereich von 0,05 bis 2 cm³/g, insbesondere 0,1 bis 1,5 cm³/g, vorzugsweise 0,2 bis 1,1 cm³/g, besonders bevorzugt 0,3 bis 1 cm³/g, aufweisen. Dabei sollten 10 % bis 95 %, insbesondere 20 % bis 95 %, vorzugsweise 30 % bis 90 %, des Gesamtporenvolumens der stickstoffmodifizierten Aktivkohle durch Poren mit Porendurchmessern von ≤ 2 nm, insbesondere durch Mikroporen, gebildet sein.

Des Weiteren sollte die stickstoffmodifizierte Aktivkohle nach der Erfindung einen mittleren Porendurchmesser im Bereich von 1 bis 60 nm, insbesondere 1 bis 55 nm, bevorzugt 1,5 bis 50 nm, besonders bevorzugt 2 bis 45 nm, aufweisen.

Erfindungsgemäß sollte die stickstoffmodifizierte Aktivkohle nach der Erfindung zudem eine spezifische BET-Oberfläche im Bereich von 500 m²/g bis 3.500 m²/g, insbesondere 600 bis 3.000 m²/g, vorzugsweise 700 bis 2.750 m²/g, besonders bevorzugt 800 bis 2.500 m²/g, aufweisen.

Des Weiteren sollte die mit Stickstoff ausgerüstete Aktivkohle eine durch Mikroporen gebildete Oberfläche von 400 bis 2.500 m²/g, insbesondere 500 bis 2.300 m²/g, vorzugsweise 600 bis 2.100 m²/g, besonders bevorzugt 700 bis 1.900 m²/g, aufweisen.

Darüber hinaus sollte die mit Stickstoff ausgerüstete Aktivkohle nach der Erfindung eine Dichte von 1,1 bis 3,5 g/ml, insbesondere von 1,5 bis 3 g/ml, vorzugsweise von 1,75 bis 2,75 g/ml, bevorzugt von 2 bis 2,5 g/ml, aufweisen.

Weiterhin sollte die mit Stickstoff ausgerüstete Aktivkohle nach der Erfindung eine Schüttdichte von 0,1 bis 1,5 g/ml, insbesondere von 0,15 bis 1 g/ml, vorzugsweise von 0,2 bis 0,8 g/ml, bevorzugt von 0,3 bis 0,6 g/ml, aufweisen.

Erfindungsgemäß sollte die mit Stickstoff ausgerüstete Aktivkohle zudem eine Druck- und/oder Berstfestigkeit (Gewichtsbelastbarkeit) pro Aktivkohlekorn, insbesondere pro Aktivkohlekügelchen, von mindestens 5 Newton, insbesondere mindestens 10 Newton, vorzugsweise mindestens 15 Newton, bevorzugt mindestens 20 Newton, aufweisen. Zudem sollte die Aktivkohle eine Druck- und/oder Berstfestigkeit (Gewichtsbelastbarkeit) pro Aktivkohlekorn, insbesondere pro Aktivkohlekügelchen, im Bereich von 5 bis 50 Newton, insbesondere 10 bis 45 Newton, vorzugsweise 15 bis 40 Newton, aufweisen.

Was die stickstoffmodifizierte Aktivkohle weiterhin anbelangt, so kann diese selbsttragend sein bzw. in Form einer insbesondere losen Schüttung vorliegt.

Alternativ ist es aber auch möglich, dass die Aktivkohle auf einem Trägermaterial aufgebracht ist.

In diesem Zusammenhang kann das Trägermaterial gasdurchlässig, insbesondere luftdurchlässig, ausgebildet sein.

Was in diesem Zusammenhang das Trägermaterial als solches anbelangt, so sollte dieses eine Gasdurchlässigkeit, insbesondere Luftdurchlässigkeit, von mindestens 10 1•m⁻²•s⁻¹, insbesondere mindestens 30 1•m⁻²•s⁻¹, vorzugsweise mindestens 50 1•m⁻²•s⁻¹, besonders bevorzugt mindestens 100 1•m⁻²•s⁻¹, ganz besonders bevorzugt mindestens 500 1•m⁻²•s⁻¹, und/oder eine Gasdurchlässigkeit, insbesondere Luftdurchlässigkeit, von bis zu 10.000 1•m⁻²•s⁻¹, insbesondere bis zu 20.000 1•m⁻²•s⁻¹, bei einem Strömungswiderstand von 127 Pa aufweisen.

Gemäß einer Ausführungsform der vorliegenden Erfindung kann das erfindungsgemäß eingesetzte Trägermaterial eine dreidimensionale Struktur aufweisen. Insbesondere kann das erfindungsgemäß eingesetzte Trägermaterial gemäß dieser Ausführungsform als vorzugsweise offenporiger Schaumstoff, besonders bevorzugt als Polyurethanschaumstoff, ausgebildet sein.

Gemäß einer alternativen Ausführungsform dagegen kann das erfindungsgemäß eingesetzte Trägermaterial eine zweidimensionale bzw. flächige Struktur aufweisen. Insbesondere kann bei dieser Ausführungsform das erfindungsgemäß eingesetzte Trägermaterial als vorzugsweise textiles Flächengebilde ausgebildet sein. Beispielsweise kann das Trägermaterial als ein textiles Flächengebilde, vorzugsweise ein luftdurchlässiges Textilmaterial, bevorzugt ein Gewebe, Gewirke, Gestricke, Gelege oder Textilverbundstoff, insbesondere Vlies (Nonwoven), ausgebildet sein. Gleichermaßen kann das Trägermaterial ein Flächengewicht von 5 bis 1.000 g/m², insbesondere 10 bis 500 g/m², bevorzugt 25 bis 450 g/m², aufweisen.

Bei dieser Ausführungsform kann das Trägermaterial ein natürliche Fasern und/oder synthetische Fasern (Chemiefasern) enthaltendes oder hieraus bestehendes textiles Flächengebilde sein. In diesem Zusammenhang können die natürlichen Fasern aus der Gruppe von Wollfasern und Baumwollfasern (CO) ausgewählt sein. Zudem können die synthetischen Fasern ausgewählt sein aus der Gruppe von Polyestern (PES); Polyolefinen, insbesondere Polyethylen (PE) und/oder Polypropylen (PP); Polyvinylchloriden (CLF); Polyvinylidenchloriden (CLF); Acetaten (CA); Triacetaten (CTA); Polyacryl (PAN); Polyamiden (PA), insbesondere aromatischen, vorzugsweise flammfesten Polyamiden; Polyvinylalkoholen (PVAL); Polyurethanen; Polyvinylestern; (Meth-)Acrylaten; Polymilchsäuren (PLA); Aktivkohle; sowie deren Mischungen.

Üblicherweise ist die stickstoffmodifizierte Aktivkohle nach der Erfindung an bzw. auf dem Trägermaterial fixiert. Dies kann beispielsweise mittels Verklebung (z. B. mittels eines Klebstoffs) oder infolge von Eigenklebrigkeit oder Eigenadhäsion, insbesondere des Trägermaterials verwiesen werden.

Die erfindungsgemäße Aktivkohle mit der Stickstoffmodifizierung bzw. Stickstofffunktionalisierung ist mit einer Vielzahl von Vorteilen verbunden, wie sie bereits zuvor angeführt sind.

Weiterer Gegenstand der vorliegenden Erfindung - gemäß einem **dritten** Aspekt der vorliegenden Erfindung - sind auch die erfindungsgemäßen Verwendungen der Aktivkohle nach der Erfindung.

So kann die stickstoffmodifizierte bzw. stickstofffunktionalisierte Aktivkohle zur Herstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich, verwendet werden.

Zudem kann die erfindungsgemäße stickstoffmodifizierte bzw. stickstofffunktionalisierte Aktivkohle zur Herstellung von Schutzbekleidung, insbesondere für den zivilen oder militärischen Bereich, wie Schutzanzügen, Schutzhandschuhe, Schutzschuhwerk, Schutzsocken, Kopfschutzbekleidung und dergleichen, und von Schutzabdeckungen aller Art, vorzugsweise alle vorgenannten Schutzmaterialien für den ABC-Einsatz, verwendet werden.

Dabei weist die erfindungsgemäße stickstoffmodifizierte bzw. stickstofffunktionalisierte Aktivkohle ausgezeichnete Sorptionseigenschaften auf, insbesondere in Bezug auf schwefelhaltige bzw. stickstoffhaltige Gase, wie Schwefelwasserstoffe, insbesondere Schwefelwasserstoff (H₂S), sowie gegenüber Ammoniak (NH₃).

Insbesondere eignet sich die erfindungsgemäße stickstoffmodifizierte bzw. stickstofffunktionalierte Aktivkohle auch zur Verwendung als Sorptionsspeicher für Gase oder Flüssigkeiten. Zudem kann die erfindungsgemäße Aktivkohle mit Stickstofffunktionalisierung bzw. Stickstoffmodifizierung als Katalysator oder Katalysatorträger Verwendung finden. Für die vorgenannten Anwendungen ist die hohe spezifische Oberfläche und die ausgezeichnete Reaktivität bzw. katalytische Aktivität der erfindungsgemäßen stickstoffmodifizierten bzw. stickstofffunktionalisierten Aktivkohle von entscheidender Bedeutung.

Weiterhin kann die erfindungsgemäße stickstoffmodifizierte bzw. stickstofffunktionalisierte Aktivkohle für die chemische Katalyse, insbesondere zur Katalyse chemischer Prozesse und Reaktionen, eingesetzt werden.

Eine weitere Anwendungsmöglichkeit der erfindungsgemäßen stickstoffmodifizierten bzw. stickstofffunktionalisierten Aktivkohle liegt in der Verwendung in oder als Gassensoren oder in Brennstoffzellen.

Darüber hinaus liegt eine weitere Anwendungsmöglichkeit der Aktivkohle nach der Erfindung mit Stickstoffmodifizierung bzw. Stickstofffunktionalisierung in der Verwendung für sorptive, insbesondere adsorptive Anwendungen, insbesondere als vorzugsweise reaktives und/oder katalytisches Adsorbens.

Darüber hinaus eignet sich die erfindungsgemäße Aktivkohle mit Stickstoffmodifizierung bzw. Stickstofffunktionalisierung zur Verwendung für die Gasreinigung bzw. für die Gasaufbereitung.

Eine weitere Verwendung der stickstoffmodifizierten bzw. stickstofffunktionalisierten Aktivkohle nach der Erfindung ist im Rahmen der Entfernung von Schadstoffen, insbesondere gasförmigen Schadstoffen, oder von umweltschädlichen, gesundheitsschädlichen oder toxischen Substanzen oder Gasen zu sehen.

Schließlich eignet sich die erfindungsgemäße stickstoffmodifizierte bzw. stickstofffunktionalisierte Aktivkohle auch für die Verwendung zur Aufbereitung und/oder Bereitstellung von Reinraumatmosphären, insbesondere für die Elektroindustrie, insbesondere für die Halbleiter- oder Chipherstellung.

Darüber hinaus betrifft die vorliegende Erfindung - gemäß einem **vierten** Aspekte der vorliegenden Erfindung - Schutzbekleidung, wie Schutzanzüge, Schutzhandschuhe, Schutzschuhwerk, Schutzsocken Schutzbekleidung und dergleichen, sowie Schutzabdeckungen, vorzugsweise alle vorgenannten Schutzmaterialien für den ABC-Einsatz, welche unter Verwendung der zuvor definierten stickstoffmodifizierten bzw. stickstofffunktionalisierten Aktivkohle nach der Erfindung hergestellt sind bzw. welche die zuvor definierte stickstoffmodifizierte bzw. stickstofffunktionalisierte Aktivkohle nach der Erfindung aufweisen.

Darüber hinaus sind weiterer Gegenstand der vorliegenden Erfindung - gemäß einem fünften Aspekt der vorliegenden Erfindung - Filter und Filtermaterialien, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung der zuvor definierten Aktivkohle nach der Erfindung mit Stickstoffmodifizierung bzw. Stickstofffunktionalisierung bzw. aufweisend die zuvor definierte stickstoffmodifizierte bzw. stickstofffunktionalisierte Aktivkohle nach der Erfindung.

Im Folgenden wird die vorliegende Erfindung anhand von bevorzugte Ausführungsbeispiele darstellenden Zeichnungen bzw. Figurendarstellungen näher erläutert. Im Zusammenhang mit der Erläuterung dieser bevorzugten Ausführungsbeispiele der vorliegenden Erfindung, welche jedoch in Bezug auf die vorliegende Erfindung keinesfalls beschränkend sind, werden auch weitergehende Vorteile, Eigenschaften, Aspekte und Merkmale der vorliegenden Erfindung beschrieben.

In den Figurendarstellungen zeigt:

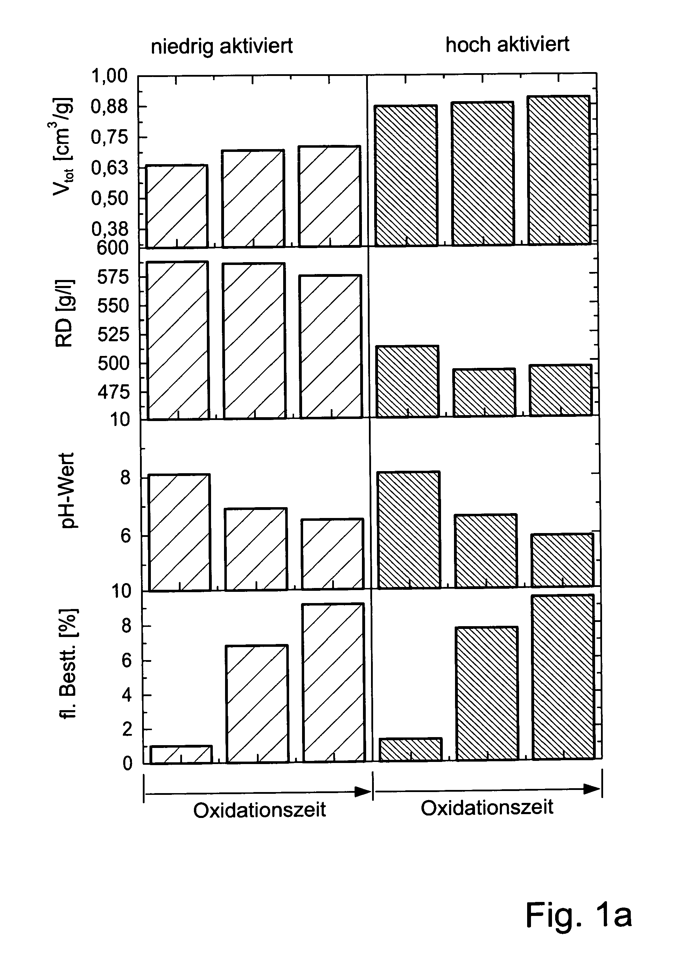

- Fig. 1a: eine grafische Darstellung des Einflusses für die thermische Oxidation der als Ausgangsmaterial eingesetzten Aktivkohle gewählten Oxidationszeit auf verschiedene Parameter bzw. auf die texturellen Eigenschaften der als Intermediat erhaltenen, an ihrer Oberfläche oxidierten Aktivkohle;

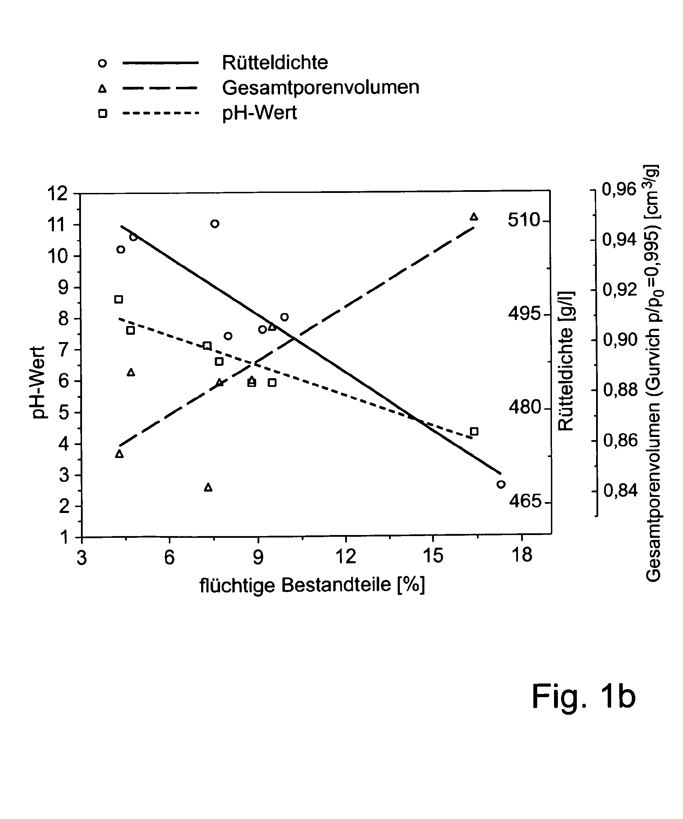

- Fig. 1b: eine grafische Darstellung der Abhängigkeit verschiedener Parameter bzw. der texturellen Eigenschaften der an ihrer Oberfläche oxidierten Aktivkohle von dem Gehalt an flüchtigen Bestandteilen ("fB") der an ihrer Oberfläche oxidierten Aktivkohle als Maß für den Gehalt an sauerstoffhaltigen funktionellen Gruppen bzw. als Maß für den Oxidationsgrad der als Intermediat erhaltenen an ihrer Oberfläche oxidierten Aktivkohle;

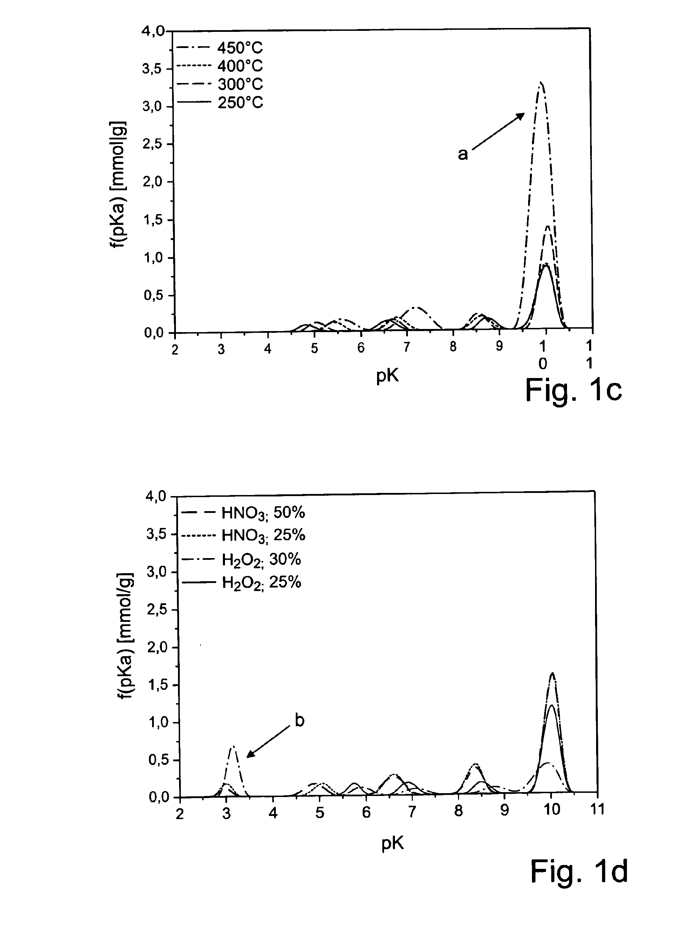

- Fig. 1c: eine grafische Darstellung zur Analyse der chemischen Beschaffenheit der an ihrer Oberfläche oxidierten Aktivkohle im Hinblick auf Basizität und Azidität der gebildeten Oberflächenoxide, wobei die zugrundeliegende Bestimmung mittels potentiometrischer Titration durchgeführt worden ist. Die Figurendarstellung zeigt dabei die Ausbildung von Oberflächenoxiden unter Einsatz von (Luft-)Sauerstoff als Oxidationsreagenz ("OR") unter variablen Oxidationstemperaturen (thermische Oxidation). In der Figur bezeichnet der Buchstabe "a" das basische Oberflächenoxide indizierende Kurvenmaximum;
- Fig. 1d: eine grafische Darstellung zur weiteren Analyse der chemischen Beschaffenheit der gebildeten Oberflächenoxide bzw. der sauerstoffhaltigen funktionellen Gruppen an der Oberfläche der Aktivkohle (Vergleich) nach Maßgabe der Ausführungen in Fig. 1c. Als Oxidationsreagenz ("OR") wurden jedoch unterschiedlich konzentrierte Harnstofflösungen bzw. Wasserstoffperoxid in unterschiedlichen Konzentrationen eingesetzt (chemische Oxidation). In der Figur bezeichnet der Buchstabe "b" das saure Oberflächenoxide indizierende Kurvenmaximum;

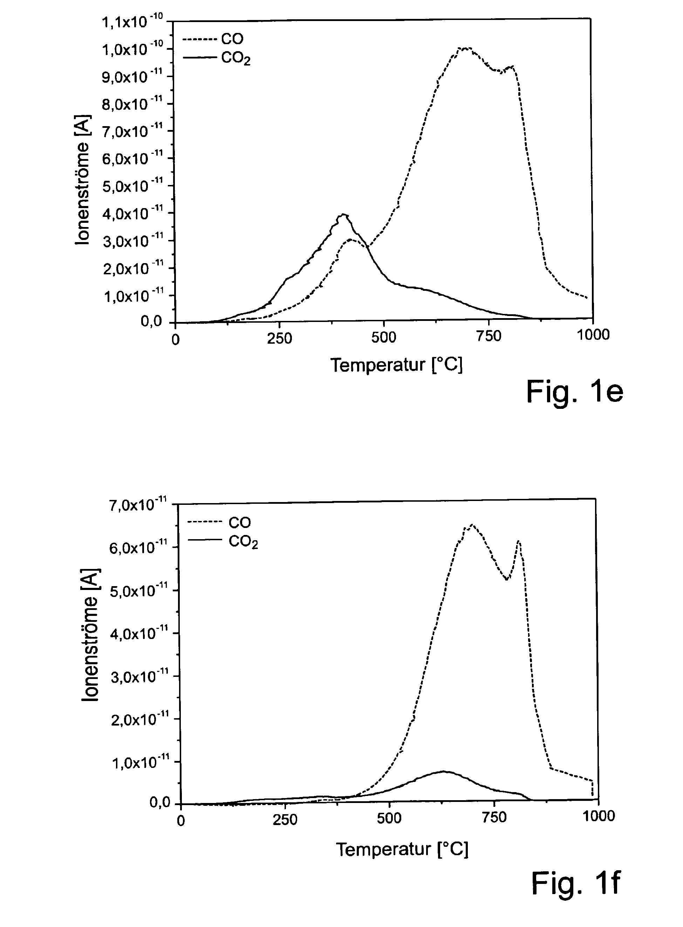

- Fig. 1e: eine grafische Darstellung zur Analyse der chemischen Beschaffenheit im Hinblick auf Basizität bzw. Azidität der im Rahmen der Oxidation erhaltenen sauerstoffhaltigen funktionellen Gruppen, wobei die Daten mittels TPD-MS (Temperaturprogrammierte Desorption, gekoppelt mit Massenspektroskopie) ermittelt worden sind. Die Desorption von Kohlendioxid (CO₂) indiziert dabei die während der Oxidation vorliegende Bildung saurer Oberflächenoxide, wogegen die Desorption von Kohlenmonoxid (CO) die im Rahmen der Oxidation hervorgerufene Bildung basischer Oberflächenoxide Gruppen indiziert. Die Oxidation wurde auf Basis der zuvor in Fig. 1d angeführten chemischen Oxidation durchgeführt (Vergleich).
- Fig. 1f: eine grafische Darstellung nach Maßgabe von Fig. 1e, wobei sich die erhaltenen Daten bzw. Messwerte im Gegensatz hierzu auf eine mittels thermischer Oxidation erhaltenen, an ihrer Oberfläche oxidierten Aktivkohle, wie in Fig. 1c angeführt, beziehen;

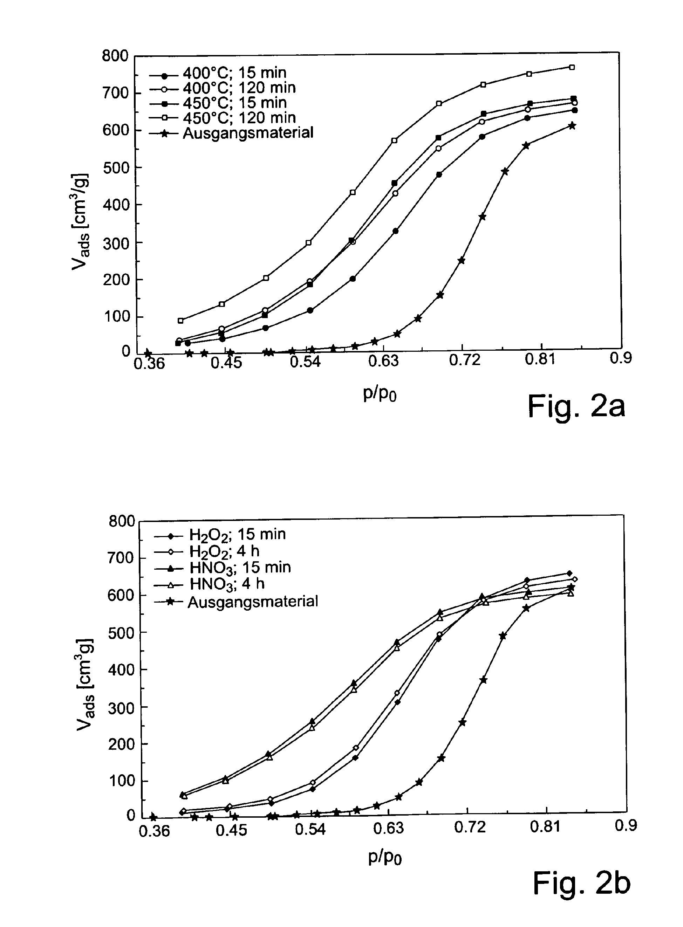

- Fig. 2a: eine grafische Darstellung der Wasserdampfisothermen von an ihrer Oberfläche oxidierten Aktivkohlen, welche im Rahmen von Oxidation mittels (Luft-)Sauerstoff bei variablen Temperaturen bzw. Zeitdauern gewonnen wurden (thermische Oxidation), im Vergleich zu einem nichtoxidierten Ausgangsmaterial bzw. zu einer Ausgangsaktivkohle;
- Fig. 2b: eine grafische Darstellung von Wasserdampfisothermen von an ihrer Oberfläche oxidierten Aktivkohlen (Vergleich), wobei als diesbezügliches Oxidationsreagenz ("OR") Wasserstoffperoxid bzw. Salpetersäure (HNO₃) bei jeweils variabler Oxidationsdauer eingesetzt wurde (chemische Oxidation) im Vergleich zu einer nichtoxidierten Ausgangsaktivkohle;

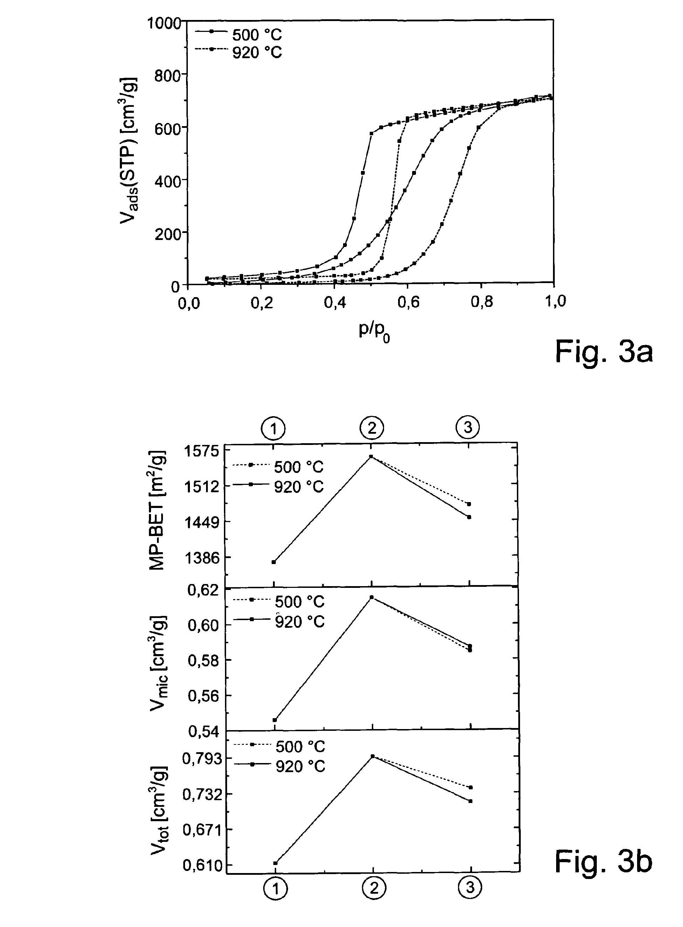

- Fig.3a: eine grafische Darstellung der Wasserdampfisothermen von stickstoffmodifizierten bzw. stickstofffunktionalisierten Aktivkohlen mit dem Einfluss der bei der Stickstoffausrüstung gewählten Temperatur auf das Endprodukt, wobei der jeweils rechte Adsorptionsast der untersuchten Aktivkohle die Adsorption und der jeweils linke Adsorptionsast der untersuchten Aktivkohle die Desorption von Wasser darstellt;
- Fig. 3b: grafische Darstellungen des Einflusses der durchgeführten Oxidation mit der nachfolgenden Stickstofffunktionalisierung bzw. -modifizierung auf die jeweiligen Parameter bzw. texturellen Eigenschaften der resultierenden Aktivkohle und des diesbezüglichen Einflusses der bei der Funktionalisierung bzw. Modifizierung mit Stickstoff gewählten Temperatur, wobei in der grafischen Darstellung das Symbol ① die Basis- bzw. Ausgangsaktivkohle, das Symbol ② die nach Oberflächenoxidation erhaltene, an ihrer Oberfläche oxidierte Aktivkohle (Intermediat), welche somit noch nicht stickstoffmodifiziert bzw. -funktionalisiert ist, und das Symbol ③ die mit Stickstoff funktionalisierte bzw. modifizierte Aktivkohle in Form des Endprodukts darstellen;

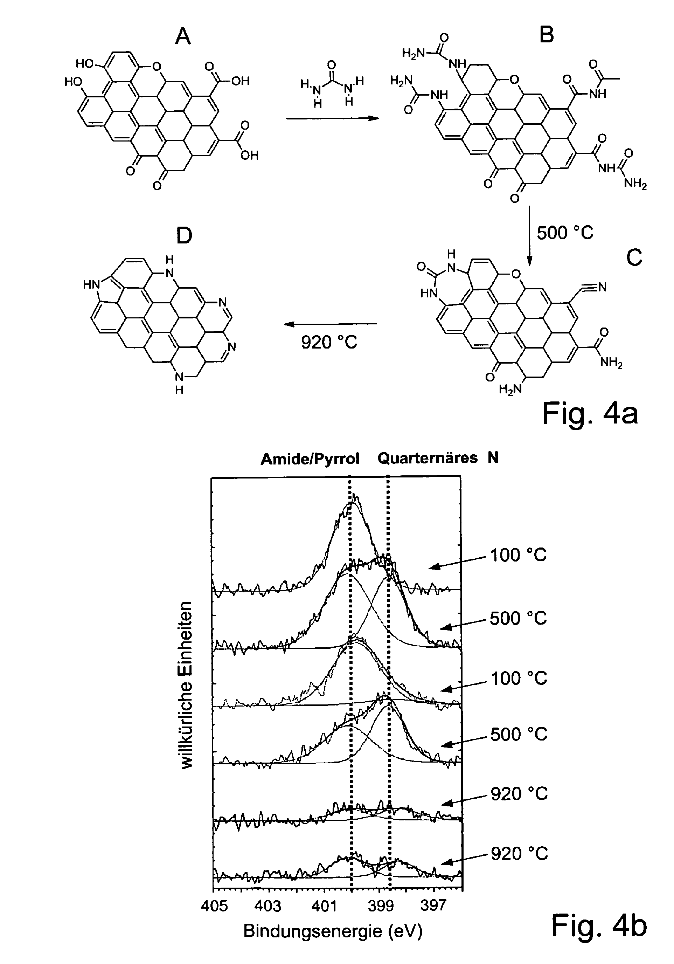

- Fig. 4a: einen dem erfindungsgemäßen Verfahren zugrundeliegenden, das erfindungsgemäße Verfahren jedoch in nichtbeschränkender Weise charakterisierenden Reaktionsablauf zum Erhalt einer stickstoffmodifizierten bzw. stickstofffunktionalisierten Aktivkohle, ausgehend von einer an ihrer Oberfläche oxidierten Aktivkohle unter Einsatz von Harnstoff als Stickstoffmodifizierungsreagenz ("SMR");
- Fig. 4b: ein XPS-Spektrum (*X-Ray Photoelectron Spectroscopy;* Röntgen-Fotoelektronenspektroskopie) zum Nachweis stickstoffhaltiger funktioneller Gruppen für verschiedene Wärmebehandlungsschritte zum Erhalt der stickstofffunktionalisierten bzw. stickstoffmodifizierten Aktivkohlen;

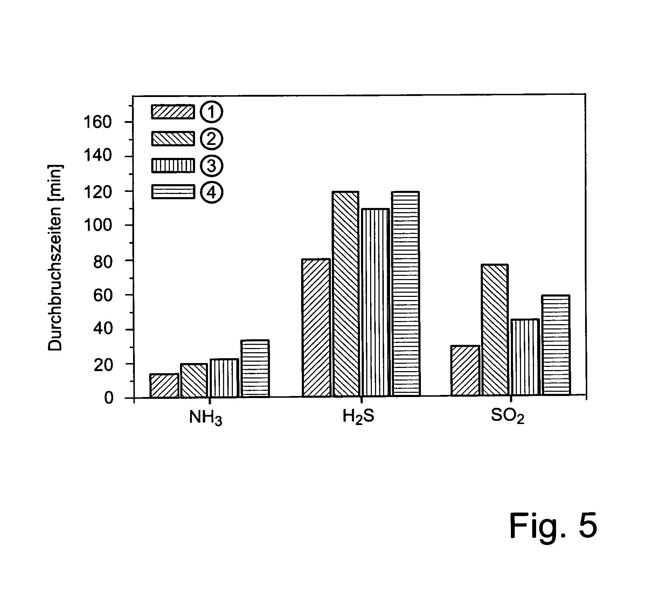

- Fig. 5: eine grafische Darstellung in Form eines Balkendiagramms mit den für verschiedene Aktivkohlen ermittelten Durchbruchzeiten in Bezug auf verschiedene Sorptionssubstanzen (NH₃, H₂S sowie SO₂), wobei in Fig. 5 das Symbol ① eine nichtoxidierte Ausgangaktivkohle darstellt und die weiteren Aktivkohlen gemäß den Symbolen ② bis ④ jeweils auf Basis von Harnstoff stickstoffmodifizierte bzw. stickstofffunktionalisierte Aktivkohlen darstellen. In diesem Zusammenhang stellen die Symbole ② bzw. ③ stickstoffmodifizierte bzw. stickstofffunktionalisierte Aktivkohlen dar, welche auf Basis einer mit (Luft)Sauerstoff bei Temperaturen von 400 °C bzw. 450 °C an ihrer Oberfläche oxidierten Aktivkohlen erhalten wurden (thermische Oxidation). Das Symbol ③ stellt zudem eine stickstoffmodifizierte bzw. stickstofffunktionalisierte Aktivkohle dar, welche auf Basis einer mittels Salpetersäure (HNO₃) an ihrer Oberfläche oxidierten Aktivkohle erhalten wurde (chemische Oxidation) (Vergleich);

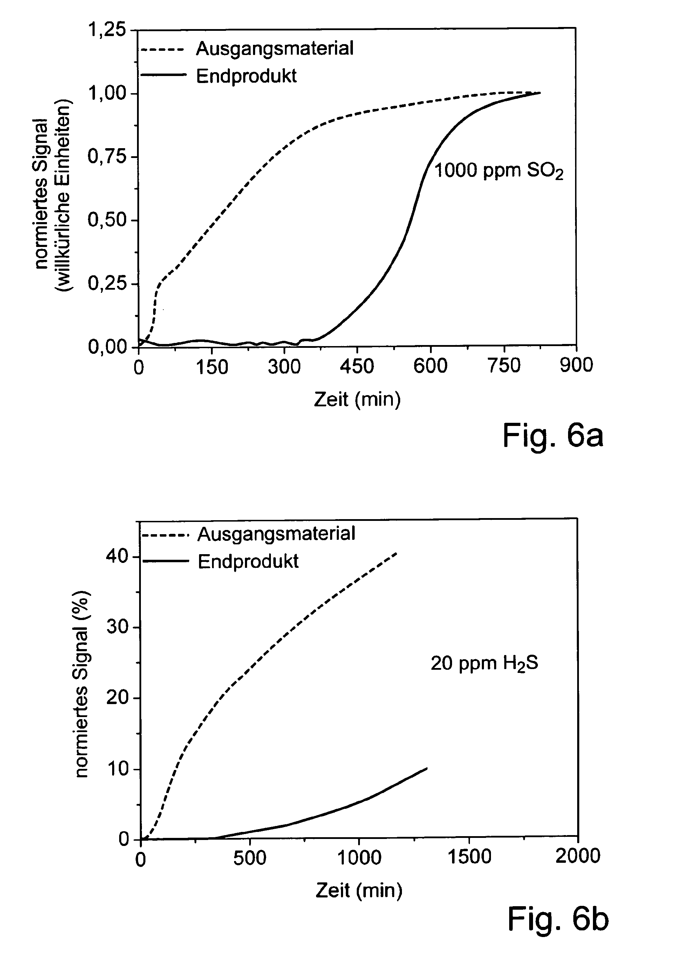

- Fig. 6a: eine grafische Darstellung von Durchbruchexperimenten unter Verwendung von Schwelfeldioxid (SO₂) als zu sorbierendes Gas auf Basis eines Vergleichs von Ausgangsaktivkohle ("Ausgangsmaterial") einerseits und einer stickstoffmodifizierten bzw. stickstofffunktionalisierten Aktivkohle ("Endprodukt") andererseits;
- Fig. 6b: eine grafische Darstellung von Durchbruchexperimenten nach Maßgabe der Ausführungen zu Fig. 6a, wobei im Unterschied hierzu Schwefelwasserstoff (H₂S) als zu sorbierendes Gas eingesetzt wurde;

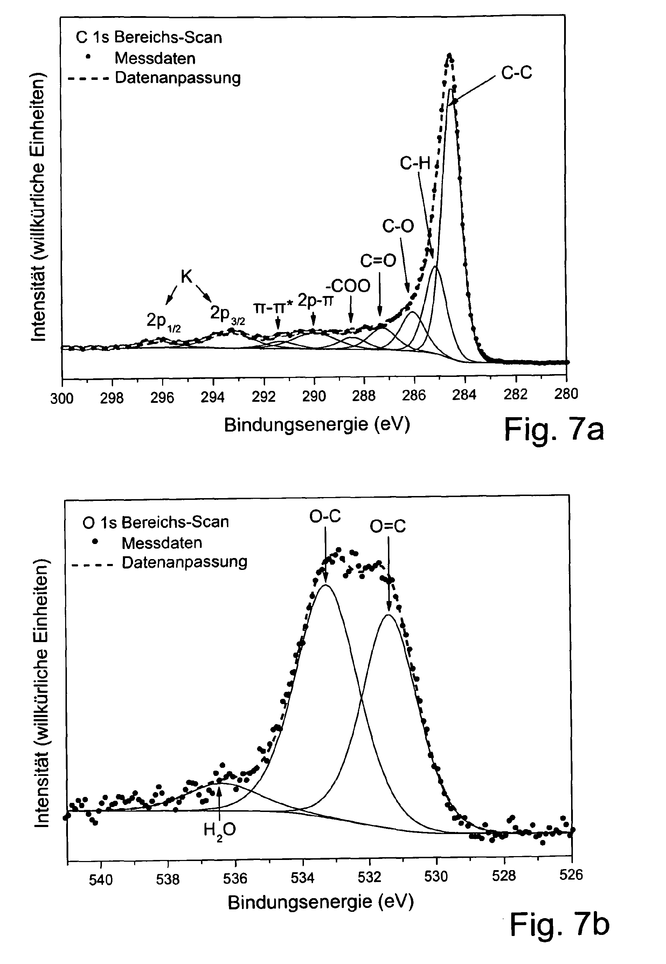

- Fig. 7a: ein XPS-Spektrum eines C 1s-Bereichs-Scans einer an ihrer Oberfläche oxidierten, jedoch noch nicht stickstoffmodifizierten bzw. stickstofffunktionalisierten Aktivkohle mit der Darstellung der erhaltenen Messwerte ("Messdaten") und der entsprechenden Datenanpassung zu Zwecken der Oberflächenanalyse bzw. der chemischen Struktur der Oberfläche der oxidierten Aktivkohle als Intermediat des erfindungsgemäßen Verfahrens;
- Fig. 7b: ein weiteres XPS-Spektrum eines O 1s-Bereichs-Scans mit den auf diese Weise ermittelten Messdaten ("Messdaten") und der entsprechenden Datenanpassung für eine an ihrer Oberfläche oxidierten, jedoch noch nicht stickstoffmodifizierten bzw. stickstofffunktionalisierten Aktivkohle.

Die Figurendarstellung gemäß Fig. 1a veranschaulicht den Einfluss der Oxidationszeit auf verschiedene Parameter bzw. auf die texturellen Eigenschaften der auf Basis der erfindungsgemäß durchgeführten Oxidation erhaltenen, an ihrer Oberfläche oxidierten Aktivkohle, wobei (Luft-)Sauerstoff als Oxidationsreagenz ("OR") eingesetzt wurde (thermische Oxidation) und wobei als Ausgangsaktivkohle zum einen eine niedrig aktivierte Aktivkohle und zum anderen eine hoch aktivierte Aktivkohle eingesetzt worden ist. Die Figur zeigt, dass mit zunehmender Oxidationszeit der Gehalt an flüchtigen Bestandteilen ("fB") für beide Aktivkohlen signifikant ansteigt. Wie zuvor angeführt, stellt der Gehalt an flüchtigen Bestandteilen der an ihrer Oberfläche aktivierten Aktivkohle ein Maß für den Gehalt an sauerstoffhaltigen funktionellen Gruppen dar, wie sie im Rahmen der Oxidation gebildet werden. Für beide Aktivkohlen wird somit mit zunehmender Oxidationszahl ein Anstieg des Gehaltes an sauerstoffhaltigen funktionellen Gruppen beobachtet, welche im weiteren Verlauf der erfindungsgemäßen Verfahrensführung als Reaktionspartner für das Stickstoffmodifizierungsreagenz ("SMR") fungieren können. Fig. 1a veranschaulicht weiterhin, dass unter den gegebenen Verfahrensbedingungen mit zunehmender Oxidationszeit der Oberflächen-pH-Wert der jeweiligen Aktivkohle von einem leicht basischen Bereich in einen leicht sauren Bereich absinkt. Schließlich zeigt die grafische Darstellung gemäß Fig. 1a, dass das Gesamtporenvolumen (Vₜₒₜ) sowie die Rütteldichte (RD) für beide Aktivkohlen im Rahmen der thermischen Oxidation geringfügig verändert werden, wobei in Bezug auf das Gesamtporenvolumen sogar eine geringfügige Erhöhung vorliegt.

Fig. 1b zeigt zur weiteren Veranschaulichung die Abhängigkeit des Oberflächen-pH-Werts der an ihrer Oberfläche oxidierten Aktivkohle einerseits sowie der Rütteldichte und des Gesamtporenvolumens andererseits von dem Gehalt an flüchtigen Bestandteilen als Maß für den Gehalt an sauerstoffhaltigen funktionellen Gruppen der an ihrer Oberfläche oxidierten Aktivkohle als Intermediat der erfindungsgemäßen Verfahrensführung. Fig. 1b zeigt gleichermaßen, dass mit Zunahme des Gehalts an sauerstoffhaltigen funktionellen Gruppen und damit des Oxidationsgrads der pH-Wert und die Rütteldichte der an ihrer Oberfläche oxidierten Aktivkohle leicht abnimmt, während in Bezug auf das Porenvolumen eine Zunahme zu beobachten ist.

Weiterhin verdeutlicht die Figurendarstellung gemäß Fig. 1c, dass im Rahmen der thermischen Oxidation unter Einsatz von (Luft-)Sauerstoff als Oxidationsreagenz ("OR") (chemische Oxidation) die Bildung basischer Oberflächenoxide bevorzugt ist. Demgegenüber zeigt die Figurendarstellung gemäß Fig. 1d, dass unter Verwendung von Harnstoff bzw. Wasserstoffperoxid (chemische Oxidation) gleichermaßen auch saure Oberflächenoxide gebildet werden. In diesem Zusammenhang bestätigen die Figurendarstellungen gemäß Fig. 1e und Fig. 1f die zuvor angeführten experimentellen Befunde: So zeigt Fig. 1f, dass die zuvor angeführte thermische Oxidation maßgeblich zur Desorption von Kohlenmonoxid (CO) als Maß für die Bildung basischer Oberflächenoxide führt, während die Bildung saurer Oberflächenoxide, welche durch die Desorption von Kohlendioxid (CO₂) angezeigt wird, nur in geringfügigem Maße erfolgt. In diesem Zusammenhang zeigt Fig. 1e, dass unter chemischen Oxidationsbedingungen im Rahmen der erfindungsgemäßen Verfahrensführung als Intermediat eine an ihrer Oberfläche oxidierte Aktivkohle erhalten wird, welche einen erhöhten Gehalt an sauren Oberflächenoxiden aufweist.

Insgesamt verdeutlicht die Figurendarstellung gemäß Fig. 1a bis Fig. 1e somit, dass es bei der erfindungsgemäßen Verfahrensführung mit der gezielten Auswahl bzw. Abstimmung der Oxidationsbedingungen zur Bildung der an ihrer Oberfläche oxidierten Aktivkohle um einen steuerbaren bzw. individuell einstellbaren Prozess handelt, auf dessen Basis das so erhaltene Intermediat individuell ausgebildet werden kann, insbesondere im Hinblick auf die nachfolgende Ausrüstung bzw. Modifizierung mit Stickstoff. Als diesbezüglich im Rahmen der Oxidation variable Verfahrensparameter kommen insbesondere zum einen das eingesetzte Oxidationsreagenz ("OR") sowie zum anderen Temperatur und Oxidationszeit infrage. Die im Rahmen der erfindungsgemäßen Verfahrensführung vorgesehene oxidative Vorbehandlung zum Erhalt der an ihrer Oberfläche oxidierten Aktivkohle als Intermediat stellt somit einen einstellbaren bzw. individuell abstimmbaren Prozess dar, wobei insbesondere die Intensität bzw. das Maß der Oxidation durch Prozessparameter wie Oxidationszeit, Oxidationstemperatur und Konzentration des eingesetzten Oxidationsreagenzes ("OR") und die Art der gebildeten Oberflächenoxide über die Auswahl des Oxidationsmittels gesteuert bzw. maßgeschneidert werden kann.

Weiterhin zeigen die Figurendarstellungen gemäß Fig. 2a und Fig. 2b die Wasserdampfisothermen von auf verschiedene Art und Weise an ihrer Oberfläche oxidierter Aktivkohle im Vergleich zu einer nichtoxidierten Ausgangsaktivkohle, wobei Fig. 2a auf eine thermische Oxidation unter Verwendung von (Luft-)Sauerstoff als Oxidationsreagenz ("OR") unter verschiedenen Temperaturen (thermische Oxidation) und Fig. 2b auf den Einsatz von Oxidationsreagenzien ("OR") auf Basis von Wasserstoffperoxid und Salpetersäure bei unterschiedlichen Oxidationszeiten (chemische Oxidation) abstellen. Dabei ist in beiden Figuren zu erkennen, dass die durchgeführte Oxidation zu einer Verschiebung der Adsorption von Wasser in Richtung kleinerer p/p₀-Werte führt, was einer Erhöhung der Kapazität infolge der durchgeführten Oxidation unter Schaffung hydrophiler Oberflächen entspricht, was wiederum im Hinblick der nachfolgenden Anbindung des Stickstoffmodifizierungsreagenzes ("SMR") von Relevanz ist. In diesem Zusammenhang zeigt Fig. 2a, dass eine Erhöhung der Temperatur einerseits und der Oxidationszeit und - dauer andererseits zu einer höheren Kapazität bzw. zu einer vermehrten Bildung hydrophiler Oberflächen der so behandelten Aktivkohle führt. Entsprechend kann Fig. 2b entnommen werden, dass unter den vorliegenden Bedingungen Salpetersäure zu einer stärkeren Kapazitätserhöhung bzw. zu einem höheren Gehalt hydrophiler Oberflächen im Vergleich zu Wasserstoffperoxid führt, wobei auch hier eine weitere Erhöhung der entsprechenden Werte bei Zunahme der Oxidationsdauer zu beobachten ist.

Die Figurendarstellung gemäß Fig. 3a zeigt die für eine unter Verwendung von Ammoniak bei verschiedenen Temperaturen stickstoffmodifizierte bzw. stickstofffunktionalisierte Aktivkohle erhaltenen Wasserdampfisothermen, wobei bei einer geringeren Funktionalisierungstemperatur von 500 °C im Vergleich zu einer höheren Funktionalisierungstemperatur von 920 °C eine größere Verschiebung der Adsorption zu kleineren p/p₀-Werten zu beobachten ist, was auf eine höhere Funktionalität, insbesondere auch im Hinblick auf die Ausbildung hydrophiler Oberflächen, der erhaltenen Aktivkohle bei niedrigeren Temperaturen bzw. eine Integration von Stickstoff in das Kohlenstoffgerüst bei höheren Temperaturen spricht. In diesem Zusammenhang zeigt die Figurendarstellung gemäß Fig. 3b, dass auf Basis der erfindungsgemäßen Verfahrensführung mit der Oxidation von Ausgangsaktivkohle und der nachfolgenden Stickstoffmodifizierung bzw. -funktionalisierung die zugrundeliegenden Parameter bzw. texturellen Eigenschaften der erhaltenen Aktivkohle nicht negativ beeinflusst werden. Vielmehr ist sowohl in Bezug auf das Gesamtporenvolumen nach *Gurvich* (Vₜₒₜ), das Mikroporenvolumen (V_{mic}) und der MP-BET-Oberfläche zu beobachten, dass die durchgeführte Oxidation zur Ausbildung funktioneller sauerstoffhaltiger Gruppen an der Oberfläche der Aktivkohle sogar zu einem leichten Anstieg und die nachfolgende Stickstoffmodifizierung bzw. -funktionalisierung allenfalls zu einer geringfügigen Abnahme der in Rede stehenden Werte führt, welche jedoch immer noch oberhalb der Werte des entsprechenden Ausgangsmaterials liegen. Die erfindungsgemäße Verfahrensführung führt somit in keiner Weise zu einer Verschlechterung der angeführten Parameter der zugrundeliegenden Aktivkohle, wobei diesbezüglich auch keine erheblichen Unterschiede hinsichtlich der bei der Stickstofffunktionalisierung bzw. -modifizierung gewählten Temperatur vorliegen. Die in Fig. 3b untersuchten Aktivkohlen wurden gleichermaßen unter Verwendung von Ammoniak mit Stickstoff ausgerüstet.

Die Figurendarstellung gemäß Fig. 4a wiederum zeigt einen beispielhaften, dem erfindungsgemäßen Verfahren zugrundeliegenden Reaktionsablauf, wobei Abbildung A das Kohlenstoffgerüst der an ihrer Oberfläche oxidierten Aktivkohle (Intermediat) mit den ausgebildeten sauerstoffhaltigen funktionellen Gruppen darstellt. Unter Zugabe von Harnstoff als Stickstoffmodifizierungsreagenz ("SNR") wird nachfolgend das in Abbildung B veranschaulichte Zwischenprodukt mit angebundener Hamstoffkomponente erhalten. Abbildung C zeigt das bei einer Temperaturbehandlung von 500 °C erhaltene (Zwischen-) Produkt mit der Umsetzung des Harnstoffs zu den entsprechenden stickstoffhaltigen funktionellen Gruppen an der Oberfläche der Kohlenstoffmatrix, wobei diesbezüglich zyklische Harnstoffderivate, Nitrile, Amide bzw. primäre Amine ausgebildet werden. Durch eine weitere Temperaturbehandlung bei 920 °C erfolgt eine Integration des Stickstoffs in das Kohlenstoffgerüst bzw. in die Kohlenstoffmatrix der stickstoffmodifizierten bzw. stickstofffunktionalisierten Aktivkohle unter Abbau der stickstoffhaltigen funktionellen Gruppe, wie in Abbildung D dargestellt.

In diesem Zusammenhang veranschaulicht die Figurendarstellung gemäß Fig. 4b auf Basis eines XPS-Spektrums das Vorhandensein verschiedener Spezies von stickstoffhaltigen funktionellen Gruppen zu verschiedenen Zeitpunkten bzw. bei verschiedenen Temperaturen während des Vorgangs der Stickstoffmodifizierung bzw. -funktionalisierung. Während bei niedrigen Temperaturen insbesondere stickstoffhaltige funktionelle Gruppen auf Basis von Amiden bzw. Pyrrolen vorliegen, erfolgt bei höheren Temperaturen von 500 °C eine Umwandlung bzw. eine Verlagerung zu insbesondere quaternären stickstoffhaltigen Gruppen, während bei noch höheren Temperaturen von 920 °C der Gehalt an den vorgenannten Gruppen signifikant zurückgeht, was auf eine Integration von Stickstoff in das Kohlenstoffgerüst bzw. in die Kohlenstoffmatrix der so behandelten Aktivkohle hindeutet.

Was die Figurendarstellung gemäß Fig. 5 anbelangt, so zeigt diese einen Vergleich der Durchbruchzeiten von drei verschiedenen Aktivkohlen in Bezug auf die Sorption von Ammoniak (NH₃), Schwefelwasserstoff (H₂S) und Schwefeldioxid (SO₂) im Vergleich zu einer Ausgangsaktivkohle. Hierzu wurden die entsprechenden Aktivkohlen unter definierten Bedingungen für einen bestimmten Zeitraum einem kontinuierlichen Volumenstrom einer mit dem jeweiligen Schadgas angereichterten Atmosphäre ausgesetzt und die jeweiligen Durchbruchzeiten bestimmt. Sämtliche erfindungsgemäßen Aktivkohlen zeigen deutlich über die Ausgangsaktivkohle hinausgehende Sorptionsleistungen sowohl in Bezug auf Ammoniak (NH₃), Schwefelwasserstoff (H₂S) als auch Schwefeldioxid (SO₂). Insgesamt ist das Sorptionsverhalten der erfindungsgemäßen Aktivkohlen als hervorragend einzustufen.

Weiterhin verdeutlichen die Figurendarstellungen gemäß Fig. 6a und Fig. 6b das signifikant verbesserte Sorptionsverhalten einer erfindungsgemäß ausgerüsteten Aktivkohle (Endprodukt) im Vergleich zu dem eingesetzten Ausgangsmaterial bzw. der eingesetzten Ausgangsaktivkohle. So zeigt die auf Basis des erfindungsgemäßen Verfahrens hergestellte und mit Stickstoff ausgerüstete Aktivkohle ein signifikant verbessertes Durchbruchverhalten gegenüber den zu sorbierenden Gasen Schwefeldioxid (SO₂) (Fig. 6a) einerseits und Schwefelwasserstoff (H₂S) (Fig. 6b) andererseits. Zur Ermittlung der Durchbruchdaten wurden die jeweiligen Aktivkohlen unter definierten Bedingungen einem konstanten Volumenstrom einer mit dem zu sorbierenden Gas angereicherten Atmosphäre für einen definierten Zeitraum ausgesetzt, wobei die in den jeweiligen Figuren angegebenen Konzentrationen des zu sorbierenden Gases eingesetzt wurden.

Schließlich zeigen die Figurendarstellungen gemäß Fig. 7a und Fig. 7b das Vorhandensein von sauerstoffhaltigen funktionellen Gruppen einer für die nachfolgende Stickstoffmodifizierung bzw. Stickstofffunktionalisierung eingesetzten an ihrer Oberfläche oxidierten Aktivkohle. Durch Oxidation unter Einbezug eines Oxidationsreagenzes ("OR") werden zahlreiche sauerstoffhaltige funktionelle Gruppen erhalten, wie z. B. Carboxyl- und Carbonylgruppen, welche als Reaktionspartner bzw. Aminogruppen für die nachfolgende Modifizierung bzw. Funktionalisierung mit dem Stickstoffmodifizierungsreagenz ("SMR") fungieren.

Zusammenfassend ist es im Rahmen der vorliegenden Erfindung durch die Bereitstellung eines speziellen Verfahrens erstmalig gelungen, eine Funktionalisierung von Aktivkohle bzw. von polymerbasierter sphärischer Aktivkohle (PBSAC) mit stickstoffhaltigen funktionellen Gruppen bzw. von Aktivkohle mit Integration von Stickstoff in die Kohlenstoffoberfläche (N-Dotierung) zu erhalten. Die so erhaltenen Aktivkohlen bzw. polymerbasierten sphärischen Aktivkohlen (PBSACs) weisen dabei eine Reaktivität gegenüber unterschiedlichen Zielgasen auf. Als entsprechende Zielgase für die auf Basis des erfindungsgemäßen Verfahrens erhaltenen Aktivkohlen können Gase in Betracht kommen, deren Abbau über eine Oxidation an der Kohlenstoffoberfläche möglich ist, wie es beispielsweise für SO₂, H₂S, ASH₃ sowie DMS der Fall ist.

Die im Rahmen des erfindungsgemäßen Verfahrens erhaltenen Aktivkohlen können gleichermaßen stickstoffhaltige funktionelle Gruppen auf der Oberfläche aufweisen, welche mit organischen Gasen bzw. Dämpfen Bindungen eingehen können, wie Formaldehyd und gegebenenfalls NOₓ-Verbindungen. Durch die Stickstofffunktionalisierung kann im Allgemeinen die Basizität der Oberfläche der Aktivkohle (im Gegensatz zur Oxidation) erhöht werden. Die Ausbildung von stickstoffhaltigen funktionellen Gruppen bzw. die Dotierung der Aktivkohle mit Stickstoff kann im Rahmen der erfindungsgemäßen Verfahrensführung in nicht beschränkender Weise durch das Füllen der Poren mit einer stickstoffhaltigen organischen Verbindung (wie z. B. Harnstoff) insbesondere aus wässrigen Lösungen und einem sich anschließenden Pyrolyseprozess erfolgen.

Nach dem eigentlichen Herstellungsprozess kann sich ein Aufreinigungsschritt, insbesondere ein Waschen mit Wasser, anschließen, insbesondere um etwaige Pyrolyse- bzw. Verbrennungsrückstände zu entfernen. Die bei der Stickstofffunktionalisierung bzw. -modifizierung gewählte Temperatur beeinflusst im Rahmen der erfindungsgemäßen Verfahrensführung die chemische Konstitution des eingebrachten Stickstoffs. In diesem Zusammenhang führen niedrige Temperaturen, insbesondere im Bereich von 500 °C, insbesondere zur Ausbildung von stickstoffhaltigen funktionellen Gruppen, während höhere Temperaturen, insbesondere im Bereich von 920 °C vorrangig zu den zuvor beschriebenen N-dotierten Aktivkohlen führt.

Im Rahmen der vorliegenden Erfindung hat es sich als besonders vorteilhaft gezeigt, dass im Rahmen des erfindungsgemäßen Verfahrens eine vorgeschaltete Oxidation der Aktivkohle durchgeführt wird, da diese die Aufnahme von Stickstoff in signifikanten Mengen ermöglicht. In diesem Zusammenhang korreliert die Menge an aufgenommenem bzw. integriertem Stickstoff mit den flüchtigen Bestandteilen der oxidierten Aktivkohle als Maß für die Menge bzw. den Gehalt an Oberflächenoxiden auf der Aktivkohle.

### AUSFÜHRUNGSBEISPIELE:

### 1. Herstellung einer erfindungsgemäß ausgerüsteten Aktivkohle mit Stickstofffunktionalisierung bzw. -modifizierung:

Im Rahmen der im Folgenden beschriebenen Herstellung von erfindungsgemäßen Aktivkohlen wurde als Ausgangsmaterial eine kugelförmige Aktivkohle als Ausgangsaktivkohle eingesetzt, welche auf Basis von divinylbenzolvernetztem Polystyrol hergestellt worden ist. Eine derartige Ausgangsaktivkohle ist von der Fa. Blücher GmbH, Erkrath (Deutschland) erhältlich.
a) Zur Herstellung der Aktivkohle A (Vergleich) wurden 500 g der Ausgangsaktivkohle mit 1.000 g einer HNO₃-Lösung (50 %) zusammengeführt, und die resultierende Mischung wurde für 240 min gerührt. Anschließend wurde die überschüssige Salpetersäure abdekantiert, und die auf diese Weise erhaltene oxidierte Aktivkohle wurde mit destilliertem Wasser gewaschen und anschließend getrocknet. Eine Menge von 500 g der an ihrer Oberfläche oxidierten Aktivkohle wurden dann mit 1.000 g einer gesättigten Harnstofflösung zusammengeführt, und die resultierende Mischung wurde für 2,5 h gerührt. Anschließend wurde die überschüssige Harnstofflösung abdekantiert. Die mit der Harnstofflösung ausgerüstete Aktivkohle wurde anschließend im Inertgasstrom bei 500 °C für 240 min behandelt. Die erhaltene stickstoffmodifizierte bzw. stickstofffunktionalisierte Aktivkohle wurde dann mit destilliertem Wasser gewaschen und getrocknet, um etwaige Verbrennungs- bzw. Pyrolyserückstände zu entfernen.
b) Zur Herstellung der Aktivkohle B (Vergleich) wurden 500 g der Ausgangsaktivkohle mit 1.000 g einer HNO₃-Lösung (50 %) zusammengeführt und die resultierende Mischung für 240 min gerührt. Anschließend wurde überschüssige HNO₃-Lösung abdekantiert, und die so erhaltene oxidierte Aktivkohle wurde mit destilliertem Wasser gewaschen und getrocknet. Anschließend wurden 500 g der oxidierten Aktivkohle mit 1.000 g einer gesättigten Harnstofflösung zusammengeführt, und die resultierende Mischung wurde für 2,5 h gerührt. Die überschüssige Harnstofflösung wurde abdekantiert. Die mit der Harnstofflösung ausgerüstete Aktivkohle wurde im Inertgasstrom bei 920 °C für 240 min behandelt. Die so erhaltene stickstofffunktionalisierte bzw. stickstoffmodifizierte Aktivkohle wurde mit destilliertem Wasser gewaschen und anschließend getrocknet, um Verbrennungsrückstände zu entfernen.
c) Zur Herstellung der erfindungsgemäßen Aktivkohle C wurden 500 g der Ausgangsaktivkohle im Drehrohrofen im Luftstrom bei 450 °C für 120 min behandelt. Die so erhaltene oxidierte Aktivkohle wurde mit 1.000 g einer gesättigten Harnstofflösung zusammengeführt, und die resultierende Mischung wurde für 2,5 h gerührt. Anschließend wurde die überschüssige Harnstofflösung abdekantiert. Die mit der Harnstofflösung ausgerüstete Aktivkohle wurde anschließend im Inertgasstrom bei 500 °C für 240 min behandelt. Die resultierende stickstoffmodifizierte bzw. stickstofffunktionalisierte Aktivkohle wurde schließlich gewaschen und getrocknet, um etwaige Verbrennungsrückstände zu entfernen.
d) Zur Herstellung der erfindungsgemäßen Aktivkohle D wurden 50 g der Ausgangsaktivkohle im Drehrohrofen im Luftstrom bei 450 °C für 120 min behandelt. 500 g der so erhaltenen Aktivkohle wurden mit 1.000 g einer gesättigten Harnstofflösung zusammengeführt, und die resultierende Mischung wurde für 2,5 h gerührt. Anschließend wurde die überschüssige Harnstofflösung abdekantiert, und die mit der Harnstofflösung ausgerüstete Aktivkohle wurde mit Inertgasstrom bei 920 °C für 240 min behandelt. Die auf diese Weise erhaltene stickstoffmodifizierte bzw. stickstofffunktionalisierte Aktivkohle wurde schließlich mit destilliertem Wasser gewaschen und anschließend getrocknet, um etwaige Verbrennungsrückstände zu entfernen.

Die Aktivkohlen A bis D weisen jeweils signifikant erhöhte Stickstoffgehalte auf, und die chemisorptiven Eigenschaften sind jeweils als hervorragend einzustufen.

In diesem Zusammenhang wurde der jeweilige Stickstoffgehalt der Aktivkohlen mit an sich bekannten Methoden bestimmt. Der Gesamtstickstoffgehalt kann mittels an sich bekannter Elementaranalyse bestimmt werden, während die Ermittlung der flüchtigen Bestandteile ("fB") gemäß der ISO 562:1981 erfolgen kann. Aus der Differenz von mittels Elementaranalyse bestimmtem Gesamtstickstoffgehalt einerseits und gemäß der ISO 562:1981 bestimmtem Gehalt an flüchtigen Bestandteilen (d. h. flüchtigen stickstoffhaltigen funktionellen Gruppen) kann dann der Gehalt an immobilisiertem bzw. in das Kohlenstoffgerüst eingebautem Stickstoff ermittelt werden.

Im Einzelnen ergeben sich für die Aktivkohlen A bis D die folgenden Stickstoffgehalte: So weist die Aktivkohle A einen Gesamtstickstoffgehalt von 13 % auf, bezogen auf das Trockengewicht der stickstoffmodifizierten bzw. stickstofffunktionalisierten Aktivkohle, wobei hiervon etwa 12 %, bezogen auf den Gesamtstickstoffgehalt, in Form von flüchtigen Bestandteilen ("fB") vorliegt. Für die Aktivkohle B ergibt sich ein entsprechender Gesamtstickstoffgehalt von 18 Gew.-%, bezogen auf das Trockengewicht der stickstoffmodifizierten bzw. stickstofffunktionalisierten Aktivkohle, wobei diesbezüglich lediglich 5 % des Stickstoffs, bezogen auf den Gesamtstickstoffgehalt, in Form von flüchtigen Bestandteilen ("fB") vorliegt, d. h. 95 % des Stickstoffs liegen in der Kohlenstoffmatrix integriert vor.

Weiterhin ergibt sich für die erfindungsgemäße Aktivkohle C ein Gesamtstickstoffgehalt von 15 Gew.-%, bezogen auf die stickstoffmodifizierte bzw. stickstofffunktionalisierte Aktivkohle. In diesem Fall beträgt der Anteil des in Form von flüchtigen Bestandteilen ("fB") vorliegenden Stickstoffs, bezogen auf den Gesamtstickstoffgehalt, 14 %.

Schließlich ergibt sich für die erfindungsgemäße Aktivkohle D ein Gesamtstickstoffgehalt, bezogen auf die stickstoffmodifizierte bzw. stickstofffunktionaliserte Aktivkohle von 19,5 Gew.-%, wobei in diesem Zusammenhang 7 % des Stickstoffs in Form von flüchtigen Bestandteilen ("fB") vorliegt.

Die Ergebnisse veranschaulichen den hohen Gehalt an Stickstoff in Bezug auf die erfindungsgemäßen Aktivkohlen, welche auf Basis des erfindungsgemäßen Verfahrens erhalten werden, wobei diesbezüglich gleichermaßen gewährleistet ist, dass ein hoher Anteil des Stickstoffs fest in das Kohlenstoffgerüst integriert vorliegt. Die diesbezügliche Integration bzw. Inkorporierung des Stickstoffs in das Kohlenstoffgerüst ist bei höheren Temperaturen während der Stickstoffmodifizierung bzw. -funktionalisierung stärker ausgebildet, während bei niedrigen Temperaturen der Anteil an stickstoffhaltigen funktionellen Gruppen erhöht ist.

In Bezug auf die Aktivkohlen wurden zudem Durchbruchuntersuchungen gegenüber Schwefelwasserstoff (H₂S) durchgeführt. In diesem Zusammenhang wurde eine definierte Schüttung der jeweiligen Aktivkohlen A bis D, welche jeweils eine Höhe von 2 cm aufwies, bei Temperaturen von 30 °C einem konstanten Volumenstrom mit konstanter Strömungsgeschwindigkeit ausgesetzt, welcher 20 ppm H₂S enthielt. Die Aktivkohlen wiesen dabei folgende Durchbruchzeiten auf: So konnte für die Aktivkohle A eine Durchbruchzeit von 112 min und für die Aktivkohle B eine Durchbruchszeit von 123 min ermittelt werden. Weiterhin ergab sich für die erfindungsgemäße Aktivkohle C eine Durchbruchzeit von 112 min, und für die erfindungsgemäße Aktivkohle D konnte eine Durchbruchzeit von 119 min ermittelt werden. Eine als Vergleich eingesetzte unbehandelte Ausgangsaktivkohle wies eine Durchbruchzeit von lediglich 75 min auf. Die vorgenannten Ergebnisse belegen die signifikante Verbesserung der Adsorptionsleistung der erfindungsgemäßen Aktivkohle in Bezug auf das zu sorbierende Schadgas.

Die zuvor geschilderten Herstellungsbeispiele wurden wiederholt, wobei jedoch als Stickstoffmodifizierungsreagenz Melamin ("Aktivkohle E"), gasförmiges Ammoniak ("Aktivkohle F"), Ammoniakwasser ("Aktivkohle G") oder Aminosäuren ("Aktivkohle H") eingesetzt wurden; es wurden vergleichbare Ergebnisse erhalten.

### 2. Weitere Ausführungsbeispiele und experimentelle Untersuchungen:

Im Folgenden wird auf die den bereits zuvor beschriebenen Figurendarstellungen zugrundeliegenden Untersuchungen bzw. Ausführungsbeispiele weiterführend eingegangen:
a) Wie zuvor angeführt, liegt der Figurendarstellung gemäß Fig. 1a eine Untersuchung des Einflusses der durchgeführten Oxidation der Ausgangsaktivkohle auf bestimmte Parameter der erhaltenen, an ihrer Oberfläche oxidierten Aktivkohle zugrunde. Diesbezüglich wurde eine niedrig aktivierte Ausgangsaktivkohle mit relativ geringem Gesamtporenvolumen einerseits und eine hoch aktivierte Ausgangsaktivkohle mit relativ hohem Gesamtporenvolumen andererseits als für die nachfolgende Oxidation eingesetztes Material verwendet. Die Oxidation wurde unter Verwendung von (Luft-)Sauerstoff als Oxidationsreagenz ("OR") im Sinne der zuvor definierten thermischen Oxidation durchgeführt, wobei in diesem Zusammenhang die in Fig. 1a dargestellten Parameter in Abhängigkeit von der Oxidationszeit bestimmt wurden. Dabei zeigt sich, dass für beide Ausgangsaktivkohlen mit zunehmender Oxidationszeit eine Erhöhung der flüchtigen Bestandteile ("fB") vorliegt, was einer Generierung von sauerstoffhaltigen funktionellen Gruppen an der Oberfläche der jeweiligen Aktivkohle entspricht.
Gleichermaßen zeigt die Figurendarstellung gemäß Fig. 1a, dass mit zunehmender Oxidationszeit der Oberflächen-pH-Wert und die Rütteldichte der oxidierten, jedoch noch nicht einer Stickstoffmodifizierung bzw. Stickstofffunktionalisierung unterzogenen Aktivkohle sinken. Dahingehen ist in Bezug auf das Gesamtporenvolumen eine leichte Erhöhung zu beobachten. Die diesbezüglich aufgefundenen Abhängigkeiten der in Rede stehenden Parameter von der zugrundeliegenden Verfahrensdurchführung wird gleichermaßen durch die Figurendarstellung gemäß Fig. 1b bestätigt. Für weitere diesbezügliche Ausführungen kann auf obige Ausführungen zu den entsprechenden Figurendarstellungen verwiesen werden. Zusammenfassend ist somit festzustellen, dass durch die gezielte Auswahl von Prozessparametern, wie z. B. der Oxidationszeit, im Rahmen der dem erfindungsgemäßen Verfahren zugrundeliegenden Oxidation von Ausgangsaktivkohle, die entsprechenden Eigenschaften der an ihrer Oberfläche oxidierten Aktivkohle als Intermediat der erfindungsgemäßen Verfahrensführung gezielt eingestellt bzw. maßgeschneidert werden können.
b) Die zuvor aufgezeigte Einflussnahme von Prozessparametern auf die texturellen Eigenschaften der an ihrer Oberfläche oxidierten Aktivkohle wird auch durch den der Figurendarstellung gemäß Fig. 1c bis 1f zugrundeliegenden Untersuchungskomplex, welcher auf die Einflussnahme der Oxidationsbedingungen auf die Basizität bzw. Azidität der ausgebildeten Oberflächenoxide abstellt, bestätigt. In diesem Zusammenhang wurden entsprechende Ausgangsaktivkohlen zum einen einer thermischen Oxidation unter Einsatz von (Luft-)Sauerstoff als Oxidationsreagenz ("OR") und andererseits einer chemischen Oxidation unter Einsatz von Salpetersäure bzw. Wasserstoffperoxid als Oxidationsreagenz ("OR") unterzogen. Eine nachfolgende Analyse der so erhaltenen an ihrer Oberfläche oxidierten Aktivkohlen zeigt dabei, dass für thermische Oxidationsbedingungen vorrangig basische Oberflächenoxide gebildet werden, wogegen für chemische Oxidationsbedingungen auch saure Oberflächenoxide gebildet werden. Auf dieser Basis kann somit die chemische Struktur der Oberfläche der oxidierten Aktivkohle gezielt eingestellt bzw. maßgeschneidert werden.
Für weitere Ausführungen kann zur Vermeidung unnötiger Wiederholungen auf die obigen Ausführungen zu den entsprechenden Figurendarstellungen verwiesen werden.
Im Ergebnis zeigen die zugrundeliegenden Untersuchungen somit, dass durch die gezielte Auswahl der Oxidationsbedingungen die Basizität bzw. Azidität durch Bildung spezieller Oberflächenoxide gesteuert werden kann.
c) Im Rahmen eines weiteren Untersuchungskomplexes wurden entsprechende Ausgangsmaterialien einerseits einer thermischen Oxidation unter Einfluss von (Luft-)Sauerstoff und andererseits einer chemischen Oxidation unter Einsatz von Wasserstoffperoxid bzw. Salpetersäure als jeweilige Oxidationsreagenzien ("OR") unterzogen. Die so erhaltenen an ihrer Oberfläche oxidierten Aktivkohlen (Intermediat) wurden anschließend hinsichtlich der Adsorption bzw. Resorption von Wasserdampf im Vergleich zu einer nichtbehandelten Ausgangsaktivkohle (Ausgangsmaterial) untersucht. Wie in den Figurendarstellungen gemäß Fig. 2a und Fig. 2b dargestellt, erfolgt hierbei für die behandelten Aktivkohlen deutliche Verschiebung zu kleineren p/p₀-Werten. Diesbezüglich kann auch auf die obigen Ausführungen zu Fig. 2a und Fig. 2b verwiesen werden.
Im Ergebnis zeigen die in den Figurendarstellungen gemäß Fig. 2a und Fig. 2b in Bezug genommenen Untersuchungen, dass die Wasserdampfisothermen durch die erfindungsgemäß vorgesehene Oxidation der Aktivkohle signifikant beeinflusst werden, was insbesondere als Maß für das Vorliegen einer erhöhten Hydrophilie der Oberfläche der Aktivkohle infolge der generierten sauerstoffhaltigen funktionellen Gruppen herangezogen werden kann.
d) Was die der Figurendarstellung gemäß Fig. 3a und Fig. 3b zugrundeliegenden Untersuchungen anbelangt, so fokussieren diese auf Versuchsparameter und Analyseergebnisse für zwei auf verschiedene Weise stickstofffunktionalisierte bzw. stickstoffmodifizierte Aktivkohlen nach der Erfindung (N-PBSAC), welche jeweils ausgehend von Ausgangsaktivkohle auf Basis von karbonisierten und aktivierten Polymeren hergestellt wurden (PBSAC). Das im Rahmen des erfindungsgemäßen Verfahrens hergestellte oxidierte Basisadsorbenz (Intermediat) enthielt dabei 13,7 Gew.-% flüchtige Bestandteile ("fB"), bezogen auf das Trockengewicht des Intermediats.
In Bezug auf eine erste an ihrer Oberfläche oxidierten Aktivkohle wurde anschließend die Stickstoffmodifizierung bzw. -funktionalisierung bei einer Temperatur von T = 500 °C durchgeführt, wobei diesbezüglich die folgenden Verfahrensschritte durchgeführt worden sind. Die an ihrer Oberfläche aktivierte Aktivkohle wurde in einem NH₃-Volumenstrom (5 l/h) mit einer Aufheizrate von 36 K/min auf 100 °C erwärmt, und die Temperatur wurde für 30 min gehalten. Anschließend wurde mit einer Aufheizrate von 26 K/min auf 400 °C erwärmt. Anschließend wurde im Stickstoffstrom mit einem Volumenstrom von 6 l/h mit 36 K/min auf 500 °C aufgeheizt, wobei die Temperatur für 240 min gehalten wurde. Anschließend erfolgte eine Abkühlung über Nacht unter Stickstoffatmosphäre.
In Bezug auf die zweite Aktivkohle wurde wie zuvor beschrieben verfahren, jedoch mit der Maßgabe dass unter Stickstoffatmosphäre nicht eine Aufheizung auf 500 °C, sondern auf 920 °C erfolgte.
Die so erhaltenen funktionalisierten Aktivkohlen wiesen die folgenden Eigenschaften auf:

| **Stickstoffmodifizierte bzw. stickstofffunktionalisierte Aktivkohle** | **T = 500 °C** | **T = 920 °C** |
|---|---|---|
| N-Gehalt [Gew.-%] | 4,11 | 6,49 |
| flüchtige Bestandteile ("fB") | 10,2 | 0,86 |
| RD [g/l] | 547 | 541 |
| pH-Wert | 8,5 | 9,9 |
| Vₜₒₜ [cm³/g] | 0,7397 | 0,7166 |
| V_{mic} [cm³/g] | 0,5846 | 0,5870 |
| Mesoporenanteil [%] | 21,0 | 18,1 |
| MP-BET [m²/g] | 1476 | 1453 |

Die obige Tabelle zeigt insbesondere, dass bei der höheren Temperaturen während der Stickstoffmodifizierung bzw. Stickstofffunktionalisierung eine Verringerung des Anteils an flüchtigen Bestandteilen ("fB") vorliegt, was einem Einbau bzw. einer Integration des Stickstoffs in das Kohlenstoffgerüst bzw. die Kohlenstoffmatrix der so behandelten Aktivkohle entspricht. Demgegenüber ist für niedrigere Temperaturen festzustellen, dass der Anteil an flüchtigen Bestandteilen höher ausfällt, was als Beleg für das Vorliegen des Stickstoffs in Form von stickstoffhaltigen funktionellen Gruppen zu werten ist.
Zudem zeigt eine Analyse der entsprechenden Wasserdampfisothermen (Fig. 3a), dass bei niedrigen Temperaturen (T = 500 °C) die Funktionalisierung der behandelten Aktivkohle höher ist, was im Vergleich zu der bei höheren Temperaturen (T = 920 °C) funktionalisierten Aktivkohle zu einer stärkeren Verschiebung der entsprechenden Adsorptions- bzw. Desorptionsäste zu geringen p/p₀-Werten führt. Zudem zeigt sich, wie in Fig. 3b dargestellt, dass die oxidierte Basis bzw. die an ihrer Oberfläche oxidierten Aktivkohlen im Hinblick auf die Parameter gemäß dem Gesamtporenvolumen, Mikroporenvolumen und der MP-BET-Oberfläche eine Erhöhung vorliegt, wobei diese Werte durch die nachfolgende Stickstofffunktionalisierung nur geringfügig verringert werden und immer noch oberhalb der Ausgangswerte auf Basis der eingesetzten Ausgangsaktivkohle liegen. Diesbezüglich kann auch auf obige Ausführungen zu den Figurendarstellungen gemäß Fig. 3a und Fig. 3b verwiesen werden.
Im Ergebnis zeigen die vorliegenden Untersuchungen, dass höhere Funktionalisierungstemperaturen zu einer vermehrten Integration bzw. Inkorporation von Stickstoff in das Kohlenstoffgerüst der so ausgerüsteten Aktivkohle führen, während niedrigere Temperaturen bei der Funktionalisierung zur Ausbildung stickstoffhaltiger funktioneller Gruppen führen. Zudem kann gezeigt werden, dass die erfindungsgemäße Verfahrensführung zu keinerlei negativen Beeinträchtigung der Produktparameter führt.
e) Wie zuvor angeführt, zeigt die Figurendarstellung gemäß Fig. 4a einen dem erfindungsgemäßen Verfahren beispielhaft zugrundeliegenden Reaktionsablauf mit der Integration von Stickstoff in das Kohlenstoffgerüst. Eine Analyse auf Basis eines XPS-Spektrums zeigt, wie in Fig. 4b dargestellt, dass bei niedrigen Temperaturen im Rahmen der Stickstoffmodifizierung bzw. Stickstofffunktionalisierung vorrangig stickstoffhaltige funktionelle Gruppen auf Basis von Amiden bzw. Pyrrolen vorliegen, während mit zunehmender Temperatur eine Verschiebung zu stickstoffhaltigen funktionellen Gruppen auf Basis von quaternären Stickstoffverbindungen vorliegt. Bei einer weiterführenden Temperaturerhöhung nehmen die entsprechenden XPS-Signale der jeweiligen funktionellen Gruppen ab, was als Beleg für die Integration von Stickstoff in das Kohlenstoffgerüst bzw. in die Kohlenstoffmatrix der so behandelten Aktivkohle heranzuziehen ist. Für weitere Ausführungen kann auf die entsprechenden Ausführungen zu den Figurendarstellungen gemäß Fig. 4a und Fig. 4b verwiesen werden.
f) Im Rahmen der der Figurendarstellung gemäß Fig. 5 zugrundeliegenden Untersuchungen wurden die Durchbruchzeiten von drei verschiedenen Aktivkohlen für die Schadgase NH₃, H₂S und SO₂ im Vergleich zu einer unbehandelten Ausgangsaktivkohle ermittelt. In Bezug auf die Durchbruchzeiten für Ammoniak (NH₃) ergibt sich hierbei für die Ausgangsaktivkohle ein Wert von lediglich 14 min, während für die Aktivkohlen mit der Stickstoffmodifizierung bzw. Ausrüstung ein jeweiliger Wert von 20 min, 22 min und 33 min erhalten wird. In Bezug auf die Durchbruchzeit gegenüber Schwefelwasserstoff (H₂S) wird für das unbehandelte Ausgangsmaterial ein Wert von 80 min erreicht, während demgegenüber für die Aktivkohlen mit der Stickstoffmodifizierung Werte von 120 min, 110 min bzw. nochmals 120 min erhalten werden. Schließlich wurde in Bezug auf die Durchbruchzeit gegenüber Schwefeldioxid (SO₂) für das unbehandelte Ausgangsmaterial ein Wert von 30 min ermittelt, während für die drei erfindungsgemäßen Aktivkohlen Werte von 78 min, 47 min sowie 58 min ermittelt wurde. Diesbezüglich kann auch auf obige Ausführungen zu Fig. 5 verwiesen werden.
Im Ergebnis zeigen die durchgeführten Untersuchungen, dass die erfindungsgemäßen Aktivkohlen im Vergleich zu dem Ausgangsmaterial signifikant erhöhte Durchbruchzeiten für die in Rede stehenden Schadstoffen aufweisen, so dass die erfindungsgemäßen Aktivkohlen gegenüber dem Ausgangsmaterial hinsichtlich ihrer Leistungsfähigkeit erheblich verbessert sind.
g) Diese Befunde werden auch durch die in der Figurendarstellung gemäß Fig. 6a und Fig. 6b in Bezug genommenen Untersuchungen bestätigt: So ist sowohl in Bezug auf Schwefeldioxid (SO₂) als auch in Bezug auf Schwefelwasserstoff (H₂S) jeweils eine signifikante Verbesserung des Durchbruchverhaltens im Vergleich zu einer unbehandelten Ausgangsaktivkohle zu beobachten. In Bezug auf die der Figurendarstellung gemäß Fig. 6a zugrundeliegenden Versuchsparameter wurde ein Schüttbett der zu untersuchenden Aktivkohle mit einer Betthöhe von 1,5 cm und einer Bettfläche von 1,3 cm² hergestellt, wobei das Schüttbett bei einer relativen Feuchte von 70 % einem SO₂-Volumenstrom mit 1.000 ppm SO₂ bei 220 ml/min ausgesetzt wurde. Bei dem untersuchten Endprodukt handelt es sich um eine bei Temperaturen von 920 °C stickstoffmodifizierte bzw. stickstofffunktionalisierte Aktivkohle nach der Erfindung. In Bezug auf Fig. 6b wurde die untersuchte Aktivkohle in Form eines Schüttbetts mit einer Betthöhe von 1 cm eingesetzt. Bei einer relativen Feuchtigkeit von 50 % wurde das Aktivkohlebett einem H₂S-Volumenstrom mit 20 ppm H₂S bei 0,2 m/s ausgesetzt. Bei der eingesetzten Aktivkohle handelt es sich gleichermaßen um die bereits in Fig. 6a in Bezug genommene Aktivkohle.
Die zugrundeliegenden Untersuchungen zeigen somit, dass auf Basis der erfindungsgemäßen Stickstofffunktionalisierung eine signifikante Verbesserung hinsichtlich der Chemisorption der zuvor beschriebenen Schadgase resultiert, was sich in deutlich vergrößerten Durchbruchzeiten widerspiegelt.
h) Im Rahmen eines weiteren Untersuchungskomplexes wurden Strukturanalysen an einer im Rahmen des erfindungsgemäßen Verfahrens zum Erhalt des Intermediats an ihrer Oberfläche oxidierten Aktivkohle durchgeführt. Wie bereits zuvor angeführt, werden durch die Oxidation unter Einbezug eines Oxidationsreagenzes ("OR") verschiedene sauerstoffhaltige funktionelle Gruppen bzw. Spezies generiert, welche nachfolgend gewissermaßen als Ankergruppen bzw. Reaktionspartner für die Anbindung mit dem Stickstoffmodifizierungsreagenz ("SMR") fungieren. Gleichermaßen beeinflussen die auf diese Weise hergestellten sauerstoffhaltigen funktionellen Gruppen die Oberflächeneigenschaften der so oxidierten Aktivkohle, insbesondere im Hinblick auf den pH-Wert, die Hydrophilie und dergleichen, was insbesondere auch zu einer Optimierung der nachfolgenden Interaktion mit dem Stickstoffmodifizierungsreagenz führt. Diesbezüglich kann auch auf obige Ausführungen zu den Figurendarstellungen gemäß Fig. 7a und Fig. 7b verwiesen werden.
i) Es wurden weiteren erfindungsgemäße Aktivkohlen unter Verwendung von Harnstofflösungen in der oben beschriebenen Verfahrensweise hergestellt, wobei die Harnstoffbehandlung mit nachfolgender Wärmebehandlung bei T = 900 °C erfolgte. Die vorangehende Oberflächenoxidation erfolgte in Gegenwart von Luftsauerstoff. Die erhaltenen Aktivkohle wurden für Durchbruchmessungen an einem Schüttbett (Durchmesser: 50 mm; Höhe: 20 mm) für verschiedene Gase (H₂S und SO₂) getestet (Strom mit jeweils 1.000 ppm Schadgas; Strömungsgeschwindigkeit: 0,1 m/s; 70 % relative Feuchte; Messtemperatur: 20 °C; Durchbruch bei 10 ppm für H₂S und 5 ppm für SO₂). Als Vergleich dienten eine unbehandelte Aktivkohle (Vergleich I) und eine herkömmlich basisch imprägnierte Aktivkohle (Vergleich II). Für H₂S bzw. SO₂ konnte bei der erfindungsgemäßen Aktivkohle eine Durchbruchzeit von 122 min bzw. 133 min ermittelt werden, während für die Vergleichskohle I die Werte bei < 1 min bzw. 4 min und für die Vergleichskohle II bei 57 min bzw. 46 min lagen. Die erfindungsgemäßen Aktivkohlen weisen somit zwei- bis dreifach erhöhte Durchbruchzeiten im Vergleich zu herkömmlich imprägnierten Aktivkohlen auf; auch für Cyclohexan und Chlor werden sehr lange Durchbruchzeiten erhalten.

### 3. Vergleich einer Aktivkohle mit Stickstoffmodirizierung zu Vergleichsaktivkohlen:

Im Rahmen der zugrundeliegenden Untersuchungen wurde eine Aktivkohle, wie sie auf Basis der Ausführungen zu der unter 1.) hergestellten Aktivkohle B erhalten wurde, mit Vergleichsaktivkohlen verglichen, welche auf unterschiedliche Art und Weise mit Stickstoff ausgerüstet wurden:

So wurde eine erste Vergleichskohle I erhalten, indem ausgehend von entsprechenden Polymeren ein zweistufiger Prozess zur Herstellung der Aktivkohle auf Basis einer Carbonisierung mit nachfolgender Aktivierung durchgeführt wurde, wobei die Aktivierung in Gegenwart von Kohlendioxid, Wasserdampf und Ammoniakgas durchgeführt wurde; das stickstoffhaltige Mittel in Form von NH₃ wurde somit ihm Rahmen der Aktivkohleherstellung bei der Aktivierung zugegeben.

Des Weiteren wurde eine zweite Vergleichsaktivkohle II erhalten, indem eine fertige Aktivkohle (d. h. nach Carbonisierung und Aktivierung) als solche einer herkömmlichen Harnstoffimprägnierung unterzogen wurde, wobei diesbezüglich eine Harnstofflösung mit der Aktivkohle gemischt und die Aktivkohle auf diese Weise imprägniert bzw. getränkt wurde. Die so erhaltene Aktivkohle wurde anschließend getrocknet. Schließlich wurde eine Vergleichsaktivkohle III erhalten, indem eine Aktivkohle ohne zwischengeschaltete Oxidation direkt einer Stickstoffmodifizierung unterzogen wurde, indem eine Harnstofflösung mit der Aktivkohle in Kontakt gebracht wurde und die auf diese Weise behandelte Aktivkohle einer nachfolgenden Wärmebehandlung unterzogen wurde. Die Vergleichsaktivkohle III unterscheidet sich somit von der Aktivkohle B dadurch, dass eine Aktivkohle als solche und somit keine an ihrer Oberfläche oxidierte Aktivkohle einer nachfolgenden Behandlung zur Stickstoffmodifizierung unterzogen wurde. Die entsprechende Aktivkohle wies somit in Bezug auf das Stickstoffmodifizierungsreagenz keine Ankergruppen auf.

An den so erhaltenen Untersuchungen wurden entsprechende Analysen des Stickstoffgehalts und weiterführende Untersuchungen in Bezug auf das Durchbruchverhalten von Schwefelwasserstoff (H₂S) durchgeführt. Bezüglich der Analyse des Stickstoffgehalts und des Vorliegens von Stickstoff in der Aktivkohle kann auf obige Ausführungen verwiesen werden. Die Durchbruchexperimente wurden auf Basis einer Schüttung der jeweiligen Aktivkohle mit einer Höhe von 2 cm in einem konstanten Volumenstrom bei einer Temperatur von T = 30 °C durchgeführt, wobei der mit einer konstanten Strömungsgeschwindigkeit durch die Schüttung geführte Volumenstrom mit 20 ppm H₂S versehen wurde. Die nachfolgende Tabelle zeigt die erhaltenen Ergebnisse.

| **Aktivkohle** | **B (Vgl.)** | **I (Vgl.)** | **II (Vgl.)** | **III (Vgl.)** |
|---|---|---|---|---|
| Stickstoffgehalt N-Gehalt [Gew.-%] | 18 | 1 | 4 | 8 |
| Gehalt an Stickstoff nicht in Form von flüchtigen Bestandteilen (Gew.-%) | 95 | ≤ 0,1 | ≤ 0,1 | ≤ 0,5 |
| Durchbruchszeit gegenüber H₂S [min] | ≥ 100 | 54,5 | 62,5 | 81 |

Die Tabelle zeigt, dass in Bezug auf die Aktivkohle B sowohl der Gehalt an in das Gerüst gebundenem (d. h. nicht in Form von flüchtigen Bestandteilen vorliegendem) Stickstoff in der Aktivkohle erhöht ist, wobei im Gegensatz zu den Vergleichsaktivkohlen ein erheblich größerer Anteil des Stickstoffs in Form von nichtflüchtigen Stickstoffbestandteilen vorliegt, was als Maß für die Integration des Stickstoffs in die Aktivkohlematrix bzw. das Aktivkohlegerüst zu verstehen ist.

Gleichermaßen weist die Aktivkohle B ein deutlich verbessertes Durchbruchverhalten gegenüber Schwefelwasserstoff und somit eine signifikant verbesserte Leistungsfähigkeit im Vergleich zu den Vergleichsaktivkohlen I bis III auf.

Im Rahmen einer weiterführenden Untersuchung wurden die zugrundeliegenden Aktivkohlen, nämlich die Aktivkohle B und die Vergleichsaktivkohlen I bis III, einem Waschvorgang unter Verwendung von 1 N Salzsäure für eine Zeitdauer von einer Stunde unterzogen. Anschließend wurden die Aktivkohlen neutralgewaschen und nachfolgend getrocknet.

Mit den so behandelten Aktivkohlen wurden erneut Durchbruchmessungen in Bezug auf Schwefelwasserstoff (H₂S), wie zuvor beschrieben, durchgeführt. Während für die Aktivkohle B eine Durchbruchzeit von weiterhin mehr als 100 min ermittelt werden konnte, betrugen die entsprechenden Durchbruchzeiten für die Vergleichsaktivkohlen I bis III 15 min, 18 min bzw. 25 min. Dies ist als Beleg dafür zu werten, dass aufgrund des Waschvorgangs mit Salzsäure hinsichtlich der Vergleichsaktivkohle I bis III eine erhebliche Menge an Stickstoff entfernt wurde, was für die Aktivkohle B nicht der Fall ist. Dies bedeutet, dass in Bezug auf die Vergleichsaktivkohlen I bis III der Stickstoff zumindest im Wesentlichen nicht in immobilisierter Form vorliegt und somit leicht entfernt werden kann. Im Gegensatz hierzu ist aufgrund der Inkorporation des Stickstoffs in das Kohlenstoffgerüst gemäß Aktivkohle B der Stickstoff immobilisiert bzw. fest verankert, was zu der hohen Beständigkeit auch gegenüber Säuren führt.

Im Ergebnis zeigen die durchgeführten Untersuchungen die hohe Leistungsfähigkeit und die positiven Eigenschaften der auf Basis des Verfahrens erhältlichen stickstoffmodifizierten bzw. stickstofffunktionalisierten Aktivkohlen.

## Patentansprüche

1. Verfahren zur Herstellung einer stickstoffmodifizierten Aktivkohle mit katalytischen und/oder reaktiven Eigenschaften und mit einem Stickstoffgehalt, bezogen auf das Trockengewicht der mit Stickstoff modifizierten Aktivkohle, von mindestens 2 Gew.-%, vorzugsweise einer Aktivkohle mit Stickstoff als katalytisch aktivem Heteroatom,
wobei eine als Ausgangsmaterial eingesetzte kugelförmige Aktivkohle ("Ausgangsaktivkohle"), welche durch Carbonisierung eines Ausgangsmaterials in Form von sulfonierten organischen Polymeren und anschließende Aktivierung des carbonisierten Ausgangsmaterials erhalten wird, zunächst einer Oberflächenoxidation unter Verwendung und/oder in Gegenwart mindestens eines Oxidationsreagenzes ("OR") unterzogen wird, wobei Sauerstoff als das Oxidationsreagenz ("OR") ausgewählt wird und wobei die Oberflächenoxidation im Temperaturbereich von 100 °C bis 1.000 °C durchgeführt wird, und
wobei die auf diese Weise erhaltene, an ihrer Oberfläche oxidierte Aktivkohle nachfolgend einer Modifizierung mit Stickstoff unter Verwendung und/oder in Gegenwart mindestens eines Stickstoffmodifizierungsreagenzes ("SMR") unterzogen wird, wobei die Modifizierung mit Stickstoff ein Inkontaktbringen der nach der Oberflächenoxidation erhaltenen Aktivkohle mit dem Stickstoffmodifizierungreagenz ("SMR"), gefolgt von einer thermischen Behandlung, umfasst, wobei die Modifizierung der an ihrer Oberfläche oxidierten Aktivkohle mit Stickstoff unter Erwärmen im Temperaturbereich von 200 °C bis 1.200 °C erfolgt und
wobei das für die Modifizierung der an ihrer Oberfläche oxidierten Aktivkohle mit Stickstoff eingesetzte Stickstoffmodifizierungsreagenz ("SMR") ausgewählt wird aus der Gruppe von Harnstoff und Ammoniak sowie deren Kombinationen.

2. Verfahren nach Anspruch 1, **dadurch gekennzeichnet, dass** die Oberflächenoxidation im Temperaturbereich von 150 °C bis 900 °C, vorzugsweise 200 °C bis 750 °C, bevorzugt 225 °C bis 600 °C, besonders bevorzugt 250 °C bis 500 °C, ganz besonders bevorzugt 250 °C bis 450 °C, durchgeführt wird.

3. Verfahren nach Anspruch 1 oder 2, **dadurch gekennzeichnet,**
**dass** als das für die Modifizierung der an ihrer Oberfläche oxidierten Aktivkohle mit Stickstoff eingesetzte Stickstoffmodifizierungsreagenz ("SMR") Harnstoff verwendet wird, wobei der Harnstoff in Form einer vorzugsweise wässrigen Lösung, bevorzugt in Form einer zumindest im Wesentlichen gesättigten Harnstofflösung, eingesetzt wird; und/oder
**dass** als das für die Modifizierung der an ihrer Oberfläche oxidierten Aktivkohle mit Stickstoff eingesetzte Stickstoffmodifizierungsreagenz ("SMR") Ammoniak verwendet wird, wobei das Ammoniak in Form des Gases und/oder als Ammoniakwasser, insbesondere in Form des Gases, eingesetzt wird.

4. Verfahren nach einem der vorangehenden Ansprüche, **dadurch gekennzeichnet, dass** die Modifizierung der an ihrer Oberfläche oxidierten Aktivkohle mit Stickstoff unter Erwärmen erfolgt, insbesondere auf Temperaturen oberhalb der Zersetzungstemperatur des Stickstoffmodifizierungsreagenzes ("SMR"), wobei die Modifizierung der an ihrer Oberfläche oxidierten Aktivkohle mit Stickstoff unter solchen Temperaturen erfolgt, dass eine Reaktion des Stickstoffmodifizierungsreagenzes ("SMR") mit der an ihrer Oberfläche oxidierten Aktivkohle, insbesondere mit den sauerstoffhaltigen funktionellen Gruppen an der Oberfläche der Aktivkohle, erfolgt, wobei die Modifizierung der an ihrer Oberfläche oxidierten Aktivkohle mit Stickstoff im Temperaturbereich von 300 °C bis 1.000 °C, vorzugsweise 500 °C bis 950 °C, durchgeführt wird und wobei die Modifizierung der an ihrer Oberfläche oxidierten Aktivkohle mit Stickstoff für eine Zeitdauer im Bereich von 0,1 Stunden bis 15 Stunden, insbesondere 0,2 Stunden bis 10 Stunden, vorzugsweise 0,5 Stunden bis 8 Stunden, durchgeführt wird.

5. Verfahren nach einem der vorangehenden Ansprüche, **dadurch gekennzeichnet,**
**dass** die Modifizierung der an ihrer Oberfläche oxidierten Aktivkohle mit Stickstoff unter Erwärmen in Form einer einstufigen Wärmebehandlung erfolgt; und/oder
**dass** die Modifizierung der an ihrer Oberfläche oxidierten Aktivkohle mit Stickstoff unter Erwärmen auf einen Temperaturbereich von 300 °C bis 700 °C, insbesondere 400 °C bis 600 °C, vorzugsweise 400 °C bis 550 °C, durchgeführt wird, insbesondere für eine Zeitdauer im Bereich von 0,1 Stunden bis 15 Stunden, bevorzugt 0,2 Stunden bis 10 Stunden, vorzugsweise 0,5 Stunden bis 8 Stunden, insbesondere wobei stickstoffhaltige funktionelle Gruppen, ausgewählt aus der Gruppe von Aminen, insbesondere primären, sekundären, tertiären und quartären Aminen, Iminen und Azinen sowie deren Kombinationen und/oder ausgewählt aus der Gruppe von Amin-, Imin-, Azin-, Pyrrol-, Nitril-, Nitro-, Nitroso-, Pyridin-, Imid-, Amid-, Lactam- und Pyridongruppen sowie deren Kombinationen, ausgebildet werden; und/oder
**dass** die Modifizierung der an ihrer Oberfläche oxidierten Aktivkohle mit Stickstoff unter Erwärmen auf einen Temperaturbereich von 750 °C bis 1.200 °C, insbesondere 800 °C bis 1.100 °C, vorzugsweise 850 °C bis 1.050 °C, durchgeführt wird, insbesondere für eine Zeitdauer im Bereich von 0,1 Stunden bis 15 Stunden, bevorzugt 0,2 Stunden bis 10 Stunden, vorzugsweise 0,5 Stunden bis 8 Stunden, insbesondere wobei eine Integration und/oder ein Einbau des Stickstoffs in das Kohlenstoffgerüst und/oder die Kohlenstoffmatrix der an ihrer Oberfläche oxidierten Aktivkohle erfolgt, insbesondere wie in Anspruch 4 definiert.

6. Verfahren nach einem der vorangehenden Ansprüche, **dadurch gekennzeichnet,**
**dass** die Modifizierung der an ihrer Oberfläche oxidierten Aktivkohle mit Stickstoff unter Erwärmen in Form einer mehrstufigen, insbesondere zweistufigen Wärmebehandlung, erfolgt; und/oder
**dass** die Modifizierung der an ihrer Oberfläche oxidierten Aktivkohle mit Stickstoff in einer ersten Wärmebehandlung unter Erwärmen auf einen Temperaturbereich von 300 °C bis 700 °C, insbesondere 400 °C bis 600 °C, vorzugsweise 400 °C bis 550 °C, und einer nachfolgenden zweiten Wärmebehandlung unter Erwärmen auf einen Temperaturbereich von 750 °C bis 1.200 °C, insbesondere 800 °C bis 1.100 °C, vorzugsweise 850 °C bis 1.050 °C, durchgeführt wird, insbesondere wobei die jeweiligen Wärmebehandlungen, unabhängig voneinander, für eine Zeitdauer im Bereich von 0,1 Stunden bis 15 Stunden, insbesondere 0,2 Stunden bis 10 Stunden, vorzugsweise 0,5 Stunden bis 8 Stunden, durchgeführt werden.

7. Verfahren nach einem der vorangehenden Ansprüche, **dadurch gekennzeichnet, dass** als eingesetzte Aktivkohle ("Ausgangsaktivkohle") eine derartige Aktivkohle verwendet wird, welche durch Carbonisierung eines Ausgangsmaterials in Form von sulfonierten organischen Polymeren auf Basis von divinylbenzolvernetztem Polystyrol und anschließende Aktivierung des carbonisierten Ausgangsmaterials erhalten wird.

8. Stickstoffmodifizierte Aktivkohle, mit katalytischen und/oder reaktiven
Eigenschaften, vorzugsweise mit Stickstoff als katalytisch aktivem Heteroatom, erhältlich gemäß einem Verfahren nach einem der vorangehenden Ansprüche,
wobei die mit Stickstoff modifizierte Aktivkohle einen Stickstoffgehalt, bezogen auf das Trockengewicht der mit Stickstoff modifizierten Aktivkohle, von mindestens 2 Gew.-% aufweist.

9. Stickstoffmodifizierte Aktivkohle nach Anspruch 8, **dadurch gekennzeichnet,**
**dass** Stickstoff in Form mindestens einer stickstoffhaltigen funktionellen Gruppe, insbesondere ausgewählt aus der Gruppe von Aminen, insbesondere primären, sekundären, tertiären und quartären Aminen, Iminen und Azinen sowie deren Kombinationen und/oder insbesondere ausgewählt aus der Gruppe von Amin-, Imin-, Azin-, Pyrrol-, Nitril-, Nitro-, Nitroso-, Pyridin-, Imid-, Amid-, Lactam- und Pyridongruppen sowie deren Kombinationen, vorliegt, insbesondere an die stickstoffmodifizierte Aktivkohle gebunden ist, vorzugsweise chemisch und/oder kovalent gebunden ist; und/oder
**dass** Stickstoff in das Kohlenstoffgerüst und/oder die Kohlenstoffmatrix der stickstoffmodifizierten Aktivkohle, vorzugsweise unter Ausbildung kovalenter chemischer Bindungen, insbesondere zwischen Stickstoff einerseits und Kohlenstoff andererseits, integriert und/oder eingebaut ist; und/oder
**dass** die stickstoffmodifizierte Aktivkohle selbsttragend ist und/oder in Form einer insbesondere losen Schüttung vorliegt.

10. Stickstoffmodifizierte Aktivkohle nach Anspruch 8 oder 9, **dadurch gekennzeichnet, dass** die stickstoffmodifizierte Aktivkohle einen Gehalt an flüchtigen Bestandteilen ("fB"), bezogen auf das Trockengewicht der mit Stickstoff ausgerüsteten Aktivkohle, von mindestens 0,1 Gew.-%, insbesondere mindestens 0,2 Gew.-%, vorzugsweise mindestens 0,3 Gew.-%, bevorzugt mindestens 0,5 Gew.-%, besonders bevorzugt mindestens 1 Gew.-%, ganz besonders bevorzugt mindestens 2 Gew.-%, und/oder im Bereich von 0,1 Gew.-% bis 20 Gew.-%, insbesondere 0,2 Gew.-% bis 15 Gew.-%, vorzugsweise 0,3 Gew.-% bis 12 Gew.-%, bevorzugt 0,5 Gew.-% bis 10 Gew.-%, besonders bevorzugt 1 Gew.-% bis 10 Gew.-%, aufweist.

11. Stickstoffmodifizierte Aktivkohle nach einem der Ansprüche 8 bis 10, **dadurch gekennzeichnet, dass** mindestens 50 %, insbesondere mindestens 60 %, vorzugsweise mindestens 70 %, bevorzugt mindestens 80 %, des Stickstoffs, bezogen auf den Gesamtstickstoffgehalt, in der stickstoffmodifizierten Aktivkohle chemisch gebunden und/oder integriert vorliegen und/oder nicht in Form von flüchtigen Bestandteilen ("fB") in der stickstoffmodifizierten Aktivkohle vorliegen und/oder insbesondere wobei 50 % bis 99,9 %, insbesondere 60 % bis 99 %, vorzugsweise 70 % bis 95 %, bevorzugt 80 % bis 90 %, des Stickstoffs, bezogen auf den Gesamtstickstoffgehalt, in der stickstoffmodifizierten Aktivkohle chemisch gebunden und/oder integriert vorliegen und/oder nicht in Form von flüchtigen Bestandteilen ("fB") in der stickstoffmodifizierten Aktivkohle vorliegen.

12. Verwendung einer stickstoffmodifizierten Aktivkohle nach einem der Ansprüche 8 bis 11
zur Herstellung von Filtern und Filtermaterialien aller Art, insbesondere zur Entfernung von Schad-, Geruchs- und Giftstoffen aller Art, insbesondere aus Luft- und/oder Gasströmen, wie ABC-Schutzmaskenfiltern, Geruchsfiltern, Flächenfiltern, Luftfiltern, insbesondere Filtern für die Raumluftreinigung, adsorptionsfähigen Trägerstrukturen und Filtern für den medizinischen Bereich; oder
zur Herstellung von Schutzbekleidung, insbesondere für den zivilen oder militärischen Bereich, wie Schutzanzügen, Schutzhandschuhen, Schutzschuhwerk, Schutzsocken, Kopfschutzbekleidung, und von Schutzabdeckungen aller Art; oder
als Sorptionsspeicher für Gase oder Flüssigkeiten; oder
als Katalysator oder Katalysatorträger; oder
für die chemische Katalyse; oder
als Gassensor oder in Brennstoffzellen; oder
für sorptive, insbesondere adsorptive Anwendungen, insbesondere als vorzugsweise reaktives und/oder katalytisches Adsorbens; oder
für die Gasreinigung und/oder die Gasaufbereitung; oder
für die Entfernung von Schadstoffen, insbesondere gasförmigen Schadstoffen, oder von umweltschädlichen, gesundheitsschädlichen oder toxischen Substanzen oder Gasen; oder
zur Aufbereitung und/oder Bereitstellung von Reinraumatmosphären, insbesondere für die Elektroindustrie, insbesondere für die Halbleiter- oder Chipherstellung.

13. Schutzbekleidung, wie Schutzanzüge, Schutzhandschuhe, Schutzschuhwerk, Schutzsocken und Kopfschutzbekleidung, sowie Schutzabdeckungen hergestellt unter Verwendung einer stickstoffmodifizierten Aktivkohle einem der Ansprüche 8 bis 11 und/oder aufweisend eine stickstoffmodifizierte Aktivkohle nach einem der Ansprüche 8 bis 11.

14. Filter und Filtermaterialien, insbesondere zur Entfernung von Schad-, Geruchs- und Giftstoffen aller Art, insbesondere aus Luft- und/oder Gasströmen, wie ABC-Schutzmaskenfilter, Geruchsfilter, Flächenfilter, Luftfilter, insbesondere Filter für die Raumluftreinigung, adsorptionsfähige Trägerstrukturen und Filter für den medizinischen Bereich, hergestellt unter Verwendung einer stickstoffmodifizierten Aktivkohle nach einem der Ansprüche 8 bis 11 und/oder aufweisend eine stickstoffmodifizierte Aktivkohle nach einem der Ansprüche 8 bis 11.

## Claims

1. Method for preparing a nitrogen-modified active carbon having catalytic and/or reactive properties and having a nitrogen content based on the dry weight of the modified nitrogen-activated carbon, of at least 2 wt.-%, preferably an activated carbon with nitrogen as the catalytically active heteroatom,
whereby a spherical activated carbon ("output activated carbon") is used as the starting material obtained by carbonisation of a starting material in the form of sulfonated organic polymers and subsequent activation of the carbonised starting material, whereby initially surface oxidation is performed using, and/or in the presence of at least one oxidising reagent ("OR"), whereby oxygen is selected as the oxidising reagent ("OR"), and whereby the surface oxidation is carried out in the temperature range of 100°C to 1000°C, and
whereby the activated carbon obtained in this manner undergoes oxidation at its surface and subsequently undergoes modification with nitrogen using, and/or in the presence of, at least one nitrogen modification reagent ("SMR"), whereby the modification with nitrogen brings into contact the activated carbon obtained following the surface oxidation with the nitrogen modification reagent ("SMR"), followed by a thermal treatment, whereby the modification of the activated carbon oxidised on its surface with nitrogen is carried out while heating in the temperature range of 200°C to 1200°C, and
whereby the nitrogen modification reagent ("SMR") used for the modification of the activated carbon oxidised on its surface with nitrogen is selected from the group consisting of urea and ammonia, and combinations thereof.

2. Method according to claim 1, **characterised in that** the surface oxidation is carried out in the temperature range of 150°C to 900°C, preferably 200°C to 750°C, more preferably 225°C to 600°C, particularly preferably 250°C to 500°C, most preferably 250°C to 450°C.

3. Method according to claim 1 or 2, **characterised in that**
- urea is used as the nitrogen modification reagent ("SMR") for the modification of the activated carbon oxidised on its surface with nitrogen, whereby urea is used in the form of a preferably aqueous solution, preferably in the form of an at least substantially saturated solution of urea; and/or
- ammonia is used as the nitrogen modification reagent ("SMR") for the modification of the activated carbon oxidised on its surface with nitrogen, whereby the ammonia is used in the form of gas and/or as ammonia water, in particular in the form of gas.

4. Method according to any one of the preceding claims, **characterised in that** the modification of the activated carbon oxidised on its surface with nitrogen is carried out under heating, particularly at temperatures above the decomposition temperature of the nitrogen modification reagent ("SMR"), whereby the modification of the activated carbon oxidised on its surface is carried out with nitrogen under such temperatures that a reaction of the nitrogen modification reagent ("SMR") with the activated carbon oxidised on its surface follows, particularly with the oxygen-containing functional groups on the surface of the activated carbon, whereby the modification of the activated carbon oxidised on its surface with nitrogen is carried out in the temperature range of 300°C to 1000°C, preferably 500°C to 950°C, and whereby the modification of the activated carbon oxidised on its surface with nitrogen is carried out for a period of time ranging from 0.1 hours to 15 hours, in particular 0.2 hours to 10 hours, preferably 0.5 hours to 8 hours.

5. Method according to any one of the preceding claims, **characterised in that**
- the modification of the activated carbon oxidised on its surface with nitrogen is carried out under heating in the form of a single-stage heat treatment; and/or
- the modification of the activated carbon oxidised on its surface with nitrogen is carried out under heating in a temperature range of 300°C to 700°C, in particular from 400°C to 600°C, preferably 400°C to 550°C, in particular for a time period in the range of 0.1 hours to 15 hours, preferably 0.2 hours to 10 hours, more preferably 0.5 hour to 8 hours, in particular where nitrogen-containing functional groups selected from the group of amines, particularly primary, secondary, tertiary and quaternary amines, imines and azines as well as combinations thereof, and/or selected from amine, imine, azine, pyrrole, nitrile, nitro, nitroso, pyridine, imide, amide, lactam and pyridon groups and combinations thereof; and/or
- the modification of the activated carbon oxidised on its surface with nitrogen is carried out under heating in a temperature range of 750°C to 1200°C, in particular from 800°C to 1100°C, preferably 850°C to 1050°C, in particular for a time period in the range of 0.1 hours to 15 hours, preferably 0.2 hours to 10 hours, preferably, in particular where an integration and/or incorporation of nitrogen in the carbon network and/or the carbon matrix of the activated carbon oxidised on its surface is carried out from 0.5 hour to 8 hours, in particular as defined in claim 4.

6. Method according to any one of the preceding claims, **characterised in that**
- the modification of the activated carbon oxidised on its surface with nitrogen is carried out under heating in the form of a multistage, especially two-stage, heat treatment; and/or
- the modification of the activated carbon oxidised on its surface with nitrogen is carried out in a first heat treatment with heating in a temperature range of 300°C to 700°C, in particular from 400°C to 600°C, preferably 400°C to 550°C, and in a subsequent second heat treatment with heating in a temperature range of 750°C to 1200°C, in particular from 800°C to 1100°C, preferably 850°C to 1050°C, in particular where the respective heat treatments are carried out independently of one another for a time period ranging from 0.1 hours to 15 hours, in particular 0.2 hours to 10 hours, preferably 0.5 hours to 8 hours.

7. Method according to one of the preceding claims, **characterised in that** a kind of activated carbon is used as the activated carbon ("output activated carbon"), which is obtained by carbonising a starting material in the form of sulfonated organic polymers based on divinylbenzene cross-linked polystyrene and subsequent activation of the carbonised starting material.

8. Nitrogen-modified activated carbon, with catalytic and/or reactive properties, preferably, with nitrogen as the catalytically active heteroatom, obtainable by a method according to any one of the preceding claims,
whereby the nitrogen-modified activated carbon has a nitrogen content based on the dry weight of the nitrogen-modified activated carbon of at least 2 wt.-%.

9. Nitrogen-modified activated carbon according to claim 8, **characterised in that**
- nitrogen in the form of at least one nitrogenous functional group, in particular selected from the group of amines, in particular primary, secondary, tertiary and quaternary amines, imines and azines and combinations thereof, and/or in particular selected from the amine, imine, azine, pyrrole, nitrile, nitro, nitroso, pyridine, imide, amide, lactam and pyridon groups as well as their combinations, is present, in particular is bonded to the nitrogen-modified active carbon, preferably bonded chemically and/or covalently; and/or
- nitrogen is integrated and/or incorporated in the carbon network and/or the carbon matrix of the nitrogen-modified active carbon, preferably under formation of covalent chemical bonds, particularly between nitrogen on the one hand, and carbon on the other hand,; and/or
- the nitrogen-modified activated carbon is self-supporting and/or in the form in particular of bulk.

10. Nitrogen-modified active carbon according to claim 8 or 9, **characterised in that** the nitrogen-modified active carbon has a content of volatile components ("fB"), based on the dry weight of the activated carbon treated with nitrogen of at least 0.1 wt.-%, in particular at least 0.2 wt.-%, preferably at least 0.3 wt.-%, more preferably at least 0.5 wt -%, even more preferably at least 1 wt.-%, most preferably at least 2 wt.-%, and/or in the range of 0.1 wt.-% to 20 wt.-%, in particular 0.2 wt.-% to 15 wt.-%, preferably 0.3 wt.-% to 12 wt.-%, more preferably 0.5 wt.-% to 10 wt.-%, even more preferably 1 wt.-% to 10 wt.-%.

11. Nitrogen-modified active carbon according to any one of the claims 8 to 10, **characterised in that** at least 50%, especially at least 60%, preferably at least 70%, more preferably at least 80% of nitrogen based on the total nitrogen content in the nitrogen-modified active carbon is chemically bound and/or integrated, and/or is in the form of volatile components ("fB") in the nitrogen-modified active carbon and/or especially where 50% to 99.9%, in particular 60% to 99%, preferably 70% to 95%, more preferably 80% to 90% of the nitrogen based on the total nitrogen content, is chemically bonded and/or integrated in the nitrogen-modified active carbon and/or not in the form of volatile components ("fB") present in the nitrogen-modified active carbon.

12. Use of a nitrogen-modified activated carbon according to one of the claims 8 to 11
- for the production of filters and filter materials of all kinds, in particular for the removal of pollutants, odours and toxins of all kinds, in particular from air and/or gas flows, such as ABC protective mask filters, odour filters, surface filters, air filters, in particular filters for indoor air cleaning, adsorption-capable supporting structures and filters for the medical sector; or
- for the production of protective clothing, in particular for the civil or military sector, such as protective suits, protective gloves, protective footwear, protective socks, head protective clothing, and protective covers of all kinds;
- or for the sorption storage of gases or liquids;
- as a catalyst or catalyst support;
- or for chemical catalysis;
- or as a gas sensor or in fuel cells;
- or for sorptive, in particular adsorptive applications, in particular as a preferably reactive and/or catalytic adsorbent; or
- for gas purification and/or gas processing;
- for the removal of pollutants, especially gaseous pollutants, or environmental pollutants, harmful or toxic substances or gases;
- or for the treatment and/or provision of clean room atmospheres, in particular for the electrical industry, in particular for semiconductor or chip production.

13. Protective clothing, such as protective suits, protective gloves, protective footwear, as well as protective socks and head protective clothing, and protective covers manufactured using nitrogen-modified activated carbon according to any of the claims 8 to 11 and/or comprising a nitrogen-modified activated carbon according to one of the claims 8 to 11.

14. Filters and filter materials, in particular for the removal of pollutants, odours and toxins of all kinds, in particular from air and/or gas flows, such as ABC protective mask filters, odour filters, surface filters, air filters, in particular filters for indoor air cleaning, adsorption-capable supporting structures and filters for the medical sector, produced using a nitrogen-modified active carbon according to any one of the claims 8 to 11, and/or comprising a nitrogen-modified active carbon according to any one of the claims 8 to 11.

## Revendications

1. Procédé de fabrication d'un charbon actif modifié par de l'azote, ayant des propriétés catalytiques et/ou réactives, et ayant une teneur en azote, rapportée au poids sec du charbon actif modifié par de l'azote, d'au moins 2 % en poids, de préférence d'un charbon actif contenant de l'azote en tant qu'hétéroatome catalytiquement actif,
dans lequel un charbon actif sphérique utilisé en tant que matière de départ ("charbon actif de départ"), qui est obtenu par carbonisation d'une matière de départ sous forme de polymères organiques sulfonés, puis activation de la matière de départ carbonisée, est soumis d'abord à une oxydation superficielle par utilisation et/ou en présence d'au moins un réactif d'oxydation ("OR"), l'oxygène étant choisi en tant que réactif d'oxydation ("OR"), et l'oxydation superficielle étant mise en oeuvre dans la plage de températures de 100°C à 1 000°C,
dans lequel le charbon actif obtenu de cette manière, oxydé sur sa surface, est ensuite soumis à une modification avec de l'azote par utilisation et/ou en présence d'au moins un réactif de modification par de l'azote ("SMR"), la modification par de l'azote comprenant une mise en contact du charbon actif obtenu après l'oxydation superficielle avec le réactif de modification par de l'azote ("SMR"), suivi d'un traitement thermique, la modification du charbon actif oxydé sur sa surface par de l'azote étant suivie d'un échauffement dans la plage de températures de 200°C à 1 200°C, et
dans lequel le réactif de modification par de l'azote ("SMR") utilisé pour la modification, avec de l'azote, du charbon actif oxydé sur sa surface, est choisi dans le groupe consistant en l'urée et l'ammoniac, ainsi que leurs combinaisons.

2. Procédé selon la revendication 1, **caractérisé en ce que** l'oxydation superficielle est mise en oeuvre dans la plage de températures de 150°C à 900°C, de préférence de 200°C à 750°C, préférentiellement de 225°C à 600°C, d'une manière particulièrement préférée de 250°C à 500°C, d'une manière tout particulièrement préférée de 250°C à 450°C.

3. Procédé selon la revendication 1 ou 2, **caractérisé en ce que** l'on utilise de l'urée en tant que réactif de modification par de l'azote ("SMR") utilisé pour la modification, par de l'azote, du charbon actif oxydé sur sa surface, l'urée étant utilisée sous forme d'une solution de préférence aqueuse, préférentiellement sous forme d'une solution d'urée au moins pour l'essentiel saturée, et/ou en ce qu'on utilise de l'ammoniac en tant que réactif de modification par de l'azote ("SMR") utilisé pour la modification, par de l'azote, du charbon actif oxydé sur sa surface, l'ammoniac étant utilisé sous forme du gaz et/ou d'ammoniaque, en particulier sous forme du gaz.

4. Procédé selon l'une des revendications précédentes, **caractérisé en ce que** la modification, par de l'azote, du charbon actif oxydé sur sa surface, s'effectue par échauffement, en particulier à des températures supérieures à la température de décomposition du réactif de modification par de l'azote ("SMR"), la modification, par de l'azote, du charbon actif oxydé sur sa surface ayant lieu à des températures telles qu'une réaction ait lieu du réactif de modification par de l'azote ("SMR") avec le charbon actif oxydé sur sa surface, en particulier avec des groupes fonctionnels oxygénés sur la surface du charbon actif, la modification, par de l'azote, du charbon actif oxydé sur sa surface étant mise en oeuvre dans la plage de températures de 300°C à 1000°C, de préférence de 500°C à 950°C, et la modification, par de l'azote, du charbon actif oxydé sur sa surface, étant mise en oeuvre sur une durée comprise dans la plage de 0,1 heure à 15 heures, en particulier de 0,2 heure à 10 heures, de préférence de 0,5 heure à 8 heures.

5. Procédé selon l'une des revendications précédentes, **caractérisé**
**en ce que** la modification, par de l'azote, du charbon actif oxydé sur sa surface, est réalisée par échauffement sous forme d'un traitement thermique en une étape, et/ou
**en ce que** la modification, par de l'azote, du charbon actif oxydé sur sa surface, est mise en oeuvre par échauffement à une température comprise dans la plage de températures de 300°C à 700°C, en particulier de 400°C à 600°C, de préférence de 400°C à 550°C, en particulier pendant une durée comprise dans la plage de 0,1 heure à 15 heures, de préférence de 0,2 heure à 10 heures, préférentiellement de 0,5 heure à 8 heures, en particulier des groupes fonctionnels azotés étant formés, choisis dans le groupe des amines, en particulier des amines primaires, secondaires, tertiaires et quaternaires, des imines et des azines, ainsi que de leurs combinaisons, et/ou choisis dans le groupe des groupes amine, imine, azine, pyrrole, nitrile, nitro, nitroso, pyridine, imide, amide, lactame et pyridone, ainsi que leurs combinaisons, et/ou
**en ce que** la modification, par de l'azote, du charbon actif oxydé sur sa surface, est mise en oeuvre par échauffement à une température comprise dans la plage de températures de 750°C à 1 200°C, en particulier de 800°C à 1 100°C, de préférence de 850°C à 1 050°C, en particulier pendant une durée comprise dans la plage de 0,1 heure à 15 heures, de préférence de 0,2 heure à 10 heures, préférentiellement de 0,5 heure à 8 heures, en particulier une intégration et/ou une incorporation de l'azote ayant lieu dans le squelette carboné et/ou dans la matrice carbonée du charbon actif oxydé sur sa surface, en particulier comme défini dans la revendication 4.

6. Procédé selon l'une des revendications précédentes, **caractérisé**
**en ce que** la modification, par de l'azote, du charbon actif oxydé sur sa surface, s'effectue par échauffement sous forme d'un traitement thermique en plusieurs étapes, en particulier en deux étapes, et/ou
**en ce que** la modification, par de l'azote, du charbon actif oxydé sur sa surface, est mise en oeuvre dans un premier traitement thermique par échauffement à une température comprise dans la plage de températures de 300°C à 700°C, en particulier de 400°C à 600°C, de préférence de 400°C à 550°C, et dans un deuxième traitement thermique, ultérieur, par échauffement à une température comprise dans la plage de 750°C à 1 200°C, en particulier de 800°C à 1 100°C, de préférence de 850°C à 1 050°C, en particulier chaque traitement thermique étant mis en oeuvre indépendamment de l'autre pendant une durée comprise dans la plage de 0,1 heure à 15 heures, en particulier de 0,2 heure à 10 heures, de préférence de 0,5 heure à 8 heures.

7. Procédé selon l'une des revendications précédentes, **caractérisé en ce qu'**on utilise en tant que charbon actif utilisé ("charbon actif de départ") un charbon actif qui est obtenu par carbonisation d'une matière de départ sous forme de polymères organiques sulfonés à base de polystyrène réticulé par du divinylbenzène, suivie d'une activation de la matière de départ carbonisée.

8. Charbon actif modifié par de l'azote, ayant des propriétés catalytiques et/ou réactives, de préférence avec de l'azote en tant qu'hétéroatome catalytiquement actif, pouvant être obtenu par un procédé selon l'une des revendications précédentes,
le charbon actif modifié par de l'azote présentant une teneur en azote, rapportée au poids sec du charbon actif modifié par de l'azote, d'au moins 2 % en poids.

9. Charbon actif modifié par de l'azote selon la revendication 8, **caractérisé**
**en ce que** l'azote se présente sous forme d'au moins un groupe fonctionnel azoté, choisi en particulier dans le groupe des amines, en particulier des amines primaires, secondaires, tertiaires et quaternaires, des imines et des azines, ainsi que de leurs combinaisons, et/ou en particulier choisi dans le groupe consistant en les groupes amine, imine, azine, pyrrole, nitrile, nitro, nitroso, pyridine, imide, amide, lactame et pyridone, en particulier est lié au charbon actif modifié par de l'azote, de préférence par liaison chimique et/ou covalente, et/ou
**en ce que** de l'azote est intégré et/ou incorporé dans le squelette carboné et/ou dans la matrice carbonée du charbon actif modifié par de l'azote, de préférence avec formation de liaisons chimiques covalentes, en particulier entre l'azote d'une part et le carbone d'autre part, et/ou
**en ce que** le charbon actif modifié par de l'azote est autoportant et/ou se présente sous forme d'une masse en vrac, en particulier meuble.

10. Charbon actif modifié par de l'azote selon la revendication 8 ou 9, **caractérisé en ce que** le charbon actif modifié par de l'azote présente une teneur en constituants volatils ("fB"), par rapport au poids sec du charbon actif muni d'azote, d'au moins 0,1 % en poids, en particulier d'au moins 0,2 % en poids, de préférence d'au moins 0,3 % en poids, préférentiellement d'au moins 0,5 % en poids, d'une manière particulièrement préférée d'au moins 1 % en poids, d'une manière tout particulièrement préférée d'au moins 2 % en poids, et/ou comprise dans la plage de 0,1 % en poids à 20 % en poids, en particulier de 0,2 % en poids à 15 % en poids, de préférence de 0,3 % en poids à 12 % en poids, préférentiellement de 0,5 % en poids à 10 % en poids, d'une manière particulièrement préférée de 1 % en poids à 10 % en poids.

11. Charbon actif modifié par de l'azote selon l'une des revendications 8 à 10, **caractérisé en ce qu'**au moins 50 %, en particulier au moins 60 %, de préférence au moins 70 %, préférentiellement au moins 80 % de l'azote, par rapport à la quantité totale d'azote présente, dans le charbon actif modifié par de l'azote, sont chimiquement liés et/ou intégrés, et/ou ne se présentent pas sous forme de constituants volatils ("fB") dans le charbon actif modifié par de l'azote, et/ou en particulier dans lequel 50 % à 99,9 %, en particulier 60 % à 99 %, de préférence 70 % à 95 %, de préférence 80 % à 90 % de l'azote, par rapport à la quantité totale d'azote présente, dans le charbon actif modifié par de l'azote se présentent chimiquement liés et/ou intégrés, et/ou ne se présentent pas sous la forme de constituants volatils ("fB") dans le charbon actif modifié par de l'azote.

12. Utilisation d'un charbon actif modifié par de l'azote selon l'une des revendications 8 à 11,
pour la fabrication de filtres et de matériaux filtrants de tous types, en particulier pour éliminer des substance nocives, des substances odorantes et des substances toxiques de tous types, en particulier à partir de courants d'air et/ou de gaz, tels que les filtres de masques de protection ABC, les filtres d'odeurs, les filtres de surface, les filtres à air, en particulier les filtres pour la purification de l'air ambiant, les structures porteuses adsorbantes, et les filtres pour le domaine médical, ou
pour la fabrication de vêtements de protection, en particulier pour le domaine civil ou militaire, comme les combinaisons de protection, les gants de protection, les chaussures de protection, les chaussettes de protection, les vêtements pour la protection de la tête, et les couvercles de protection de tous types, ou
en tant que stockage par adsorption pour gaz ou liquides ; ou en tant que catalyseur ou support de catalyseur ; ou
pour la catalyse chimique ; ou
en tant que capteur de gaz ou dans les piles à combustible ; ou
pour des applications par sorption, en particulier par adsorption, en particulier en tant d'adsorbant de préférence réactif et/ou catalytique ; ou
pour la purification des gaz et/ou le traitement des gaz ; ou pour l'élimination des substances nocives, en particulier des substances nocives gazeuses, ou de substances ou de gaz polluants, nocifs pour la santé ou toxiques ; ou
pour la préparation et/ou la mise à disposition d'atmosphères pour salles blanches, en particulier pour l'industrie électrique, en particulier pour la fabrication des semiconducteurs ou des puces.

13. Vêtements de protection, tels que des combinaisons de protection, des gants de protection, des chaussures de protection, des chaussettes de protection et des vêtements pour la protection de la tête, ainsi que des couvercles de protection, fabriqués par utilisation d'un charbon actif modifié par de l'azote selon l'une des revendications 8 à 11 et/ou comprenant un charbon actif modifié par de l'azote selon l'une des revendications 8 à 11.

14. Filtres et matériaux filtrants, en particulier pour éliminer des substances nocives, odorantes et toxiques de tous types, en particulier à partir de courants d'air et/ou de gaz, tels que les filtres pour masques de protection ABC, les filtres d'odeurs, les filtres de surface, les filtres à air, en particulier les filtres pour la purification de l'air ambiant, les structures portantes adsorbantes et les filtres pour le domaine médical, fabriqués par utilisation d'un charbon actif modifié par de l'azote selon l'une des revendications 8 à 11 et/ou comprenant un charbon actif modifié par de l'azote selon l'une des revendications 8 à 11.
